# EUROPÄISCHE PATENTSCHRIFT

(11) **EP 2 981 354 B1**
(45) Veröffentlichungstag und Bekanntmachung des Hinweises auf die Patenterteilung: **08.03.2017**
(21) Anmeldenummer: 14712615.5
(22) Anmeldetag: 11.03.2014
(51) Int. Cl.: B01J 20/22, B01J 20/20, B01J 20/32, B01J 31/16, B01J 20/28, B01J 20/30, C01B 32/30, B01J 37/02, B01J 37/04, B01J 37/08, A41D 31/00, B01J 21/18, B01J 23/72, B01J 23/74, B01D 53/02, B01D 53/86, B01J 35/10

(54) **AKTIVKOHLE MIT SPEZIELLER AUSRÜSTUNG SOWIE DEREN HERSTELLUNG UND VERWENDUNG**
ACTIVATED CARBON WITH A SPECIAL FINISHING, PRODUCTION AND USE THEREOF
CHARBON ACTIF DOTÉ D'UNE FINITION SPÉCIALE, SA FABRICATION ET SON UTILISATION

(30) Priorität: 06.04.2013 DE 102013005717; 08.04.2013 DE 102013005851; 28.05.2013 DE 102013105471
(43) Veröffentlichungstag der Anmeldung: 10.02.2016
(73) Patentinhaber: Blücher GmbH, 40699 Erkrath (DE)
(72) Erfinder: BÖHRINGER, Bertram, 42115 Wuppertal (DE); ECKLE, Ilsebill, 45886 Gelsenkirchen (DE); KASKEL, Stefan, 01059 Dresden (DE); LOHE, Martin R., 40699 Erkrath (DE)
(74) Vertreter: Von Rohr Patentanwälte Partnerschaft mbB
(86) Internationale Anmeldenummer: PCT/EP2014/054726
(87) Internationale Veröffentlichungsnummer: WO 2014/161705

(56) Entgegenhaltungen:
- EP-A1- 2 341 031
- WO-A1-2012/131483
- P. B. SOMAYAJULU RALLAPALLI ET AL: "Activated carbon @ MIL-101(Cr): a potential metal-organic framework composite material for hydrogen storage", INTERNATIONAL JOURNAL OF ENERGY RESEARCH, 4. Oktober 2011 (2011-10-04), Seiten 746-753, XP055033810, ISSN: 0363-907X, DOI: 10.1002/er.1933
- DAN QIAN ET AL: "Synthesis of Hierarchical Porous Carbon Monoliths with Incorporated Metal-Organic Frameworks for Enhancing Volumetric Based CO 2 Capture Capability", ACS APPLIED MATERIALS & INTERFACES, Bd. 4, Nr. 11, 16. Oktober 2012 (2012-10-16), Seiten 6125-6132, XP055134706, ISSN: 1944-8244, DOI: 10.1021/am301772k
- CARLOS ALBERTO FERNANDES DE OLIVEIRA ET AL: "MOF@activated carbon: a new material for adsorption of aldicarb in biological systems", CHEMICAL COMMUNICATIONS, Bd. 49, Nr. 58, 18. März 2013 (2013-03-18) , Seite 6486, XP055134707, ISSN: 1359-7345, DOI: 10.1039/c3cc40449h & Carlos Alberto Fernandes De Oliveira ET AL: "Electronic Supplementary Information Metal-Organic Framework inside Activated Carbon: Adsorption of Aldicarb in Biological Systems", , 18. März 2013 (2013-03-18), Seiten 1-7, XP055134708, Gefunden im Internet: URL:http://www.rsc.org/suppdata/cc/c3/c3cc 40449h/c3cc40449h.pdf [gefunden am 2014-08-13]

## Beschreibung

Die vorliegende Erfindung betrifft das technische Gebiet adsorptiver Materialien auf Basis von Aktivkohle, welche neben adsorptiven Eigenschaften auch eine reaktive bzw. katalytische Aktivität aufweisen

Insbesondere betrifft die vorliegende Erfindung ein Verfahren zur Herstellung einer mit mindestens einer metallorganischen Gerüstsubstanz (MOF-Material) ausgestatteten bzw. imprägnierten Aktivkohle mit reaktiver bzw. katalytischer Aktivität bzw. Ausrüstung.

Weiterhin betrifft die vorliegende Erfindung eine durch das erfindungsgemäße Verfahren erhältliche Aktivkohle mit reaktiver bzw. katalytischer Aktivität bzw. Ausrüstung.

Die vorliegende Erfindung betrifft zudem Verwendungen der Aktivkohle mit katalytischer bzw. reaktiver Aktivität bzw. Ausrüstung zur Herstellung von Filtern und Filtermaterialien aller Art sowie zur Herstellung von Schutzmaterialien aller Art. Die vorliegende Erfindung betrifft zudem Verwendungen der Aktivkohle nach der Erfindung als Sorptionsspeicher, als Katalysator bzw. Katalysatorträger sowie für die chemische Katalyse und als Gassensor oder in Brennstoffzellen. Zudem betrifft die vorliegende Erfindung die Verwendungen der erfindungsgemäßen Aktivkohle für sorptive Anwendungen bzw. für die Gasreinigung sowie für die Gasaufbereitung bzw. für die Entfernung von Schadstoffen. Schließlich betrifft die vorliegende Erfindung die Verwendung der Aktivkohle nach der Erfindung zur Aufbereitung bzw. Bereitstellung von Reinraumatmosphären.

Die vorliegende Erfindung betrifft darüber hinaus auch Schutzmaterialien als solche, welche unter Verwendung der Aktivkohle nach der Erfindung hergestellt sind bzw. diese aufweisen. Zudem betrifft die vorliegende Erfindung auch Filter bzw. Filtermaterialien als solche, welche unter Verwendung der Aktivkohle nach der Erfindung hergestellt sind bzw. welche die erfindungsgemäße Aktivkohle aufweisen.

Chemische und biologische Schad- bzw. Giftstoffe und somit toxische Substanzen auf Basis anorganischer sowie organischer Verbindungen bzw. Stoffe können in vielfältiger Weise in der Umwelt bzw. in der Umgebung des Menschen auftreten und stellen ein großes Gefährdungspotential für die menschliche Gesundheit sowie für das menschliche Leben dar. Dabei können die zugrundeliegenden chemischen und biologischen Schad- bzw. Giftstoffe unterschiedlichsten Ursprungs sein:
Beispielsweise fallen gesundheitsschädliche und sogar toxische Verbindungen oftmals als unerwünschte Neben- bzw. Abfallprodukte in industriellen Verfahren an, wobei von derartigen Verbindungen bei nicht sachgemäßer Handhabung und insbesondere bei unkontrollierter Freisetzung in die Umwelt eine hohe Gefahr bzw. ein hohes toxisches Potential ausgeht.

Darüber hinaus werden chemische bzw. biologische Schad- bzw. Giftstoffe auch als chemische bzw. biologische Kampfstoffe eingesetzt, welche synonym auch als sogenannte *Chemical Warfare Agents* (CWAs) bezeichnet werden. Derartige Kampfstoffe sind bis heute Bestandteil des Waffenarsenals zahlreicher Staaten. Zudem besteht aufgrund der prinzipiell leichten Herstellbarkeit und einfachen Transporteigenschaften die grundsätzliche Gefahr, dass auch terroristische Gruppen in den Besitz derartiger Kampfstoffe gelangen, so dass auch von daher eine permanente Gefahr des Missbrauchs vorliegt. Als bekannteste Vertreter der Gruppe der Kampfstoffe sind insbesondere Senfgas (synonym auch als "HD" bezeichnet), Soman, Sarin, Phosgen sowie Tabun zu nennen.

Im Stand der Technik sind zahlreiche Methoden bekannt, auf deren Basis ein Schutz gegenüber den zuvor angeführten Schad- bzw. Giftstoffen, insbesondere gegenüber toxischen Substanzen industriellen Ursprungs sowie Kampfstoffen, gewährleistet werden soll. Hierzu zählt beispielsweise der Einsatz von flüssigkeits- bzw. gasundurchlässigen Barrierematerialien, welche in entsprechender Weise, beispielsweise zu Schutzanzügen, verarbeitet werden können. Die hierzu eingesetzten Materialien weisen jedoch mitunter einen nur unzureichenden Tragekomfort auf, da sowohl der Luft- als auch der Wasserdampfaustausch unterbunden sind.

Darüber hinaus kommen zur Gewährleistung einer Schutzfunktion gegenüber chemischen bzw. biologischen Schad- bzw. Giftstoffen Adsorptionsmaterialien insbesondere in Form von Aktivkohle in Betracht. In diesem Zusammenhang kann das Adsorptionsmaterial, insbesondere die Aktivkohle, in Form von Filtern, beispielsweise auf Basis von Filtern für ABC-Schutzmasken oder dergleichen, eingesetzt werden. Zudem kommt ein Einsatz derartiger Adsorptionsmaterialien in Schutzanzügen in Betracht, wobei die hierzu eingesetzten Adsorptionsmaterialien oftmals auf einer Trägerstruktur fixiert sind. Hierdurch können grundsätzlich auch luft- und wasserdampfdurchlässige Materialien realisiert werden, was insbesondere den Tragekomfort der auf dieser Basis hergestellten Schutzanzüge erhöht - und dies ohne die Schutzfunktion in signifikanter Weise zu verringern.

Aktivkohle ist in diesem Zusammenhang aufgrund ihrer recht unspezifischen adsorptiven Eigenschaften - was eine Schutzfunktion gegenüber zahlreichen chemischen bzw. biologischen Schad- bzw. Giftstoffen unterschiedlichster Art bzw. Natur gewährleistet - sowie ihrer hohen Adsorptionskapazität das am häufigsten eingesetzte Adsorbens. Gesetzliche Auflagen, aber auch das steigende Bewusstsein der Verantwortung für die Umwelt, führen zu einem steigenden Bedarf an Aktivkohle.

Aktivkohle wird im Allgemeinen durch Carbonisierung (synonym auch als Schwelung, Pyrolyse, Abbrand etc. bezeichnet) und anschließende Aktivierung kohlenstoffhaltiger Ausgangsverbindungen erhalten, wobei solche Ausgangsverbindungen bevorzugt werden, die zu ökonomisch vernünftigen Ausbeuten führen. Denn die Gewichtsverluste durch Abspalten flüchtiger Bestandteile bei der Carbonisierung und durch den nachfolgenden Abbrand bei der Aktivierung sind erheblich. Für weitergehende Einzelheiten zur Aktivkohleherstellung im Allgemeinen kann beispielsweise verwiesen werden auf H. v. Kienle und E. Bäder, "Aktivkohle und ihre industrielle Anwendung", Enke Verlag Stuttgart, 1980.

Die Beschaffenheit der erzeugten Aktivkohle - fein- oder grobporig, fest oder brüchig etc. - hängt dabei auch vom Ausgangsmaterial ab. Übliche Ausgangsmaterialien sind Kokosnussschalen, Holzkohle und Holz (z. B. Holzabfälle), Torf, Steinkohle, Peche, aber auch besondere Kunststoffe, die unter anderem bei der Herstellung von Aktivkohlegeweben eine gewisse Rolle spielen.

Aktivkohle wird in verschiedenen Formen verwendet: Pulverkohle, Splitterkohle bzw. Kornkohle, Formkohle und seit Ende der 1970er Jahre auch kugelförmige Aktivkohle ("Kugelkohle"). Kugelförmige Aktivkohle hat gegenüber anderen Formen von Aktivkohle, wie Pulver-, Splitter-, Korn- und Formkohle und dergleichen, eine Reihe von Vorteilen, die sie für bestimmte Applikationen wertvoll oder sogar unverzichtbar macht: Sie ist rieselfähig, abriebfest bzw. staubfrei und hart. Kugelkohle ist wegen ihrer speziellen Form, aber auch wegen der hohen Abriebfestigkeit beispielsweise für besondere Einsatzgebiete sehr gefragt.

Kugelkohle wird heute noch meist durch mehrstufige und sehr aufwendige Verfahren hergestellt. Das bekannteste Verfahren besteht in der Herstellung von Kügelchen aus Steinkohlenteerpech und geeigneten asphaltartigen Rückständen der Erdölchemie, welche oxidiert - damit sie unschmelzbar werden - und nachfolgend geschwelt und aktiviert werden. Beispielsweise kann die Kugelkohle auch in einem mehrstufigen Verfahren ausgehend von Bitumen hergestellt werden. Diese mehrstufigen Verfahren sind sehr kostenintensiv, und der damit verbundene hohe Preis der so erhältlichen Kugelkohle verhindert viele Anwendungen, bei denen die Kugelkohle aufgrund ihrer Eigenschaften eigentlich bevorzugt werden müsste.

In der WO 98/07655 A1 wird ein Verfahren zur Herstellung von Aktivkohlekügelchen beschrieben, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfasst, zu rieselförmigen Kügelchen verarbeitet wird und anschließend die auf diese Weise erhaltenen Kügelchen carbonisiert und dann aktiviert werden.

Aus dem Stand der Technik ist ferner die Herstellung von Kugelkohle durch Schwelung und anschließende Aktivierung von neuen oder gebrauchten Ionenaustauschern, die Sulfonsäuregruppen enthalten, bzw. durch Schwelung von Ionenaustauschervorstufen in Gegenwart von Schwefelsäure mit anschließender Aktivierung, wobei die Sulfonsäuregruppen bzw. die Schwefelsäure die Funktion eines Vernetzers haben, bekannt. Solche Verfahren sind beispielsweise in der DE 43 28 219 A1, in der DE 43 04 026 A1 sowie in der DE 196 00 237 A1 einschließlich der deutschen Zusatzanmeldung DE 196 25 069 A1 beschrieben.

Weiterhin sind aus dem Stand der Technik Verfahren bekannt, bei denen die Herstellung von Aktivkohle, insbesondere Kugelkohle, durch Schwelung und anschließende Aktivierung sulfonierter divinylbenzolvernetzter Polystyrole (d. h. sulfonierte Styrol/Divinylbenzol-Copolymere) erfolgt (vgl. z. B. DE 10 2007 050 971 A1).

Bei speziellen Anwendungen ist aber nicht nur die Geometrie bzw. die äußere Gestalt der Aktivkohle von entscheidender Bedeutung, sondern auch deren Porosität, insbesondere das Gesamtporenvolumen und die Adsorptionskapazität einerseits und die Verteilung der Poren, d. h. der Anteil an Mikro-, Meso- und Makroporen in Bezug auf das Gesamtporenvolumen, andererseits. Insbesondere kann die Porosität durch die Auswahl der Ausgangsmaterialien sowie die Verfahrensbedingungen gezielt gesteuert werden. Im Rahmen der vorliegenden Erfindung bezeichnet der Begriff der Mikroporen solche Poren mit Porendurchmessern von weniger als 2 nm, wohingegen der Begriff der Mesoporen solche Poren mit Porendurchmessern im Bereich von 2 nm (d. h. 2 nm einschließlich) bis 50 nm einschließlich und der Begriff der Makroporen solche Poren mit Porendurchmessern von mehr als 50 nm (d. h. > 50 nm) bezeichnet.

Aufgrund ihrer guten adsorptiven Eigenschaften kommt Aktivkohle für eine Vielzahl von Anwendungen zum Einsatz: So wird Aktivkohle beispielsweise in der Medizin oder Pharmazie eingesetzt, aber auch in der Lebensmittelindustrie. Auch für Filteranwendungen findet Aktivkohle weitreichende Anwendungen (z. B. Filtration von Gasen und Flüssigkeiten, Entfernung von unerwünschten oder schädlichen bzw. toxischen Gasen etc.).

Insbesondere kann Aktivkohle in Adsorptionsfiltermaterialien, insbesondere auch speziell in Schutzmaterialien gegenüber Giften, wie chemisch-biologischen Kampfstoffen, wie beispielsweise ABC-Schutzbekleidung, zum Einsatz kommen. Zu diesem Zweck sind insbesondere luft- und wasserdampfdurchlässige Schutzanzüge gegen chemische Kampfstoffe bekannt; derartige luft- und wasserdampfdurchlässige Schutzanzüge besitzen oftmals eine Adsorptionsfilterschicht mit Aktivkohle, welche die chemischen Gifte adsorbiert.

Die mit der Verwendung von porösen Adsorbentien in Form von Aktivkohle einhergehenden Nachteile sind insbesondere darin zu sehen, dass zum einen die Kapazität im Hinblick auf die Adsorption der in Rede stehenden chemischen bzw. biologischen Schad- bzw. Giftstoffe begrenzt ist. So führt eine insbesondere dauerhafte Bindung der adsorbierten Substanzen in dem Porensystem der eingesetzten Aktivkohle zu einer gewissen Absättigung bzw. Erschöpfung, so dass die Aufnahme bzw. Adsorption weiterer Schadstoffe begrenzt ist. Auch besteht hinsichtlich der mit Schad- bzw. Giftstoffen beladenen Adsorbentien die Gefahr der Desorption und somit der erneuten Freisetzung von zuvor adsorbierten Schad- bzw. Giftstoffen.

Zum anderen weist Aktivkohle als solche insbesondere vor dem Hintergrund des jeweiligen Einsatzbereiches ein mitunter nicht optimales Adsorptionsspektrum bzw. eine nicht optimale Breitbandigkeit der Adsorption auf, insbesondere im Hinblick auf die Adsorption von anorganischen Stoffen bzw. Verbindungen, wie Ammoniak, Schwefelwasserstoff und Cyanwasserstoff oder dergleichen. Insbesondere für die Gasbehandlung bzw. Gasaufreinigung werden Adsorptionsmaterialien benötigt, welche optimale Adsorptionskapazitäten sowohl für organische als auch anorganische Stoffe aufweisen.

In diesem Zusammenhang ist im Stand der Technik eine Ausrüstung von Aktivkohle auf Basis von sogenannten Salzimprägnierungen, insbesondere in Form von in der Aktivkohle vorliegenden Metallsalzen als solchen, bekannt. Insbesondere werden zur Steigerung der Adsorptionsleistung bzw. des Adsorptionsspektrums permeable adsorptive Filtersysteme, insbesondere auf Basis von Aktivkohle, oftmals mit einem Katalysator ausgerüstet, wobei auf diese Weise neben der Bereitstellung einer gewissen Regenerierbarkeit der Aktivkohle auch das Adsorptionsspektrum insbesondere im Hinblick auf anorganische Substanzen erweitert werden soll.

Eine spezielle, in diesem Zusammenhang zum Einsatz kommende Imprägnierung ist beispielsweise eine sogenannte ABEK-Imprägnierung, welche gegenüber spezifischen toxischen Substanzen eine katalytische Wirkung aufweist. In diesem Zusammenhang bezieht sich Typ A auf bestimmte organische Gase und Dämpfe mit einem Siedepunkt > 65°C, beispielsweise Cyclohexan. Typ B bezieht sich auf bestimmte anorganische Gase und Dämpfe, beispielsweise Cyanwasserstoff. Typ E bezieht sich auf eine abbauende bzw. schützende Wirkung gegenüber Schwefeldioxid und anderen sauren Gasen und Dämpfen. Typ K schließlich bezieht sich auf eine Schutzfunktion gegenüber Ammoniak und organischen Ammoniakderivaten. Für weiterführende Informationen kann auf die diesbezügliche Europäische Norm EN 14387 (Januar 2004) verwiesen werden.

Nachteilig bei herkömmlichen Imprägnierungen von Aktivkohle dabei jedoch die Tatsache, dass durch die Imprägnierung ein Teil der Adsorptionskapazität der Aktivkohle, insbesondere im Hinblick auf organische Verbindungen, verloren geht, wodurch somit auch die Adsorption und somit die Unschädlichmachung von chemischen Schadstoffen vermindert ist. Auf Basis der aus dem Stand der Technik bekannten Imprägnierverfahren wird somit die Leistungsfähigkeit der Aktivkohle mitunter nachteilig beeinflusst.

Darüber hinaus wird durch eine herkömmliche Ausrüstung von Aktivkohle mit einer katalytischen bzw. reaktiven Komponente nicht immer die gewünschte Wirksamkeit erreicht. Insbesondere das Problem des Durchschlagens von Schad- bzw. Giftstoffen, insbesondere von Kampfstoffen, bei hohen Konzentrationen wird durch dieses Prinzip nicht immer gelöst; andererseits wird bei sehr geringen Konzentrationen an zu entfernenden Schadstoffen oder störenden Gasen (z. B. bei der Luftaufbereitung für Reinraumbedingungen) oft nicht die gewünschte Effizienz erreicht, da eine effektive Adsorption erst bei höheren Konzentrationen einsetzt. Zudem erfordert eine herkömmliche Ausrüstung von Aktivkohle insbesondere mit Metallsalzen zum einen relativ große Mengen an Imprägnierungsmaterial und zum anderen wird eine gewünschte homogene Beladung bzw. Ausrüstung der Adsorbentien mit dem Imprägniermaterial oftmals nicht in zufriedenstellender Weise erreicht.

Vor diesem Hintergrund sind im Stand der Technik Ansätze verfolgt worden, Adsorptionsmaterialien bereitzustellen, welche zum einen eine gewisse reaktive bzw. katalytische Aktivität und zum anderen auch verbesserte Adsorptionseigenschaften insbesondere in Bezug auf anorganische toxische Substanzen aufweisen.

In diesem Zusammenhang betrifft die EP 1 738 823 A2 eine katalytisch aktive Einheit mit einem Trägermaterial, wobei die katalytisch aktive Einheit bzw. das Trägermaterial Polymerpartikel umfasst, wobei die Polymerpartikel mindestens eine katalytisch aktive Komponente aufweisen, wobei diesbezüglich anorganisch-organische Hybridpolymere, welche neben Siliziumalkoxiden bzw. Si-O-Si-Einheiten zudem Metalle bzw. Heteroatome beinhalten. Die beschriebenen Materialien fungieren jedoch in erster Linie nicht als Adsorbentien, sondern als katalytisch aktive Partikel als solche.

Zudem beschreibt die DE 10 2005 022 844 A1 ein Verfahren zur Abtrennung von Geruchsstoffen aus Gasen, wobei ein Gas mit einem Filter in Kontakt gebracht werden soll, welcher ein poröses metallorganisches Gerüstmaterial enthält, wobei das Gerüstmaterial mindestens eine an ein Metallion koordinativ gebundene, mindestens zweizähnige organische Verbindung aufweist. Nachteilig ist jedoch die mitunter aufwendige und kostenintensive Herstellung sowie die eingeschränkte Adsorptionseigenschaft des resultierenden Adsorptionsmaterials.

Weiterhin betrifft die WO 2009/056184 A1 ein Sorptionsfiltermaterial, welches ein Adsorbens auf Basis einer metallorganischen Gerüstsubstanz sowie als weiteres Adsorbens ein hiervon räumlich getrenntes Sorptionsmittel auf Aktivkohlebasis aufweist. Die Partikel der metallorganischen Gerüstsubstanz einerseits sowie die Partikel auf Aktivkohlebasis andererseits können dabei auf einem Trägermaterial fixiert sein. Das resultierende Sorptionsfiltermaterial ist jedoch insbesondere im Hinblick auf die physikalischen Eigenschaften insofern nicht optimal, als insbesondere die Partikel auf Basis des metallorganischen Gerüstmaterials eine geringere Stabilität bzw. Abriebhärte aufweisen können. Zudem sind die Adsorptionseigenschaften durch die getrennte Anordnung von Aktivkohle einerseits und metallorganischer Gerüstsubstanz andererseits insbesondere unter extrem hoher Schadstoffbelastung dahingehend nicht immer optimal, dass über die Fläche des Sorptionsfiltermaterials mitunter nicht einheitliche Adsorptionseigenschaften in Bezug auf organische bzw. anorganische Verbindungen vorliegen.

Die WO 2012/131483 A1 betrifft ein Verbundmaterial aus metallorganischem Gerüstmaterial und Aktivkohle mit definierter Elementarzusammensetzung sowie ein Verfahren zur Herstellung des Verbundmaterials. Bei dem dort beschriebenen Verfahren soll zunächst ein organischer Ligand in Alkohol und ein Metallsalz in Wasser gelöst und die so erhaltenen Lösungen in einem nachfolgenden Schritt gemischt werden. Anschließend soll Aktivkohle hinzugegeben werden, wobei unmittelbar nach Zugabe der Aktivkohle eine Erwärmung zur Herstellung des Verbundmaterials unter Ausbildung des metallorganischen Gerüstmaterials erfolgen soll.

Gemäß der wissenschaftlichen Publikation Rallapalli et al., "Activated carbon @ MIL-101 (Cr): a potential metal-organic framework composite material for hydrogen storage", International Journal of Energy Research, Seiten 746 - 753, 2011*,* soll eine Aktivkohle in die Poren einer metallorganischen Gerüstsubstanz eingebracht werden.

Weiterhein betrifft die wissenschaftliche Publikation gemäß Qian et al., "Synthesis of Hierarchical Porous Carbon Monoliths with Incorporated Metal-Organic Frameworks for Enhancing Volumetric Based CO2 Capture Capability", Applied Materials & Interfaces, Bd. 4, Nr. 11, Seiten 6125 - 6132, 2012*,* die Herstellung von Kompositmaterialien aus monolithischem Kohlenstoff einerseits und metallorganischer Gerüstsubstanz andererseits.

Zudem betrifft die wissenschaftliche Publikation gemäß De Oliveira et al., "MOF@activated carbon: a new material for adsorption of aldicarb in biological systems", Chem. Commun.,Bd. 49, Nr. 58, Seite 6486, 2013 ein Kompositmaterial aus Aktivkohle und einer metallorganischen Gerüstsubstanz, welches für biologische Zwecke eingesetzt werden soll.

Die EP 2 341 031 A1 betrifft ein poröses Hybridmaterial mit einem ersten porösen Material und einem zweiten porösen Material sowie ein Verfahren zu dessen Herstellung.

Vor diesem Hintergrund ist daher eine Aufgabe der vorliegenden Erfindung, ein Adsorptionsmaterial in Form von Aktivkohle bzw. ein entsprechendes Verfahren zu seiner Herstellung bereitzustellen, welche bzw. welches die zuvor geschilderten Nachteile des Standes der Technik zumindest weitgehend vermeidet bzw. abschwächt.

Eine weitere Aufgabe der vorliegenden Erfindung besteht darin, ein spezielles Verfahren zur gezielten Ausrüstung von Aktivkohle mit einem speziellen Material zur Bereitstellung einer reaktiven bzw. katalytischen Aktivität bzw. Ausrüstung, wobei das Verfahren als solches einfach handhabbar und effizient sein soll und zudem zu einer Aktivkohle mit insgesamt verbesserten Eigenschaften führen soll.

Insbesondere ist eine weitere Aufgabe der vorliegenden Erfindung darin zu sehen, eine Aktivkohle bereitzustellen, welche neben hervorragenden adsorptiven Eigenschaften auch über eine reaktive bzw. katalytische Aktivität verfügt und welche insgesamt ein breites Adsorptionsspektrum im Hinblick auf die Adsorption sowohl von organischen als auch anorganischen Schad- bzw. Giftstoffen aufweist, wobei die Adsorptionskapazität durch die zugrundeliegende Ausrüstung zumindest im Wesentlichen nicht verringert werden soll. Insbesondere soll die Aktivkohle eine hohe Adsorptionskapazität bei gleichzeitig hoher Breitbandigkeit der Adsorption aufweisen.

Eine wiederum weitere Aufgabe der vorliegenden Erfindung besteht in der Bereitstellung einer Aktivkohle, welche sich insbesondere zur Verwendung in Schutzmaterialien (wie Schutzanzügen, Schutzhandschuhen, Schutzschuhen und anderen Schutzbekleidungsstücken sowie Schutzabdeckungen, Schlafsäcken und dergleichen) eignet und dabei einen hohen Tragekomfort gewährleistet.

Schließlich besteht eine wiederum weitere Aufgabe der vorliegenden Erfindung in der Bereitstellung einer Aktivkohle, welche sich insbesondere zur Verwendung in Filtern und Filtermaterialien (wie zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich) eignet und dabei eine gute Filtereffizienz gewährleistet.

Wie die Anmelderin nun in völlig überraschender Weise herausgefunden hat, kann die zuvor angeführte und der vorliegenden Erfindung zugrundeliegende Aufgabe in nicht erwarteter Weise dadurch gelöst werden, dass im Rahmen der vorliegenden Erfindung eine Aktivkohle mit einer metallorganischen Gerüstsubstanz (MOF-Material) *in situ* ausgerüstet bzw. ausgestattet wird, wobei die metallorganische Gerüstsubstanz (MOF-Material) in gezielter Weise in den Poren bzw. in dem Porensystem der Aktivkohle hergestellt bzw. gebildet wird, so dass die auf diese Weise erhältliche Aktivkohle aufgrund ihrer modifizierten inhärenten Eigenschaften über insgesamt verbesserte Adsorptionseigenschaften insbesondere auch im Hinblick auf die Breitbandigkeit der Adsorption sowohl von organischen als auch anorganischen Gift- bzw. Schadstoffen verfügt und zudem katalytische bzw. reaktive Eigenschaften aufweist, was auch in einer gewissen Selbstregenerierbarkeit der Aktivkohle, einhergehend mit längeren Verwendungs- bzw. Einsatzzeiten, resultiert.

Zur Lösung der zuvor geschilderten Aufgabe schlägt die vorliegende Erfindung somit - gemäß einem **ersten** Aspekt der vorliegenden Erfindung - das Verfahren zur Herstellung einer mit mindestens einer metallorganischen Gerüstsubstanz (MOF-Material) ausgestatteten bzw. imprägnierten Aktivkohle vor. Weitere, insbesondere vorteilhafte Ausgestaltungen des erfindungsgemäßen Verfahrens sind Gegenstand der diesbezüglichen Verfahrensunteransprüche.

Weiterer Gegenstand der vorliegenden Erfindung - gemäß einem **zweiten** Aspekt der vorliegenden Erfindung - ist die Aktivkohle mit reaktiver und/oder katalytischer Ausrüstung, insbesondere in Form von diskreten Aktivkohlepartikeln, gemäß dem entsprechenden unabhängigen Anspruch. Weitere, insbesondere vorteilhafte Ausgestaltungen der erfindungsgemäßen Aktivkohle sind Gegenstand der diesbezüglichen Unteransprüche.

Wiederum weiterer Gegenstand der vorliegenden Erfindung - gemäß einem **dritten** Aspekt der vorliegenden Erfindung - sind die erfindungsgemäßen Verwendungen, wie sie in dem unabhängigen Verwendungsanspruch angeführt sind.

Darüber hinaus sind Gegenstand der vorliegenden Erfindung - gemäß einem **vierten** Aspekt der vorliegenden Erfindung - Schutzmaterialien, insbesondere für den zivilen oder militärischen Bereich, insbesondere Schutzbekleidung, gemäß dem diesbezüglich unabhängigen Anspruch.

Schließlich sind weiterer Gegenstand der vorliegenden Erfindung - gemäß einem **fünften** Aspekt der vorliegenden Erfindung - Filter und Filtermaterialien, insbesondere zur Entfernung von Schad-, Geruchs- und Giftstoffen aller Art, gemäß dem betreffenden unabhängigen Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte, Zahlen und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können.

Im Übrigen gilt, dass bei sämtlichen nachstehend aufgeführten relativen bzw. prozentualen Angaben, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe - stets 100 % bzw. 100 Gew.-% resultieren. Dies versteht sich für den Fachmann aber von selbst.

Dies vorausgeschickt, wird im Folgenden die vorliegenden Erfindung näher beschrieben.

Gemäß einem **ersten** Aspekt der vorliegenden Erfindung betrifft die vorliegende Erfindung ein Verfahren zur Herstellung einer mit mindestens einer metallorganischen Gerüstsubstanz (MOF-Material) ausgestatteten und/oder imprägnierten Aktivkohle in Form von diskreten Aktivkohlepartikeln, vorzugsweise zur Herstellung einer Aktivkohle mit reaktiver und/oder katalytischer Aktivität und/oder Ausrüstung,
wobei die metallorganische Gerüstsubstanz *in situ* in den Poren und/oder in dem Porensystem der Aktivkohle ausgehend von mindestens einer mindestens ein Metall enthaltenden Metallpräkursorverbindung (MP) und mindestens einem Liganden-Präkursor (LP) hergestellt und/oder gebildet wird,
wobei die Metallpräkursorverbindung (MP) und der Liganden-Präkursor (LP) in die Poren und/oder in das Porensystem der Aktivkohle eingebracht werden,
wobei die Metallpräkursorverbindung (MP) und der Liganden-Präkursor (LP), gemeinsam oder unabhängig voneinander, in Form mindestens einer wässrigen, wässrig-alkoholischen oder alkoholischen Lösung und/oder Dispersion eingesetzt werden, wobei das Einbringen der Metallpräkursorverbindung (MP) und des Liganden-Präkursors (LP), gemeinsam oder unabhängig voneinander, in die Poren und/oder das Porensystem der Aktivkohle durch Tränken der Aktivkohle mit der mindestens einen Lösung und/oder Dispersion der Metallpräkursorverbindung (MP) und des Liganden-Präkursors (LP) erfolgt,
wobei nach dem Einbringen der Metallpräkursorverbindung (MP) und/oder des Liganden-Präkursors (LP) mindestens eine Trocknung der Aktivkohle zur zumindest im Wesentlichen vollständigen Entfernung von Löse- und/oder Dispergiermittel aus den Poren und/oder dem Porensystem der Aktivkohle durchgeführt wird, wobei die Trocknung bei Temperaturen im Bereich von 0 °C bis 50 °C durchgeführt wird,
wobei nach dem Einbringen der Metallpräkursorverbindung (MP) und des Liganden-Präkursors (LP) und nach durchgeführter Trocknung der Aktivkohle mindestens eine thermische Nachbehandlung zur Umsetzung der Metallpräkursorverbindung (MP) mit dem Liganden-Präkursor (LP) zu der metallorganischen Gerüstsubstanz (MOF-Material) durchgeführt wird, wobei die thermische Nachbehandlung bei einer Temperatur im Bereich von 50 °C bis 500 °C durchgeführt wird, und
wobei die metallorganische Gerüstsubstanz (MOF-Material) in kristalliner Form vorliegt, wobei die Partikel der metallorganischen Gerüstsubstanz (MOF-Material) eine mittlere Partikelgröße im Bereich von 0,1 nm bis 500 nm aufweisen.

Die grundlegende Idee der vorliegenden Erfindung ist somit in der Bereitstellung eines speziellen Verfahrens zu sehen, auf dessen Basis eine sehr spezielle Aktivkohle mit reaktiver bzw. katalytischer Aktivität bzw. Ausrüstung bereitgestellt wird, wobei die Aktivkohle in zweckgerichteter Weise mit einer metallorganischen Gerüstsubstanz insofern ausgerüstet wird, als die in Rede stehende metallorganische Gerüstsubstanz (MOF-Material) in den Poren bzw. in dem Porensystem der Aktivkohle und damit in der Aktivkohle selbst hergestellt wird.

Auf Basis des erfindungsgemäßen Verfahrens wird die metallorganische Gerüstsubstanz (MOF-Material) folglich sozusagen unmittelbar vor Ort bzw. an Ort und Stelle in dem Porensystem bzw. in den Poren der Aktivkohle ausgehend von speziellen Präkursorsubstanzen bzw. Vorläufersubstanzen gebildet. Aufgrund dieser der vorliegenden Erfindung zugrundeliegenden Konzeption wird eine effektive und gleichmäßige Ausrüstung des Porensystems der Aktivkohle mit der metallorganischen Gerüstsubstanz (MOF-Material) gewährleistet, was die adsorptiven sowie katalytischen bzw. reaktiven Eigenschaften der Aktivkohle weiter verbessert.

Wie nachfolgend noch im Detail ausgeführt, werden im Rahmen der erfindungsgemäßen Konzeption die zugrundeliegenden Präkursoren auf Basis der Metallpräkursorverbindung (MP) einerseits und des Liganden-Präkursors (LP) andererseits zunächst auf Basis von entsprechenden Lösungen und/oder Dispersionen in das Porensystem eingebracht und gegebenenfalls unter Zufuhr von Energie, insbesondere Wärmeenergie, in die metallorganische Gerüstsubstanz (MOF-Material) überführt, insbesondere unter Ausbildung koordinativer Bindungen insbesondere zwischen dem Metall der Metallpräkursorverbindung (MP) und dem Liganden auf Basis des Liganden-Präkursors (LP).

Im Rahmen der vorliegenden Erfindung wird die Aktivkohle somit in gezielter Weise mit einer metallorganischen Gerüstsubstanz (MOF-Material) ausgerüstet, wobei, wie zuvor angeführt, die metallorganische Gerüstsubstanz (MOF-Material) an ihrem Bestimmungsort selbst, nämlich in den Poren bzw. in dem Porensystem der Aktivkohle, gebildet wird. Wie nachfolgend noch im Detail beschrieben, erfolgt in diesem Zusammenhang das Einbringen der Metallpräkursorverbindung (MP) und des Liganden-Präkursors (LP) auf Basis von entsprechenden Lösungen bzw. Dispersionen, welche in das Porensystem der Aktivkohle infiltriert werden können, so dass sich in der Folge die metallorganische Gerüstsubstanz (MOF-Material) ausbilden kann, insbesondere im Rahmen einer vorzugsweise thermischen Nachbehandlung.

Gemäß dem Verfahren nach der Erfindung wird dabei insbesondere das innere Porensystem der Aktivkohle mit der metallorganischen Gerüstsubstanz (MOF-Material) ausgerüstet.

Hinsichtlich der nach dem erfindungsgemäßen Verfahren erhältlichen Aktivkohle als solcher kommen somit sogenannte metallorganische Gerüstmaterialien - synonym auch als "metallorganische Gerüstsubstanzen", *"Metal Organic Frameworks* (MOF)", "MOF-Substanzen", "MOF-Materialien", "poröse Koordinationspolymere" oder dergleichen bezeichnet - zum Einsatz, welche im allgemeinen porös ausgebildet sind und eine kristalline Struktur aufweisen. Diese metallorganischen Gerüstmaterialien besitzen einen relativ einfachen modularen Aufbau und bilden eine neue Klasse poröser Materialien. Dabei dient im allgemeinen ein gegebenenfalls mehrkerniger Metallkomplex, insbesondere auf Basis von Metallclustern, oder mindestens ein Metallion als Vernetzungspunkt ("Knoten"), an den mehrere multifunktionelle bzw. multidentate Liganden (Linker) angeknüpft sind. Die Bezeichnung *"Metal Organic Framework* (MOF)" geht auf *Omar Yaghi,* einen der Pioniere auf dem Gebiet metallorganischer Gerüstmaterialien, zurück. Unterschiedliche Verbindungen werden nach *Yaghi* einfach entsprechend der zeitlichen Abfolge ihrer Entdeckung enumerativ benannt (z. B. stammt MOF-2 aus dem Jahr 1998 und MOF-177 aus dem Jahr 2004).

Im Rahmen der vorliegenden Erfindung bezeichnet der Begriff der metallorganischen Gerüstmaterialien (MOF-Materialien) insbesondere das nach seiner Herstellung in dem Porensystem der Aktivkohle erhaltene, gegebenenfalls von Verunreinigungen befreite anorganisch-organische Hybridpolymer, welches aus sich wiederholenden Baueinheiten auf Basis von gegebenenfalls mehrkernigen Metallkomplexen, insbesondere Metallclustern, oder Metallionen einerseits und verbrückenden Liganden andererseits aufgebaut ist, wobei die Liganden insbesondere mindestens zwei funktionelle Gruppen bzw. mindestens zwei Koordinationsstellen aufweisen, d. h. insbesondere mindestens bidentat (zweizähnig) sind. Die metallorganischen Gerüstsubstanzen sind dabei somit aus gegebenenfalls mehrkernigen Metallkomplexen, insbesondere Metallclustern, bzw. Metallionen aufgebaut, welche über mindestens zwei funktionelle Gruppen des Liganden bzw. über mindestens bidentate (zweizähnige) organische Liganden derart miteinander verbunden sind, dass eine dreidimensionale Struktur entsteht, welche innere Hohlräume (Poren) aufweist. Die Poren sind dabei insbesondere durch die Metallatome bzw. Metallcluster bzw. Metallionen und die Art der sie verbindenden organischen Liganden definiert bzw. bestimmt. Ein MOF-Material kann dabei ausschließlich identische mehrkernige Metallkomplexe oder Metallionen (z. B. ausschließlich Kupfer oder ausschließlich Zink etc.) oder aber auch zwei oder mehr verschiedene Arten von mehrkernigen Metallkomplexen oder Metallionen (d. h. unterschiedliche Arten, wie z. B. Kupfer und Zink etc.) aufweisen.

Für weitergehende Einzelheiten zu metallorganischen Gerüstsubstanzen (MOF) kann beispielsweise auf den Übersichtsartikel von S. Kaskel, "Poren per Baukasten" in: Nachrichten aus der Chemie, 53, April 2005, Seiten 394 bis 399*,* sowie auf die dort referierte Literatur verwiesen werden.

Die Herstellung von metallorganischen Gerüstsubstanzen als solchen ist dem Fachmann grundsätzlich bekannt, so dass es diesbezüglich keiner weitergehenden Ausführungen bedarf. In diesem Zusammenhang kann auf die zuvor zitierte Literatur, insbesondere *S*. *Kaskel* (loc. cit.) und ergänzend zudem auf die einschlägige Patentliteratur verwiesen werden, beispielsweise und nicht beschränkend auf die WO 2007/023295 A2, US 2004/0097724 A1, WO 2005/ 049484 A1, WO 2005/068474 A1 und WO 2005/049892.

Metallorganische Gerüstmaterialien sind also poröse, im allgemeinen kristalline Materialien, insbesondere mit wohlgeordneter kristalliner Struktur, welche aus metallorganischen Komplexen zwischen Übergangsmetallen oder mehrkernigen Übergangsmetallkomplexen (z.B. Kupfer, Zink, Nickel, Kobalt etc.) als Knoten und organischen Molekülen (Liganden) als Verbindung bzw. Linker zwischen den Knoten bestehen. Aufgrund ihrer Porosität sind diese Materialien bislang nur zur Gasspeicherung, beispielsweise zur Speicherung für Wasserstoff oder Methan, vorgeschlagen worden. Auch ihre Verwendung als Katalysatoren infolge der hohen inneren Oberfläche (BET bzw. Langmuir) mit Werten bis über 4.500 m²/g ist in Betracht gezogen worden, wobei jedoch bislang keinerlei konkrete Anwendungen hierfür bestehen.

Infolge der erfindungsgemäßen Ausrüstung der Poren bzw. des Porensystems, vorzugsweise der inneren Poren bzw. des inneren Porensystems, der Aktivkohle mit einem MOF-Material wird die derart modifizierte Aktivkohle zusätzlich mit katalytischen bzw. reaktiven Eigenschaften ausgerüstet. Insbesondere wird auf Basis der erfindungsgemäßen Konzeption eine Aktivkohle bereitgestellt, welche in völlig überraschender Weise über ein deutlich verbessertes Adsorptionsspektrum verfügt und in diesem Zusammenhang somit eine hohe Breitbandigkeit der Adsorption bei gleichzeitig hoher Adsorptionskapazität aufweist. Ohne sich auf diese Theorie beschränken zu wollen, kann die trotz der Ausrüstung der Poren mit dem MOF-Material bestehende hohe Gesamtadsorption der Aktivkohle auch mit der porösen Grundstruktur der MOF-Materialien erklärt werden, was einen Verschluss bzw. ein "Verkleben" der Poren verhindert bzw. selbst zu einer gewissen Adsorptionsfähigkeit führt. Insbesondere weist die mit der metallorganischen Gerüstsubstanz ausgerüstete Aktivkohle hervorragende Adsorptionseigenschaften auch gegenüber anorganischen Verbindungen auf. So können auf Basis der Ausrüstung der Aktivkohle mit der metallorganischen Gerüstsubstanz auch hervorragende Adsorptionseigenschaften gegenüber Ammoniak, Schwefelwasserstoff und Cyanwasserstoff erhalten werden.

Erfindungsgemäß wird somit ein optimiertes Adsorptionssystem mit kombinierten und sich ergänzenden Adsorptionseigenschaften einhergehend mit einer katalytischen bzw. chemischen Reaktivität bereitgestellt. Insbesondere weist die erfindungsgemäß mit dem MOF-Material ausgerüstete Aktivkohle sich ergänzende Eigenschaften von Physisorption und Chemisorption auf, so dass die mit der metallorganischen Gerüstsubstanz ausgerüstete Aktivkohle auch selbstregenerative Eigenschaften infolge des Abbaus von adsorbierten Schad- bzw. Giftstoffen zeigt. Somit ist die Schutzfunktion der mit dem metallorganischen Gerüstmaterial ausgestatten Aktivkohle über einen langen Zeitraum und, wie zuvor angeführt, für ein breites Spektrum von Schad- bzw. Giftstoffen gewährleistet.

Aufgrund der definierten molekularen Struktur bzw. der räumlichen Ausbildung des in den Poren der Aktivkohle gebildeten anorganischen Gerüstmaterials wird zudem eine Aktivkohle mit definierten und reproduzierbaren Adsorptionseigenschaften und somit ein Material mit konstanter Materialgüte bereitgestellt. Die Ausrüstung der Aktivkohle mit Metallkomponenten in Form des metallorganischen Gerüstmaterials bzw. der metallorganischen Gerüstsubstanz mit definierter Struktur führt somit zu einer Aktivkohle mit hoher Kapazität für organische und anorganische Stoffe.

Insbesondere ist dabei hervorzuheben, dass die Adsorptionseigenschaften bzw. die katalytischen und/oder reaktiven Eigenschaften der so ausgerüsteten bzw. modifizierten Aktivkohle zumindest im Wesentlichen unabhängig von der Umgebungsfeuchtigkeit und somit im Allgemeinen feuchteunabhängig sind, wobei gleichzeitig, wie zuvor angeführt, eine zumindest im Wesentlichen irreversible Adsorption von Schad- bzw. Giftstoffen ermöglicht wird, so dass die mit der metallorganischen Gerüstsubstanz ausgerüstete Aktivkohle eine nur geringe Tendenz zur Desorption von zuvor adsorbierten Schad- bzw. Giftstoffen aufweist.

Infolge der deutlich verbesserten Adsorptionseigenschaften einhergehend mit einer hohen Adsorptionskapazität und Breitbandigkeit der Adsorption können auf Basis der vorliegenden Erfindung insgesamt Filtermaterialien für die Gasbehandlung bzw. Gasaufreinigung mit geringen Gewichten, insbesondere geringen spezifischen Flächengewichten, und hoher Luftdurchlässigkeit bereitgestellt werden.

Ein weiterer zentraler Vorteil der mithilfe des erfindungsgemäßen Verfahrens mit der metallorganischen Gerüstsubstanz ausgerüsteten Aktivkohle ist darin zu sehen, dass die physikalischen Eigenschaften der Aktivkohle insbesondere im Hinblick auf die Stabilität der Aktivkohle, insbesondere in Form der Bruchfestigkeit bzw. Abriebhärte, zumindest im Wesentlichen nicht beeinflusst werden, so dass gleichermaßen belastungsresistente und abriebfeste Materialien bereitgestellt werden können. Erfindungsgemäß wird zudem auf Basis der Verfahrens nach der Erfindung eine Aktivkohle bereitgestellt, welche die positiven Eigenschaften einer Aktivkohle als solchen und eines MOF-Materials als solchen in ein und demselben Material vereinigt, wobei zudem gewährleistet ist, dass das MOF-Material auch unter Einfluss physikalischer und/oder chemischer Einflüsse dauerhaft in der Aktivkohle verbleibt, da es gewissermaßen in dem schützenden Porensystem der Aktivkohle angeordnet ist.

Was die Ausbildung bzw. das Vorliegen der metallorganischen Gerüstsubstanz in der Aktivkohle anbelangt, so ist es erfindungsgemäß vorgesehen, dass die metallorganische Gerüstsubstanz (MOF-Material) in den Poren und/oder in dem Porensystem in kristalliner Form ausgebildet wird bzw. vorliegt. Insbesondere sollte die metallorganische Gerüstsubstanz in kristalliner Form, vorzugsweise in Form von Kristalliten, in dem Porensystem der Aktivkohle vorliegen bzw. gebildet werden. Die spezielle Ausbildung des MOF-Materials in Teilchenform bzw. in kristalliner Form führt zum einen zu einer hohen Effizienz hinsichtlich der reaktiven bzw. katalytischen Eigenschaften und somit der Zersetzung bzw. des Abbaus von Schad- bzw. Giftstoffen. Zum anderen ist gleichzeitig eine hohe Zugänglichkeit des Porensystems der Aktivkohle für zu adsorbierende Schad- bzw. Giftstoffe gewährleistet, so dass die Adsorptionskapazität zumindest im Wesentlichen nicht negativ beeinflusst wird. Die im Rahmen des erfindungsgemäßen Verfahrens erhältlichen Aktivkohlen weisen somit auch nach der Ausrüstung mit der metallorganischen Gerüstsubstanz eine hohe Adsorptionskapazität auf.

Wie zuvor geschildert, weist die in den Poren gebildete metallorganische Gerüstsubstanz (MOF-Material) insbesondere sich wiederholende Struktureinheiten auf Basis jeweils mindestens eines Metalls, insbesondere Metallatoms oder Metallions, oder mehrkernigen Metallkomplexes, insbesondere Metallclusters, welches vorzugsweise durch die Metallpräkursorverbindung (MP) bereitgestellt wird, einerseits und mindestens eines Liganden, welcher insbesondere durch den Liganden-Präkursor (LP) bereitgestellt wird, andererseits auf, wobei der Ligand bzw. der Liganden-Präkursor (LP) insbesondere wenigstens zwei funktionelle Gruppen aufweist bzw. insbesondere ein wenigstens bidentater (zweizähniger) und/oder verbrückender organischer Ligand bzw. Liganden-Präkursor (LP) ist.

Durch die gezielte Auswahl der Metallpräkursorverbindung (MP) einerseits und des Liganden-Präkursors (LP) andererseits kann eine große Vielzahl verschiedener MOF-Materialien in dem Porensystem der Aktivkohle hergestellt werden, so dass das MOF-Material gewissermaßen vor dem Hintergrund des jeweiligen Einsatz- bzw. Verwendungsbereichs der damit ausgerüsteten Aktivkohle sozusagen maßgeschneidert werden kann.

Als Metall bzw. mehrkerniger Metallkomplex können dabei grundsätzlich sämtliche Metalle bzw. Metallkomplexe des Periodensystems der Elemente zum Einsatz kommen, welche mit mindestens einer bifunktionalisierten bzw. mindestens einer zweizähnigen und/oder verbrückenden organischen Verbindung (Ligand) ein metallorganisches poröses Gerüstmaterial auszubilden imstande sind.

Insbesondere sollte die Metallpräkursorverbindung (MP) mindestens ein Metall, insbesondere Metallatom oder Metallion, aufweisen, wobei das Metall ausgewählt wird aus Elementen der Gruppen Ia (Gruppe der Alkalimetalle), IIa (Gruppe der Erdalkalimetalle), IIIa (Scandiumgruppe), IVa (Titangruppe), Va (Vanadiumgruppe), VIa (Chromgruppe), VIIa (Mangangruppe) und VIIIa (Eisen-, Kobalt-, Nickelgruppe) sowie Ib (Kupfergruppe), IIb (Zinkgruppe), IIIb (Borgruppe / Erdmetalle), IVb (Kohlenstoff-Silicium-Gruppe), Vb (Stickstoff-Phosphor-Gruppe) und Vlb (Chalkogene, Sauerstoffgruppe) des Periodensystems der Elemente (gemäß vormaliger IUPAC-Bezeichnung). Die vorgenannten Gruppen entsprechen den Gruppen 1 bis 16 gemäß der aktuellen IUPAC-Bezeichnung.

Insbesondere ist es im Rahmen der vorliegenden Erfindung bevorzugt, wenn das Metall, insbesondere Metallatom oder Metallion, der Metallpräkursorverbindung (MP) ausgewählt wird aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb und Bi, vorzugsweise ausgewählt wird aus der Gruppe von Zn, Cu, Ni, Pd, Pt, Ru, Fe, Mn, Ag, Al und Co, bevorzugt ausgewählt wird aus der Gruppe von Cu, Fe, Co, Zn, Mn, Al und Ag, besonders bevorzugt ausgewählt wird aus der Gruppe von Cu, Fe, Al und Zn.

Insbesondere sollte das Metall der Metallpräkursorverbindung (MP) Kupfer (Cu) umfassen bzw. hieraus bestehen.

Insbesondere kann die im Rahmen des erfindungsgemäßen Verfahrens eingesetzte Metallpräkursorverbindung (MP) derart ausgebildet sein, dass diese das Metall in Form des Metallions enthält bzw. derart ausgebildet sein, dass bei Ausbildung bzw. Herstellung des MOF-Materials das Metall in Form des Metallions vorliegt. In diesem Zusammenhang ist es erfindungsgemäß von Vorteil, wenn das Metall ausgewählt wird aus der Gruppe von Mg²⁺, Ca²⁺, Sr²⁺, Ba²⁺, Sc³⁺, Y³⁺, Ti⁴⁺, Zr⁴⁺, Hf⁴⁺, V⁴⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb²⁺, As³⁺, As⁺, Sb⁵⁺, Sb³⁺, Sb⁺, Bi⁵⁺, Bi³⁺ und Bi⁺. Insbesondere kann es sich bei dem in Rede stehenden Metall in Form des Metallions um Cu⁺ und/oder Cu²⁺ handeln. Für die weiteren bevorzugten Metallionen kann auf obige Ausführungen zu dem Metallatom als solches verwiesen werden.

Im Rahmen der vorliegenden Erfindung kann es insbesondere vorgesehen sein, dass die Metallpräkursorverbindung (MP) in Form eines insbesondere anorganischen Salzes insbesondere des zugrundeliegenden Metalls eingesetzt wird.

Insbesondere kann die Metallpräkursorverbindung (MP) ausgewählt werden aus der Gruppe von Halogenidsalzen, Sulfaten, Sulfiden, Sulfiten, Nitraten, Nitriten, Nitriden, Phosphaten, Phosphiden, Phosphiten, Carbamaten, Alkoholaten, Carbonaten und Hydrogencarbonaten, insbesondere Carbonaten und/oder Nitraten.

Gemäß einer erfindungsgemäß bevorzugten Ausführungsform kann die Metallpräkursorverbindung (MP) in Form eines Nitrats eingesetzt werden. Insbesondere kann als Metallpräkursorverbindung (MP) ein Kupfersalz, insbesondere ein Kupfer(II)-Salz, vorzugsweise Kupfernitrat, bevorzugt Kupfer(II)-nitrat (Cu(NO₃)₂), eingesetzt werden.

Gleichermaßen ist es im Rahmen der vorliegenden Erfindung bevorzugt, wenn die Metallpräkursorverbindung (MP) in Form eines Carbonats und/oder Hydrogencarbonats, insbesondere Carbonats, eingesetzt wird. Zudem kann die Metallpräkursorverbindung (MP) in Form von Kupfercarbonat und/oder Kupferhydrogencarbonat, insbesondere Kupfer(II)-carbonat (CuCO₃) und/oder basischem Kupfercarbonat (CuCO₃ · Cu(OH₂), eingesetzt werden. Insbesondere kann auf Basis der Verwendung der Metallpräkursorverbindung (MP) in Form von insbesondere basischem Kupfercarbonat nach Einbringen der Metallpräkursorverbindung (MP) in das Porensystem der Aktivkohle, insbesondere durch Wärmeeinwirkung, eine Umwandlung in oxidische Kupferverbindungen, wie Kupfer(I)-oxid (Cu₂O) und/oder Kupfer(II)-oxid (CuO), erfolgen, wobei die oxidischen Verbindungen sozusagen ausgehend von dem insbesondere basischen Kupfercarbonat in dem Porensystem gebildet werden und nachfolgend durch Zugabe des Liganden-Präkursors die Ausbildung des MOF-Materials erfolgt.

Im Rahmen der vorliegenden Erfindung kann es auch demnach vorgesehen sein, dass die Metallpräkursorverbindung (MP) in Form eines Hydroxids und/oder Oxids eingesetzt wird.

Insbesondere kann die Metallpräkursorverbindung (MP) in Form eines Kupferhydroxids, insbesondere in Form von Kupfer(II)-hydroxid (Cu(OH)₂), eingesetzt werden.

Insbesondere kann die Metallpräkursorverbindung (MP) in Form eines Kupferoxids, insbesondere in Form von Kupfer(I)-oxid (Cu₂O) und/oder Kupfer(II)-oxid (CuO), eingesetzt werden.

Wie zuvor angeführt, können die oxidischen Kupferspezies gleichermaßen insbesondere ausgehend von vorzugsweise basischem Kupfercarbonat in den Poren bzw. in dem Porensystem durch Wärmebehandlung erhalten werden.

Im Allgemeinen kann die Metallpräkursorverbindung (MP) erfindungsgemäß in Form eines organischen Salzes eingesetzt werden. In diesem Zusammenhang kann es erfindungsgemäß gleichermaßen vorgesehen sein, dass die Metallpräkursorverbindung (MP) in Form eines Carbonsäuresalzes, insbesondere in Form eines Salzes einer aliphatischen gesättigten Monocarbonsäure, eingesetzt wird. Dabei kann das Carbonsäuresalz ausgewählt werden aus der Gruppe von Carbonaten, Acetaten, Propionaten, Butanoaten, Pentanoaten, Hexanoaten und Heptanoaten, vorzugsweise Carbonaten, Acetaten und Propionaten, bevorzugt Kupferacetat (CuAc₂; Ac = Acetat).

Was den erfindungsgemäß eingesetzten Liganden-Präkursor (LP) anbelangt, so sollte dieser im Rahmen der vorliegenden Erfindung insbesondere in Form eines wenigstens bidentaten (zweizähnigen) und/oder verbrückenden organischen Liganden-Präkursors (LP) eingesetzt werden.

Erfindungsgemäß sollte der Liganden-Präkursor (LP) mindestens eine funktionelle Gruppe, vorzugsweise mindestens zwei funktionelle Gruppen, aufweisen, welche imstande ist bzw. sind, zu einem Metall, insbesondere Metallatom oder Metallion, mindestens zwei insbesondere koordinative Bindungen auszubilden und/oder zu zwei oder mehreren Metallen, insbesondere Metallatomen oder Metallionen, gleich oder verschieden, jeweils eine insbesondere koordinative Bindung auszubilden.

In diesem Zusammenhang sollte die funktionelle des Liganden-Präkursors (LP) mindestens ein Heteroatom, bevorzugt aus der Gruppe von N, O, S, B, P, Si und Al, besonders bevorzugt N, O und S, aufweisen.

Beispielsweise kann die funktionelle Gruppe des Liganden-Präkursors (LP) ausgewählt werden aus der Gruppe von -CO₂H, -CS₂H, -NO₂, -B(OH)₂, -SO₃H -Si(OH)₃, -Ge(OH)₃, -Sn(OH)₃, -Si(SH)₃, -Ge(SH)₃, -Sn(SH)₃, -PO₃H⁻, -AsO₃H⁻, -AsO₄H²⁻, -P(SH)₃, -As(SH)₃, -CH(RSH)₂, -C(RSH)₃, -CH(RNH₂)₂, -C(RNH₂)₃, -CH(ROH)₂, -C(ROH)₃, -CH(RCN)₂, -C(RCN)₃, deren Salzen und Kombinationen, wobei der Rest R ausgewählt wird aus Alkylengruppen, insbesondere mit 1 bis 5 Kohlenstoffatomen, oder Arylgruppen, insbesondere mit 1 oder 2 aromatischen Kernen.

Insbesondere kann die funktionelle Gruppe des Liganden-Präkursors (LP) auch ausgewählt werden aus der Gruppe von -CO₂⁻, -SO₃⁻, -PO₃^{2-,} -AsO₃²⁻, -AsO₄²⁻ und deren Kombinationen.

Im Allgemeinen umfassen die zuvor angeführten funktionellen Gruppen auch die ungeladenen bzw. geladenen bzw. ionischen Äquivalente, beispielsweise in protonierter bzw. deprotonierter Form oder dergleichen.

Insbesondere kann es im Rahmen der vorliegenden Erfindung vorgesehen sein, dass die funktionelle Gruppe des Liganden-Präkursors (LP) an eine organische Verbindung gebunden vorliegt.

In diesem Zusammenhang sollte die organische Verbindung, insbesondere für den Fall, dass der Liganden-Präkursor (LP) mindestens zwei funktionellen Gruppen aufweist, ausgewählt werden aus der Gruppe von gesättigten und ungesättigten aliphatischen Verbindungen, aromatischen Verbindungen und aliphatisch-aromatischen Verbindungen.

Insbesondere kann die aliphatische Verbindung oder der aliphatische Teil der aliphatisch-aromatischen Verbindungen linear und/oder verzweigt und/oder zyklisch sein. Insbesondere kann die aliphatische Verbindung oder der aliphatische Teil der aliphatisch-aromatischen Verbindungen 1 bis 20, insbesondere 1 bis 15, bevorzugt 1 bis 10, Kohlenstoffatome aufweisen. Erfindungsgemäß kann es zudem vorgesehen sein, dass der Liganden-Präkursor (LP) ausgewählt wird aus mindestens zweiwertigen organischen Säuren, insbesondere Dicarbonsäuren, Tricarbonsäuren, Tetracarbonsäuren, deren Salzen und Kombinationen, besonders bevorzugt gegebenenfalls mindestens einfach substituierten aromatischen, insbesondere mono-, di-, tri-, tetra- oder höherkernigen aromatischen, Di-, Tri- oder Tetracarbonsäuren, insbesondere wobei jeder der aromatischen Kerne mindestens ein Heteroatom, gleich oder verschieden, insbesondere N, O, S, B, P, Si und/oder Al, bevorzugt N, S und/oder O, enthält.

Gemäß einer erfindungsgemäßen Ausführungsform kann der Liganden-Präkursor (LP) ausgewählt werden aus der Gruppe von (i) tetradentaten Carbonsäuren, insbesondere Oxalsäure, Malonsäure, Bernsteinsäure, Glutarsäure, Phthalsäure, Isophthalsäure, Terephthalsäure; (ii) hexadentaten Carbonsäuren, insbesondere Zitronensäure, Trimesinsäure; und (iii) Azolen, insbesondere Triazol, Pyrrodiazol; deren Salzen und Kombinationen; vorzugsweise hexadentaten Carbonsäuren, bevorzugt Trimesinsäure.

Weiterhin kann der Liganden-Präkursor (LP) ausgewählt werden aus heterocyclischen, insbesondere stickstoffhaltigen, aromatischen Verbindungen. Insbesondere kann der Liganden-Präkursor (LP) ausgewählt werden aus Imidazol und/oder Bipyridin, insbesondere 2,2'-Bipyridin und/oder 4,4'-Bipyridin.

Wie zuvor angeführt, resultiert durch das Einbringen der Metallpräkursorverbindung (MP) einerseits und des Liganden-Präkursors (LP) andererseits in das Porensystem der Aktivkohle bzw. durch entsprechendes Inkontaktbringen der jeweiligen Präkursoren die Ausbildung bzw. die Entstehung des MOF-Materials insbesondere auf Basis einer thermischen Nachbehandlung, wie nachfolgend noch beschrieben. Dabei wird die Metallpräkursorverbindung (MP) einerseits und der Liganden-Präkursor (LP) andererseits zu dem MOF-Material umgesetzt, insbesondere unter Ausbildung koordinativer Bindungen insbesondere zwischen dem Metall, vorzugsweise Metallatom oder Metallion, bzw. des mehrkernigen Metallkomplexes, vorzugsweise Metallclusters, der Metallpräkursorverbindung (MP) einerseits und dem Liganden auf Basis des Liganden-Präkursors (LP) andererseits.

Beispielsweise können im Rahmen des erfindungsgemäßen Verfahrens für die Herstellung eines MOF-Materials in Form von Cu₃(BTC)₂ einerseits eine Kupfer enthaltende Metallpräkursorverbindung (MP), insbesondere in Form von Kupfernitrat (Cu(NO₃)₂), und andererseits Trimesinsäure (H₃BTC) als Liganden-Präkursor (LP) eingesetzt werden.

Was darüber hinaus die im Rahmen des erfindungsgemäßen Verfahrens eingesetzte Aktivkohle anbelangt, so sollte die Aktivkohle aus kornförmiger, vorzugsweise kugelförmiger Aktivkohle gebildet werden. Zudem sollte die Aktivkohle aus kornförmigen, vorzugsweise kugelförmigen Aktivkohlepartikeln gebildet werden.

Was die Teilchengrößen der entsprechenden Aktivkohlepartikel anbelangt, so können diese in weiten Bereichen variieren. Erfindungsgemäß ist es jedoch bevorzugt, wenn die Aktivkohle, insbesondere die Aktivkohlepartikel, Teilchengrößen, insbesondere Teilchendurchmesser, im Bereich von 0,001 mm bis 3 mm, insbesondere im Bereich von 0,005 mm bis 2,5 mm, vorzugsweise im Bereich von 0,01 mm bis 2 mm, besonders bevorzugt im Bereich von 0,02 mm bis 1,5 mm, ganz besonders bevorzugt im Bereich von 0,05 mm bis 1 mm, aufweist bzw. aufweisen. Darüber hinaus sollte die Aktivkohle, insbesondere die Aktivkohlepartikel, mittlere Teilchengrößen, insbesondere mittlere Teilchendurchmesser (D50), im Bereich von 0,01 mm bis 2 mm, insbesondere im Bereich von 0,05 mm bis 1,5 mm, vorzugsweise im Bereich von 0,1 mm bis 1 mm, aufweist bzw. aufweisen. Die entsprechenden Teilchengrößen können insbesondere auf Basis der Methode nach ASTM D2862-97/04 bestimmt werden.

Darüber hinaus sollte die Aktivkohle eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen. Insbesondere sollte die Aktivkohle eine spezifische Oberfläche (BET-Oberfläche) im Bereich von 500 m²/g bis 4.000 m²/g, insbesondere im Bereich von 750 m²/g bis 3.000 m²/g, vorzugsweise im Bereich von 900 m²/g bis 2.500 m²/g, besonders bevorzugt im Bereich von 950 m²/g bis 2.000 m²/g, aufweisen.

Die Bestimmung der spezifischen Oberfläche gemäß BET ist dem Fachmann grundsätzlich bekannt. Sämtliche BET-Oberflächenangaben beziehen sich insbesondere auf die Bestimmung gemäß ASTM D6556-04. Im Rahmen der vorliegenden Erfindung wird zur Bestimmung der BET-Oberfläche insbesondere die sogenannte MultiPoint-BET-Bestimmungsmethode (MP-BET) in einem Partialdruckbereich p/p₀ von 0,05 bis 0,1 angewendet.

Zudem sollte die Aktivkohle einen Berstdruck von mindestens 5 Newton, insbesondere einen Berstdruck im Bereich von 5 Newton bis 50 Newton, pro Teilchen und/oder Partikel, aufweisen.

Weiterhin sollte die Aktivkohle ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen. Insbesondere sollte die Aktivkohle ein Adsorptionsvolumen V_{ads} im Bereich von 250 cm³/g bis 3.000 cm³/g, insbesondere im Bereich von 300 cm³/g bis 2.000 cm³/g, vorzugsweise im Bereich von 350 cm³/g bis 2.500 cm³/g, aufweisen.

Bei dem Adsorptionsvolumen V_{ads} handelt es sich um eine dem Fachmann wohlbekannte Größe zur Charakterisierung der eingesetzten partikulären Adsorptionsmaterialien. Auch die diesbezüglichen Bestimmungsmethoden sind dem Fachmann an sich wohlbekannt. Insbesondere handelt es sich bei dem Adsorptionsvolumen V_{ads} um das gewichtsbezogene adsorbierte N₂-Volumen, welches im Allgemeinen bei einem Partialdruck p/p₀ von 0,995 bestimmt wird.

Weiterhin sollte die Aktivkohle ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweisen. Insbesondere sollte die Aktivkohle ein Gesamtporenvolumen nach Gurvich im Bereich von 0,50 cm³/g bis 2,0 cm³/g, insbesondere im Bereich von 0,55 cm³/g bis 1,5 cm³/g, vorzugsweise im Bereich von 0,60 cm³/g bis 1,2 cm³/g, besonders bevorzugt im Bereich von 0,65 cm³/g bis 1,0 cm³/g, aufweisen.

Was die Bestimmung des Gesamtporenvolumens nach Gurvich anbelangt, so handelt es sich um eine dem Fachmann auf diesem Gebiet an sich bekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Zudem kann die Aktivkohle eine Gesamtporosität im Bereich von 10 % bis 80 %, insbesondere im Bereich von 20 % bis 75 %, vorzugsweise im Bereich von 25 % bis 70 %, bezogen auf das Teilchenvolumen der Aktivkohle, aufweisen.

Zudem sollte die Aktivkohle eine Abriebfestigkeit (*ball pan hardness*) von mindestens 90 %, insbesondere mindestens 95 %, vorzugsweise mindestens 97 %, besonders bevorzugt mindestens 98 %, ganz besonders bevorzugt mindestens 99 %, aufweisen. Die Abriebfestigkeit wird insbesondere gemäß der ASTM D3802-05 bestimmt. Die hohe Abriebfestigkeit führt zu geringen Abrieben der Aktivkohle insbesondere im Rahmen der zugrundeliegenden Transportvorgänge, was die Einsatzdauer gleichermaßen verlängert.

Weiterhin kann die Aktivkohle ein spezifisches Gesamtporenvolumen im Bereich von 0,01 cm³/g bis 4,0 cm³/g, insbesondere im Bereich von 0,1 cm³/g bis 3,0 cm³/g, vorzugsweise im Bereich von 0,2 cm³/g bis 2,0 cm³/g, aufweisen. In diesem Zusammenhang kann der Anteil an Poren mit Porendurchmessern von ≤ 75 Å, mindestens 65 %, insbesondere mindestens 70 %, vorzugsweise mindestens 75 %, betragen. Insbesondere kann die Aktivkohle, bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 Å, insbesondere von ≤ 25 Å, vorzugsweise von ≤ 20 Å, von mindestens 30 %, insbesondere mindestens 35 %, vorzugsweise mindestens 45 %, und/oder einen Anteil an Mikroporen, insbesondere an Mikroporen mit Porendurchmessern von ≤ 30 Å, insbesondere von ≤ 25 Å, vorzugsweise von ≤ 20 Å, im Bereich von 30 % bis 90 %, insbesondere im Bereich von 35 % bis 85 %, vorzugsweise im Bereich von 45 % bis 80 %, aufweisen.

Das Mikroporenvolumen kann insbesondere nach Carbon Black bestimmt werden. Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTO-SORB-1, AS1 WinVersion 1.50, Operating Manual, OM, 05061, Quantachrome Instruments 2004, Florida, USA, Seiten 71 ff.

Was das erfindungsgemäße Verfahren weiterhin anbelangt, so ist es vorgesehen, dass die Metallpräkursorverbindung (MP) und der Liganden-Präkursor (LP) in die Poren und/oder in das Porensystem der Aktivkohle eingebracht und/oder eingelagert werden. Insbesondere werden die Poren und/oder das Porensystem der Aktivkohle mit der Metallpräkursorverbindung (MP) und dem Liganden-Präkursor (LP) ausgerüstet.

In diesem Zusammenhang hat es sich als besonders vorteilhaft erwiesen, wenn die Metallpräkursorverbindung (MP) und der Liganden-Präkursor (LP), gemeinsam oder unabhängig voneinander, in Form mindestens einer wässrigen, wässrig-alkoholischen oder alkoholischen Lösung und/oder Dispersion, vorzugsweise in Form einer wässrig-alkoholischen oder alkoholischen Lösung und/oder Dispersion, eingesetzt werden. Auf Basis des Einsatzes der jeweiligen Komponenten in Form mindestens einer Lösung bzw. Dispersion wird eine besonders gute Einlagerung der jeweiligen Präkursoren in das Porensystem der Aktivkohle ermöglicht, was in der Folge zu einer gleichmäßigen Ausbildung und somit zu einer gleichmäßigen Beladung der Aktivkohle mit der metallorganischen Gerüstsubstanz führt.

Im Rahmen der vorliegenden Erfindung wird dabei insbesondere derart vorgegangen, dass das Einbringen und/oder Einlagern der Metallpräkursorverbindung (MP) und des Liganden-Präkursors (LP), gemeinsam oder unabhängig voneinander, in die Poren und/oder das Porensystem der Aktivkohle durch Tränken der Aktivkohle mit der mindestens einen Lösung und/oder Dispersion der Metallpräkursorverbindung (MP) und des Liganden-Präkursors (LP) erfolgt, vorzugsweise unter Eintrag von Scherkräften, bevorzugt unter Rühren. Im Rahmen der vorliegenden Erfindung kann es somit insbesondere vorgesehen sein, dass die Aktivkohle mit der mindestens einer Lösung und/oder Dispersion der Metallpräkursorverbindung (MP) und/oder des Liganden-Präkursors (LP) in Kontakt gebracht wird, beispielsweise durch Eintauchen der Aktivkohle in die Lösung und/oder Dispersion, vorzugsweise unter Eintrag von Scherkräften, beispielsweise durch Rühren, und auf dieser Basis ein Eindringen bzw. Infiltration der in Rede stehenden Lösung bzw. Dispersion in das Porensystem mit der jeweiligen Präkursorkomponente ermöglicht wird.

Wie nachfolgend noch im Detail ausgeführt, können dabei die jeweiligen Präkursorkomponenten, nämlich die Metallpräkursorverbindung (MP) und der Liganden-Präkursor (LP) in Form einer gemeinsamen Lösung und/oder Dispersion (welche somit die Metallpräkursorverbindung (MP) und den Liganden-Präkursors (LP) enthält) oder aber in Form von voneinander verschiedenen bzw. getrennten Lösungen bzw. Dispersionen (wobei die jeweilige Lösung und/oder Dispersion somit die Metallpräkursorverbindung (MP) oder den Liganden-Präkursors (LP) enthält) eingesetzt werden.

Im Rahmen der vorliegenden Erfindung kann das Einbringen bzw. die Infiltration der jeweiligen Komponenten kontinuierlich oder aber batchweise erfolgen, beispielsweise im Rahmen einer kontinuierlichen oder batchweisen Infiltration.

Was das Einbringen bzw. Einlagern der Präkursorkomponenten anbelangt, so hat es sich im Rahmen der vorliegenden Erfindung für besonders vorteilhaft erwiesen, wenn diesbezüglich derart vorgegangen wird, dass in den Poren bzw. in dem Porensystem die Metallpräkursorverbindung (MP) und der Liganden-Präkursor (LP), insbesondere das Metall, insbesondere Metallatom und/oder Metallion, der Metallpräkursorverbindung (MP) und der auf dem Liganden-Präkursor (LP) basierende Ligand bzw. der Liganden-Präkursor (LP) als solcher, in einem teilchenbezogenen Verhältnis [Verhältnis Metall : Ligand] im Bereich von 10 : 1 bis 1 : 5, insbesondere im Bereich von 5 : 1 bis 1 : 2, vorzugsweise im Bereich von 4:1 bis 1 : 1, bevorzugt im Bereich von 3 :1 bis 1,25 : 1, besonders bevorzugt etwa 3 : 2, vorliegt. Besonders bevorzugt sollte das Verhältnis etwa 3 : 2 betragen, da dies dem stöchiometrischen Verhältnis der jeweiligen Komponenten in dem resultierenden MOF-Material entspricht. Das Einstellen des in Rede stehenden Verhältnisses kann insbesondere durch Auswahl der jeweiligen Menge bzw. Konzentration der Präkursoren in der bzw. den Lösung(en) und/oder Dispersion(en) und/oder durch Auswahl der für die Infiltration eingesetzten Volumina eingestellt werden.

Im Allgemeinen kann im Rahmen des vorliegenden Verfahrens derart vorgegangen werden, dass die Aktivkohle und/oder die mindestens eine Lösung und/oder Dispersion der Metallpräkursorverbindung (MP) und/oder des Liganden-Präkursors (LP) insbesondere während des Einbringens und/oder Einlagerns eine Temperatur im Bereich von - 80 °C bis 50 °C, insbesondere im Bereich von - 60 °C bis 30 °C, vorzugsweise im Bereich von - 50 °C bis 20 °C, aufweist. Hierdurch wird eine vorzeitige Ausbildung des MOF-Materials verhindert und somit eine effektive Infiltration der Aktivkohle mit der jeweiligen Lösung bzw. Dispersion gewährleistet, so dass die nachfolgende Ausbildung des MOF-Materials in den Poren der Aktivkohle in gleichmäßiger Weise erfolgt.

Erfindungsgemäß hat es sich als vorteilhaft erwiesen, wenn die mindestens eine Lösung und/oder Dispersion ein volumenbezogenes Verhältnis von Alkohol zu Wasser [Verhältnis Alkohol : Wasser] im Bereich von 100 : 0 bis 0 : 100, insbesondere im Bereich von 99 : 1 bis 10 : 90, vorzugsweise im Bereich von 98 : 2 bis 25 : 75, bevorzugt im Bereich von 95 : 5 bis 50 : 50, besonders bevorzugt im Bereich von 90 : 10 bis 70 : 30, aufweist. Insbesondere sollte der Alkohol in Form von Ethanol eingesetzt wird. Hierdurch wird insbesondere ein gutes Auflösen der in Rede stehenden Präkursoren, einhergehend mit einer verbesserten Infiltration der Aktivkohle, gewährleistet. Die zuvor angeführten Verhältnisangaben beziehen sich dabei auf das Lösemittel als solches, d. h. ohne Zugabe der jeweiligen Präkursoren.

Im Allgemeinen kann die Lösung und/oder Dispersion die Metallpräkursorverbindung (MP) in Mengen im Bereich von 5 g/l bis 2.000 g/l, insbesondere im Bereich von 10 g/l bis 1.750 g/l, vorzugsweise im Bereich von 25 g/l bis 1.500 g/l, bevorzugt im Bereich von 50 g/l bis 1.300 g/l, enthalten. Insbesondere kann die Lösung und/oder Dispersion die Metallpräkursorverbindung (MP) in Mengen im Bereich von 0,5 Gew.-% bis 75 Gew.-%, insbesondere im Bereich von 1 Gew.-% bis 65 Gew.-%, vorzugsweise im Bereich von 2,5 Gew.-% bis 60 Gew.-%, bevorzugt im Bereich von 5 Gew.-% bis 55 Gew.-%, bezogen auf die Lösung und/oder Dispersion, enthalten.

Weiterhin kann die Lösung und/oder Dispersion den Liganden-Präkursor (LP) in Mengen im Bereich von 1 g/l bis 500 g/l, insbesondere im Bereich von 5 g/l bis 400 g/l, vorzugsweise im Bereich von 10 g/l bis 300 g/l, bevorzugt im Bereich von 20 g/l bis 200 g/l, enthalten. Im Übrigen kann die Lösung und/oder Dispersion den Liganden-Präkursor (LP) in Mengen im Bereich von 0,1 Gew.-% bis 50 Gew.-%, insbesondere im Bereich von 0,5 Gew.-% bis 40 Gew.-%, vorzugsweise im Bereich von 1 Gew.-% bis 30 Gew.-%, bevorzugt im Bereich von 2 Gew.-% bis 20 Gew.-%, bezogen auf die Lösung und/oder Dispersion, enthalten.

Im Rahmen der vorliegenden Erfindung ist es zudem vorgesehen, dass nach dem Einbringen und/oder Einlagern der Metallpräkursorverbindung (MP) und/oder des Liganden-Präkursors (LP) bzw. nach dem Inkontaktbringen der Aktivkohle mit der Lösung und/oder Dispersion mindestens eine Trocknung der Aktivkohle durchgeführt wird, insbesondere zur zumindest im Wesentlichen vollständigen Entfernung von Löse- und/oder Dispergiermittel aus den Poren und/oder dem Porensystem der Aktivkohle. Beispielsweise kann die Trocknung unter Unterdruckbeaufschlagung, insbesondere unter Vakuum, erfolgen. Gleichermaßen wird die Trocknung bei Temperaturen im Bereich von 0 °C bis 50 °C, insbesondere im Bereich von 5 °C bis 40 °C, vorzugsweise im Bereich von 10 °C bis 30 °C, bevorzugt bei etwa Raumtemperatur (T = 20 °C), durchgeführt.

Die Trocknung kann insbesondere dann durchgeführt werden, wenn im Rahmen der Infiltration das Porenvolumen der Aktivkohle vollständig mit der jeweiligen Lösung und/oder Dispersion gefüllt wurde. Durch das Trocknen wird insbesondere verhindert, dass im Rahmen der im Nachfolgenden noch beschriebenen thermischen Nachbehandlung Lösemittel mit den jeweiligen Präkursoren aus dem Porensystem entweicht, was zu einer weniger bevorzugten Benetzung der Oberfläche der Aktivkohle, einhergehend mit einer Produktabscheidung außerhalb der inneren Porenstruktur, führen würde.

Die Trocknung kann beispielsweise auch in einem Gasstrom (Luft oder Inertgas) insbesondere unter den zuvor angeführten Temperaturen erfolgen.

Was das erfindungsgemäße Verfahren weiterhin anbelangt, so kann insbesondere nach erfolgter Trocknung der Aktivkohle ein erneutes bzw. wiederholtes Einbringen bzw. Einlagern der Metallpräkursorverbindung (MP) und des Liganden-Präkursors (LP) in die Poren bzw. in das Porensystem der Aktivkohle durchgeführt werden, insbesondere wie zuvor beschrieben. Hierdurch kann die Beladungsmenge bzw. -dichte mit den jeweiligen Präkursoren in dem Porensystem der Aktivkohle gezielt erhöht werden.

In diesem Zusammenhang kann es im Rahmen der vorliegenden Erfindung gleichermaßen vorgesehen sein, dass der Verfahrensschritt des Einbringens bzw. Einlagern der Metallpräkursorverbindung (MP) und/oder des Liganden-Präkursors (LP), gegebenenfalls gefolgt von einer Trocknung der Aktivkohle, wiederholt wird. So kann das Einbringen bzw. Einlagern der jeweiligen Präkursoren, unabhängig voneinander, beispielsweise 1-mal, 2-mal, 3-mal, 4-mal usw. wiederholt werden, wobei, wie zuvor angeführt, zwischen den jeweiligen Einlagerungsschritten eine Trocknung der Aktivkohle vorgenommen werden kann. In diesem Zusammenhang erfolgt, wie ebenfalls zuvor angeführt, das Einlagern bzw. Einbringen gleichermaßen insbesondere durch Inkontaktbringen der Aktivkohle mit der mindestens einen Lösung bzw. Dispersion der Präkursoren, insbesondere mittels Eintauchen oder dergleichen, vorzugsweise unter Eintrag von Scherkräften, beispielsweise durch Rühren.

Im Allgemeinen kann nach dem Einbringen bzw. Einlagern der Metallpräkursorverbindung (MP) bzw. des Liganden-Präkursors (LP) bzw. nach gegebenenfalls durchgeführter Trocknung der Aktivkohle , vorzugsweise nach durchgeführter Trocknung der Aktivkohle, mindestens eine insbesondere thermische Nachbehandlung durchgeführt werden. Die thermische Nachbehandlung der Aktivkohle dient vorzugsweise zur Umwandlung bzw. Umsetzung der Metallpräkursorverbindung (MP), insbesondere des Metalls der Metallpräkursorverbindung (MP), mit dem Liganden-Präkursor (LP) bzw. des diesbezüglichen Ligandenbestandteils zu der metallorganischen Gerüstsubstanz (MOF-Material). Die Ausbildung der metallorganischen Gerüstsubstanz erfolgt dabei bevorzugt unter Ausbildung von insbesondere koordinativen Bindungen zwischen der Metallpräkursorverbindung (MP), insbesondere des Metalls der Metallpräkursorverbindung (MP), und dem Liganden-Präkursor (LP).

Was die thermische Nachbehandlung anbelangt, so wird diese bei einer Temperatur im Bereich von 10 °C bis 500 °C, insbesondere im Bereich von 20 °C bis 400 °C, bevorzugt im Bereich von 50 °C bis 300 °C, besonders bevorzugt im Bereich von 80 °C bis 200 °C, durchgeführt. Um eine gute Umsetzung der Präkursorverbindungen bzw. Ausgangssubstanzen zu dem MOF-Material zu erreichen, sollte die thermische Nachbehandlung für eine Zeitdauer im Bereich von 1 h bis 1.200 h, insbesondere im Bereich von 5 h bis 1.000 h, vorzugsweise im Bereich von 10 h bis 500 h, bevorzugt im Bereich von 20 h bis 200 h, durchgeführt werden. Dabei ist es von Vorteil, wenn die thermische Nachbehandlung unter zumindest im Wesentlichen nichtreaktiver, vorzugsweise zumindest im Wesentlichen inerter, Atmosphäre durchgeführt wird. Im Allgemeinen kann dabei derart verfahren werden, dass die Zeitdauer der thermischen Nachbehandlung umso größer gewählt wird, je niedriger die Behandlungstemperatur gewählt wird und *vice versa.*

Was das erfindungsgemäße Verfahren anbelangt, so führt die thermische Nachbehandlung insbesondere zu einer effektiven Umsetzung der Edukte auf Basis der Metallpräkursorverbindung (MP) einerseits und des Liganden-Präkursor (LP) andererseits in den Poren bzw. in dem Porensystem der Aktivkohle. Eine thermische Nachbehandlung sollte insbesondere bei mehrmaliger bzw. mehrstufiger Infiltration der Präkursorverbindungen bzw. Edukte ohne vorangehende Mischung der Edukte im Rahmen einer einzigen Lösung bzw. Dispersion durchgeführt werden. Ohne sich auf diese Theorie beschränken zu wollen, kann bei der thermischen Nachbehandlung eine Zersetzung der Metallpräkursorverbindung mit entsprechender Freisetzung des Metalls bzw. Metallatoms bzw. Metallions bzw. mehrkernigen Metallkomplexes vorliegen. Beispielsweise kann im Falle von Kupfernitrat als Metallquelle bei der insbesondere thermischen Nachbehandlung bzw. bei dem Tempern insbesondere bei höheren Temperaturen zumindest eine teilweise Zersetzung vorliegen, insbesondere wobei das Nitrat zu Stickoxiden umgesetzt werden kann, welche dann abgezogen werden sollten.

Im Allgemeinen ist es erfindungsgemäß bevorzugt, die thermische Nachbehandlung bei niedrigerer Temperatur und einer längeren Zeitdauer durchzuführen. Beispielsweise kann die Aktivkohle über einen Zeitraum von etwa 24 Stunden bei etwa 120 °C oder über einen Zeitraum von drei bis sieben Tagen bei etwa 80 °C nachbehandelt werden.

Darüber hinaus kann im Rahmen des erfindungsgemäßen Verfahrens eine Wasch- bzw. Aufreinigung insbesondere der erhaltenen, mit dem MOF-Material ausgerüsteten Aktivkohle durchgeführt werden:
Insbesondere kann es im Rahmen der vorliegenden Erfindung vorgesehen sein, dass nach dem Einbringen bzw. Einlagern der Metallpräkursorverbindung (MP) bzw. des Liganden-Präkursors (LP) bzw. nach gegebenenfalls durchgeführter Trocknung der Aktivkohle und/oder nach gegebenenfalls durchgeführter thermischer Nachbehandlung der Aktivkohle, vorzugsweise nach thermischer Nachbehandlung der Aktivkohle, mindestens ein Wasch- und/oder Aufreinigungsschritt der Aktivkohle, insbesondere zur Entfernung von nichtumgesetzter Metallpräkursorverbindung (MP) und/oder insbesondere zur Entfernung von nichtumgesetztem Liganden-Präkursor (LP), durchgeführt wird. Das Waschen bzw. die Aufreinigung der Aktivkohle kann dabei unter Verwendung mindestens eines Wasch- bzw. Aufreinigungsmittels erfolgen.

In erfindungsgemäß bevorzugter Weise kann das Waschen bzw. die Aufreinigung unter Verwendung von Wasser und/oder Alkohol, insbesondere Ethanol, als Wasch- bzw. Aufreinigungsmittel durchgeführt werden. Insbesondere kann nach erfolgtem Waschen bzw. nach erfolgter Aufreinigung der Aktivkohle mindestens eine weitere Trocknung der Aktivkohle, insbesondere wie zuvor beschrieben, durchgeführt werden. Neben nichtumgesetzten Edukten können auch insbesondere gegebenenfalls im Rahmen der thermischen Nachbehandlung anfallende Abfallprodukte aus dem Porensystem entfernt werden.

Durch das Waschen bzw. die Aufreinigung werden somit insbesondere nichtumgesetzte Edukte sowie im Rahmen der Ausbildung des MOF-Materials gegebenenfalls anfallende Abfallprodukte aus dem Porensystem der Aktivkohle entfernt, wodurch ein Verstopfen der Aktivkohleporen bzw. Substratporen verhindert wird. Zudem wird durch die erfindungsgemäße Vorgehensweise eine Abgabe bzw. Freisetzung von nichtumgesetzten Edukten bzw. Abfallprodukten aus dem Porensystem insbesondere unter Einsatzbedingungen, beispielsweise im Falle eines Einflusses von Feuchtigkeit bzw. Körperschweiß im Rahmen der Verwendung von Schutzanzügen, verhindert.

Für kleinere Mengen an mit dem MOF-Material ausgerüsteter Aktivkohle, insbesondere bei Mengen mit einem Schüttvolumen bis etwa 500 ml, kann beispielsweise eine sogenannte Soxhletextraktion insbesondere mit Ethanol durchgeführt werden, was mit einem geringen Lösemittelverbrauch einhergeht und somit mit verfahrenstechnischen Vorteilen verbunden ist. Für größere Mengen an mit dem MOF-Material ausgerüsteter Aktivkohle, beispielsweise bei Mengen mit einem Schüttvolumen von 10 I oder mehr, kann insbesondere ein zweistufiger Waschprozess durchgeführt werden, wobei diesbezüglich sowohl ein alkoholisches Aufreinigungsmittel, insbesondere Ethanol, vorzugsweise zum Herauslösen von nichtumgesetzten Liganden-Präkursor (LP) als auch Wasser, insbesondere zum Herauslösen von nichtumgesetzter Metallpräkursorverbindung (MP), eingesetzt werden kann. Insbesondere erfolgt in diesem Zusammenhang ein erster Waschschritt unter Verwendung von Wasser als Lösemittel, gefolgt von einem ein- bis mehrmaligen Waschschritt mit Alkohol, insbesondere Ethanol. Es ist jedoch auch möglich, die Waschschritte in umgekehrter Reihenfolge durchzuführen, d.h. zuerst mit Alkohol und anschließend mit Wasser.

Darüber hinaus kann es im Rahmen der vorliegenden Erfindung vorgesehen sein, eine insbesondere mechanische Oberflächenreinigung der mit dem MOF-Material ausgerüsteten Aktivkohle durchzuführen.

Insbesondere kann es in diesem Zusammenhang vorgesehen sein, dass nach dem Einbringen bzw. Einlagern der Metallpräkursorverbindung (MP) bzw. des Liganden-Präkursors (LP) bzw. nach gegebenenfalls durchgeführter Trocknung der Aktivkohle bzw. nach gegebenenfalls durchgeführter thermischer Nachbehandlung der Aktivkohle bzw. nach gegebenenfalls durchgeführtem Waschen, vorzugsweise nach gegebenenfalls durchgeführtem Waschen und/oder durchgeführter Aufreinigung, eine insbesondere mechanische Oberflächenreinigung der Aktivkohle durchgeführt wird, insbesondere mittels gegenseitigem Aneinanderreiben der Aktivkohlepartikel, gegebenenfalls gefolgt von einer weiteren Trocknung, insbesondere wie zuvor beschrieben.

Insbesondere kann die nach dem Wasch- bzw. Aufreinigungsschritt erhaltene Aktivkohle zunächst durch Abtropfen, Abdekantieren bzw. Absaugen von größeren Mengen an Lösemittel befreit werden. Nachfolgend kann eine Oberflächentrocknung der Aktivkohle durchgeführt werden, insbesondere im Luftstrom, vorzugsweise unter Inertgasbedingungen, wobei eine Verwirbelung der Aktivkohlepartikel mit gegenseitigem Aneinanderreiben der einzelnen Partikel erfolgt, so dass auf diese Weise eine Oberflächenreinigung stattfindet. Dabei können gegebenenfalls freigesetzter Staub bzw. abgelöste Verunreinigungen durch den Luftstrom abtransportiert bzw. entfernt werden. Eine abschließende Trocknung der auf diese Weise an der Oberfläche gereinigten Aktivkohle kann beispielsweise unter Unterdruckbeaufschlagung, beispielsweise in einem Vakuumtrockenschrank, bei Temperaturen in Bereich von 50 bis 150 °C erfolgen.

Im Rahmen des erfindungsgemäßen Verfahrens können die vorangehenden Schritte, insbesondere das Einbringen bzw. Einlagern der Metallpräkursorverbindung (MP) bzw. des Liganden-Präkursors (LP), die Trocknung der Aktivkohle, die insbesondere thermische Nachbehandlung, das Waschen bzw. Aufreinigen sowie die insbesondere mechanische Oberflächenaufreinigung wiederholt werden, wobei die Schritte in der zuvor angeführten Abfolge, gegebenenfalls unter Auslassung einzelner Schritte bzw. Behandlungen, 1-mal, 2-mal, 3-mal, 4-mal usw. wiederholt werden können. Auf diese Weise kann insgesamt die Beladungsmenge an MOF-Material in dem Porensystem der Aktivkohle bzw. der Porenfüllgrad mit dem MOF-Material erhöht werden.

Weiterhin kann es im Rahmen der vorliegenden Erfindung vorgesehen sein, dass in einem weiteren Schritt eine Aktivierung der metallorganischen Gerüstsubstanz (MOF-Material) durchgeführt wird. Hierzu kann die mit der metallorganischen Gerüstsubstanz (MOF-Material) ausgerüstetete Aktivkohle einer Wärme- bzw. Aktivierungsbehandlung unterzogen werden. Die Wärme- bzw. Aktivierungsbehandlung kann bei Temperaturen unterhalb der Zersetzungstemperatur, insbesondere bei Temperaturen im Bereich von 90 °C bis 300 °C, vorzugsweise im Bereich von 100 °C bis 250 °C, bevorzugt im Bereich von 110 °C bis 220 °C, durchgeführt werden. Die diesbezügliche Zeitdauer kann in einem Bereich von 0,1 bis 48 Stunden, insbesondere im Bereich von 1 bis 30 Stunden, bevorzugt im Bereich von 5 bis 24 Stunden, liegen. Insbesondere kann die Wärme- bzw. Aktivierungsbehandlung unter zumindest im Wesentlichen nichtreaktiver, vorzugsweise zumindest im Wesentlichen inerter, Atmosphäre oder aber in oxidierender Atmosphäre durchgeführt werden.

Durch die gewissermaßen nachgeschaltete Wärme- bzw. Aktivierungsbehandlung der mit dem MOF-Material ausgerüsteten Aktivkohle, welche insbesondere abschließend nach vorangehender Durchführung der zuvor angeführten Behandlungsschritte durchgeführt wird, können besonders vorteilhafte Eigenschaften in Bezug auf die erhaltene Aktivkohle erreicht werden. Denn eine insbesondere thermische Aktivierung des in dem Porensystem gebildeten MOF-Materials kann im Allgemeinen - ohne sich auf diese Theorie beschränken zu wollen - zu einer Erhöhung der inneren Oberfläche bzw. optimierten räumlichen Ausbildung des MOF-Materials führen. Die Wärme- bzw. Aktivierungsbehandlung kann entweder oder zumindest im Wesentlichen in nichtreaktiver, vorzugsweise im Wesentlichen inerter, Atmosphäre oder aber in oxidierender Atmosphäre, beispielsweise in Gegenwart von Sauerstoff, z. B. unter Umgebungsatmosphäre, durchgeführt werden. Durch die Wärme- bzw. Aktivierungsbehandlung werden die Adsorptionseigenschaften der auf diese Weise behandelten Aktivkohle weiter verbessert. Wie zuvor angeführt, kann die Wärme- bzw. Aktivierungsbehandlung insbesondere als Abschlussbehandlung im Rahmen der Herstellung der mit dem MOF-Material ausgerüsteten Aktivkohle durchgeführt werden.

Im Folgenden werden bevorzugte Ausführungsformen des erfindungsgemäßen Verfahrens im Detail erläutert:
Insbesondere kann es im Rahmen der vorliegenden Erfindung vorgesehen sein, dass die Aktivkohle in Bezug auf das Einbringen bzw. das Einlagern der jeweiligen Präkursoren mit einer gemeinsamen Lösung bzw. Dispersion der Metallpräkursorverbindung (MP) einerseits und des Liganden-Präkursors (LP) behandelt wird, d.h. unter Verwendung einer Lösung und/oder Dispersion, welche die Metallpräkursorverbindung (MP) und den Liganden-Präkursors (LP) enthält.

Somit sollte gemäß dieser Ausführungsform die Lösung und/oder Dispersion die Metallpräkursorverbindung (MP) und den Liganden-Präkursor (LP) enthalten. In diesem Zusammenhang kann das Einbringen bzw. Einlagern der Metallpräkursorverbindung (MP) und des Liganden-Präkursors (LP) in die Poren und/oder das Porensystem der Aktivkohle durch Tränken und/oder Infiltrieren und/oder Imprägnieren der Aktivkohle mit der (gemeinsamen) Lösung und/oder Dispersion der Metallpräkursorverbindung (MP) und des Liganden-Präkursors (LP) erfolgen.

Was den Einsatz einer gemeinsamen Lösung bzw. Dispersion der jeweiligen Präkursorkomponenten weiterhin anbelangt, so sollte die die Metallpräkursorverbindung (MP) und den Liganden-Präkursor (LP) enthaltende Lösung und/oder Dispersion das Metall, insbesondere Metallatom oder Metallion, der Metallpräkursorverbindung (MP) und den Liganden des Liganden-Präkursors (LP) in einem teilchenbezogenen Verhältnis [Verhältnis Metall : Ligand] im Bereich von 10 : 1 bis 1 : 5, insbesondere im Bereich von 5 : 1 bis 1 : 2, vorzugsweise im Bereich von 4 : 1 bis 1 : 1, bevorzugt im Bereich von 3 : 1 bis 1,25 : 1, besonders bevorzugt im Bereich von etwa 3 : 2, enthalten.

Die in diesem Zusammenhang eingesetzte Lösung bzw. Dispersion beider Präkursoren enthält somit sämtliche Komponenten in ein und derselben Lösung bzw. Dispersion, welche für die Herstellung der metallorganischen Gerüstsubstanz in den Poren bzw. in dem Porensystem der Aktivkohle erforderlich sind. Beispielsweise können für die Herstellung eines MOF-Materials in Form von Cu₃(BTC)₂ Kupfernitrat (Cu(NO₃)₂) als Metallpräkursorverbindung (MP) und Trimesinsäure (H₃BTC) als Liganden-Präkursor (LP) eingesetzt werden, welche beispielsweise in wässriger, wässrig-alkoholischer oder alkoholischer Lösung, bevorzugt in Ethanol oder in einem Alkohol/Wasser-Gemisch, bevorzugt Ethanol/Wasser-Gemisch, gelöst bzw. dispergiert werden.

Insbesondere kann die die Metallpräkursorverbindung (MP) und den Liganden-Präkursor (LP) enthaltende Lösung und/oder Dispersion durch Inkontaktbringen, insbesondere Vermischen und/oder Vermengen, einer ersten, die Metallpräkursorverbindung (MP) enthaltenden Lösung und/oder Dispersion und einer zweiten, den Liganden-Präkursor (LP) enthaltenden Lösung und/oder Dispersion erhalten werden. Die gemeinsame Lösung der jeweiligen Präkursoren kann somit ausgehend von jeweiligen Einzellösungen, welche jeweils die Metallpräkursorverbindung (MP) oder den Liganden-Präkursor (LP) enthalten, erhalten werden, insbesondere durch Inkontaktbringen, vorzugsweise Vermischen der jeweiligen Einzellösungen bzw. -dispersionen zum Erhalt der gemeinsamen Lösung und/oder Dispersion.

In Bezug auf die Verwendung einer gemeinsamen Lösung und/oder Dispersion, welche sowohl die Metallpräkursorverbindung (MP) als auch den Liganden-Präkursor (LP) enthält, kann gemäß einer weiteren erfindungsgemäßen Ausführungsform nach Art bzw. auf Basis eines Raumtemperatur-Verfahrens vorgegangen werden:
In diesem Zusammenhang kann, was die zur Bereitstellung der gemeinsamen Lösung gegebenenfalls vorliegenden Einzellösungen anbelangt, die erste die Metallpräkursorverbindung (MP) enthaltende Lösung und/oder Dispersion und die zweite den Liganden-Präkursor (LP) enthaltende Lösung und/oder Dispersion, unabhängig voneinander, eine Temperatur im Bereich von 0 °C bis 50 °C, insbesondere im Bereich von 5 °C bis 40 °C, bevorzugt im Bereich von 10 °C bis 30 °C, besonders bevorzugt etwa Raumtemperatur (T = 20 °C), aufweisen. Insbesondere kann die erste die Metallpräkursorverbindung (MP) enthaltende Lösung und/oder Dispersion und die zweite den Liganden-Präkursor (LP) enthaltende Lösung und/oder Dispersion, unabhängig voneinander, bei einer Temperatur im Bereich von 0 °C bis 50 °C, insbesondere im Bereich von 5 °C bis 40 °C, bevorzugt im Bereich von 10 °C bis 30 °C, besonders bevorzugt etwa Raumtemperatur (T = 20 °C), hergestellt und/oder zum Erhalt der die Metallpräkursorverbindung (MP) und den Liganden-Präkursor (LP) enthaltenden Lösung und/oder Dispersion zusammengeführt bzw. vermischt werden.

In diesem Zusammenhang sollte die erste die Metallpräkursorverbindung (MP) enthaltende Lösung und/oder Dispersion die Metallpräkursorverbindung (MP) in Mengen im Bereich von 5 g/l bis 500 g/l, insbesondere im Bereich von 10 g/l bis 300 g/l, vorzugsweise im Bereich von 25 g/l bis 200 g/l, bevorzugt im Bereich von 50 g/l bis 100 g/l, enthalten. Insbesondere sollte die erste die Metallpräkursorverbindung (MP) enthaltende Lösung und/oder Dispersion die Metallpräkursorverbindung (MP) in Mengen im Bereich von 0,5 Gew.-% bis 30 Gew.-%, insbesondere im Bereich von 1 Gew.-% bis 20 Gew.-%, vorzugsweise im Bereich von 2,5 Gew.-% bis 15 Gew.-%, bevorzugt im Bereich von 5 Gew.-% bis 10 Gew.-%, bezogen auf die Lösung und/oder Dispersion, enthalten.

Darüber hinaus sollte die zweite den Liganden-Präkursor (LP) enthaltende Lösung und/oder Dispersion den Liganden-Präkursor (LP) in Mengen im Bereich von 5 g/l bis 500 g/l, insbesondere im Bereich von 10 g/l bis 300 g/l, vorzugsweise im Bereich von 25 g/l bis 200 g/l, bevorzugt im Bereich von 30 g/l bis 100 g/l, enthalten. Insbesondere sollte die den Liganden-Präkursor (LP) enthaltende Lösung und/oder Dispersion den Liganden-Präkursor (LP) in Mengen im Bereich von 0,5 Gew.-% bis 30 Gew.-%, insbesondere im Bereich von 1 Gew.-% bis 20 Gew.-%, vorzugsweise im Bereich von 2,5 Gew.-% bis 15 Gew.-%, bevorzugt im Bereich von 3 Gew.-% bis 10 Gew.-%, bezogen auf die Lösung und/oder Dispersion, enthalten.

Im Rahmen der Durchführung des erfindungsgemäßen Verfahrens auf Basis des zuvor angeführten Raumtemperatur-Verfahrens ist es von Vorteil, wenn die erste Lösung und/oder Dispersion und/oder die zweite Lösung und/oder Dispersion, unabhängig voneinander, einen Alkohol, insbesondere Ethanol, als Lösungsmittel aufweist bzw. aufweisen bzw. das in Bezug auf die erste Lösung und/oder Dispersion sowie auf die zweite Lösung und/oder Dispersion, unabhängig voneinander, als Lösemittel ein Alkohol, insbesondere Ethanol, eingesetzt wird.

Im Rahmen dieser erfindungsgemäßen Ausführungsform auf Basis des Raumtemperatur-Verfahrens unter Verwendung einer gemeinsamen Lösung und/oder Dispersion der Präkursoren insbesondere ausgehend von den jeweiligen Einzellösungen bzw. -dispersionen sollte insbesondere vorgegangen werden derart, dass die durch Zusammenführen der Einzellösungen erhaltene gemeinsame Lösung und/oder Dispersion unmittelbar oder nach einer Zeitdauer von 1 Sekunde bis 60 Sekunden, insbesondere 1 Sekunde bis 30 Sekunden, vorzugsweise 1 Sekunde bis 10 Sekunden, nach Zusammenführen bzw. Inkontaktbringen, insbesondere Vermischen und/oder Vermengen, der ersten die Metallpräkursorverbindung (MP) enthaltenden Lösung und/oder Dispersion und der zweiten den Liganden-Präkursor (LP) enthaltenden Lösung und/oder Dispersion mit der Aktivkohle in Kontakt gebracht wird und/oder in die Poren und/oder das Porensystem der Aktivkohle eingebracht und/oder eingelagert wird. Wie zuvor angeführt, kann dies durch Inkontaktbringen, insbesondere Eintauchen der zu behandelnden Aktivkohle in die in Rede stehende Lösung und/oder Dispersion, vorzugsweise unter Eintrag von Scherkräften, wie Rühren, erfolgen.

Im Rahmen der erfindungsgemäßen Verfahrensführung auf Basis des zuvor angeführten Raumtemperatur-Verfahrens kann insbesondere somit derart vorgegangen werden, dass die Metallpräkursorverbindung (MP), insbesondere Kupfernitrat (beispielsweise in Wasser) und der Liganden-Präkursor (LP), insbesondere Trimesinsäure (vorzugsweise in Ethanol), gelöst werden. Die jeweiligen Lösungen bzw. Dispersionen können dann insbesondere bei Raumtemperatur vereinigt werden, wobei sich eine unmittelbare Infiltration der Aktivkohle mit der so erhaltenen gemeinsamen Lösung und/oder Dispersion anschließt.

Ein wesentlicher Vorteil der Verfahrensführung auf Basis einer gemeinsamen Lösung der Präkursorkomponenten auf Basis des angeführten Raumtemperatur-Verfahrens ist im Allgemeinen in einer einfachen Verfahrensführung zu sehen.

Gemäß einer weiteren erfindungsgemäß bevorzugten Ausführungsform kann das erfindungsgemäße Verfahren auf Basis der Verwendung einer gemeinsamen Lösung bzw. Dispersion der Präkursoren auch im Rahmen eines sogenannten Tieftemperatur-Verfahrens durchgeführt werden, wie nachfolgend geschildert.

Was die zur Bereitstellung der gemeinsamen Lösung gegebenenfalls vorliegenden Einzellösungen anbelangt, so sollte die erste die Metallpräkursorverbindung (MP) enthaltende Lösung und/oder Dispersion und die zweite den Liganden-Präkursor (LP) enthaltende Lösung und/oder Dispersion, unabhängig voneinander, eine Temperatur im Bereich von - 80 °C bis 0 °C, insbesondere im Bereich von - 60 °C bis - 5 °C, bevorzugt im Bereich von - 40 °C bis - 10 °C, aufweisen. Zudem sollte die erste die Metallpräkursorverbindung (MP) enthaltende Lösung und/oder Dispersion und die zweite den Liganden-Präkursor (LP) enthaltende Lösung und/oder Dispersion, unabhängig voneinander, bei einer Temperatur im Bereich von - 80 °C bis 0 °C, insbesondere im Bereich von - 60 °C bis - 5 °C, bevorzugt im Bereich von - 40 °C bis - 10 °C, hergestellt und/oder zum Erhalt der die Metallpräkursorverbindung (MP) und den Liganden-Präkursor (LP) enthaltenden Lösung und/oder Dispersion zusammengeführt bzw. vermischt werden.

In diesem Zusammenhang sollte die erste die Metallpräkursorverbindung (MP) enthaltende Lösung und/oder Dispersion die Metallpräkursorverbindung (MP) in Mengen im Bereich von 10 g/l bis 1.500 g/l, insbesondere im Bereich von 20 g/l bis 1.200 g/l, vorzugsweise im Bereich von 50 g/l bis 1.100 g/l, bevorzugt im Bereich von 100 g/l bis 1.000 g/l, enthalten. Zudem sollte die erste die Metallpräkursorverbindung (MP) enthaltende Lösung und/oder Dispersion die Metallpräkursorverbindung (MP) in Mengen im Bereich von 1 Gew.-% bis 60 Gew.-%, insbesondere im Bereich von 2 Gew.-% bis 50 Gew.-%, vorzugsweise im Bereich von 5 Gew.-% bis 45 Gew.-%, bevorzugt im Bereich von 10 Gew.-% bis 40 Gew.-%, bezogen auf die Lösung und/oder Dispersion, enthalten.

Darüber hinaus sollte die zweite den Liganden-Präkursor (LP) enthaltende Lösung und/oder Dispersion den Liganden-Präkursor (LP) in Mengen im Bereich von 10 g/l bis 700 g/l, insbesondere im Bereich von 15 g/l bis 500 g/l, vorzugsweise im Bereich von 30 g/l bis 400 g/l, bevorzugt im Bereich von 40 g/l bis 200 g/l, enthalten. Gleichermaßen sollte die den Liganden-Präkursor (LP) enthaltende Lösung und/oder Dispersion den Liganden-Präkursor (LP) in Mengen im Bereich von 1 Gew.-% bis 40 Gew.-%, insbesondere im Bereich von 1,5 Gew.-% bis 30 Gew.-%, vorzugsweise im Bereich von 3 Gew.-% bis 25 Gew.-%, bevorzugt im Bereich von 4 Gew.-% bis 20 Gew.-%, bezogen auf die Lösung und/oder Dispersion, enthalten.

In erfindungsgemäß bevorzugter Weise werden die jeweiligen Lösung und/oder Dispersion dabei unter Verwendung eines Alkohols, insbesondere Ethanol, bzw. unter Einsatz eines Alkohol/Wasser-Gemischs, insbesondere eines Ethanol/Wasser-Gemischs, erhalten.

Was das Zusammenführen der jeweiligen Lösungen und/oder Dispersionen und das nachfolgende Inkontaktbringen der resultierenden gemeinsamen Lösung und/oder Dispersion mit der Aktivkohle anbelangt, so hat es sich im Rahmen der vorliegenden Erfindung als vorteilhaft erwiesen, wenn die die Metallpräkursorverbindung (MP) und den Liganden-Präkursor (LP) enthaltende Lösung und/oder Dispersion unmittelbar oder nach einer Zeitdauer von 1 Sekunde bis 600 Sekunden, insbesondere 1 Sekunde bis 300 Sekunden, vorzugsweise 1 Sekunde bis 100 Sekunden, nach Inkontaktbringen, insbesondere Vermischen und/oder Vermengen, der ersten die Metallpräkursorverbindung (MP) enthaltenden Lösung und/oder Dispersion und der zweiten den Liganden-Präkursor (LP) enthaltenden Lösung und/oder Dispersion mit der Aktivkohle in Kontakt gebracht wird und/oder in die Poren und/oder das Porensystem der Aktivkohle eingebracht und/oder eingelagert wird.

Was die zuvor beschriebene Verfahrensführung auf Basis des Tieftemperatur-Verfahrens anbelangt, so kann diesbezüglich zusammenfassend insgesamt derart vorgegangen werden, dass die jeweiligen Präkursoren bzw. Edukte, nämlich die Metallpräkursorverbindung (MP), insbesondere Kupfernitrat, und der Liganden-Präkursor (LP), insbesondere Trimesinsäure, zunächst voneinander getrennt in Ethanol bzw. einem Ethanol/Wasser-Gemisch gelöst bzw. dispergiert werden, wobei diesbezüglich in erfindungsgemäß bevorzugter Weise ein Ethanol/Wasser-Gemisch mit einem Volumenverhältnis von 80 : 20 (Ethanol/Wasser-Verhältnis) eingesetzt wird. Vor dem Zusammenführen bzw. Vermischen sollten die jeweiligen Lösungen heruntergekühlt werden, insbesondere auf die zuvor angeführten Temperaturen. Das Herunterkühlen der entsprechenden Lösungen bzw. die Verfahrensführung bei niedrigen Temperaturen hat insbesondere den Vorteil, dass die ausgehend von den jeweiligen Einzellösungen bzw. -dispersionen erhaltene gemeinsame Lösung bzw. Dispersion, welche beide Präkursoren enthält, stabil ist und über mehrere Stunden eingesetzt werden kann. Erfindungsgemäß bevorzugte Mischungs- und Verarbeitungstemperaturen liegen dabei im Bereich von -20 °C bis -30 °C. Insbesondere sollte die Infiltration der Aktivkohle mit der gemeinsamen Lösung bzw. Dispersion durchgeführt werden, bevor eine signifikante Erwärmung der entsprechenden Lösung und/oder Dispersion erfolgt.

Ein zentraler Vorteil der erfindungsgemäßen Verfahrensführung auf Basis einer gemeinsamen Lösung und/oder Dispersion im Rahmen des zuvor angeführten Tieftemperatur-Verfahrens ist somit insbesondere darin zu sehen, dass die Verarbeitungszeiten verlängert sind, was gleichermaßen mit verfahrenstechnischen Vorteilen einhergeht.

Gemäß einer gleichermaßen bevorzugten, weiteren Ausführungsform des erfindungsgemäßen Verfahrens kann im Rahmen der vorliegenden Erfindung auch eine zweistufige Behandlung bzw. ein zweistufiges Einbringen der Präkursorkomponenten in das Porensystem der Aktivkohle auf Basis von separaten Lösungen, insbesondere durch aufeinanderfolgendes Inkontaktbringen der Aktivkohle mit der jeweiligen Lösung und/oder Dispersion, durchgeführt werden. Gemäß dieser Ausführungsform erfolgt das Einbringen der Präkursoren somit auf Basis von voneinander getrennten Lösungen und/oder Dispersionen, wobei die jeweiligen Lösungen bzw. Dispersionen entweder die Metallpräkursorverbindung (MP) oder den Liganden-Präkursor (LP) aufweisen.

In diesem Zusammenhang sollte im Rahmen der zweistufigen Verfahrensführung die Metallpräkursorverbindung (MP) und der Liganden-Präkursor (LP) somit in Form von voneinander getrennten und/oder separaten Lösungen und/oder Dispersionen eingesetzt werden. Insbesondere sollte eine erste Lösung und/oder Dispersion die Metallpräkursorverbindung (MP) und eine zweite Lösung und/oder Dispersion den Liganden-Präkursor (LP) enthalten.

Im Rahmen des erfindungsgemäßen Verfahrens gemäß dieser bevorzugten Ausführungsform sollte das Einbringen bzw. Einlagern der Metallpräkursorverbindung (MP) und/oder des Liganden-Präkursors (LP) in die Poren und/oder das Porensystem der Aktivkohle durch aufeinanderfolgendes Tränken und/oder Infiltrieren und/oder Imprägnieren der Aktivkohle mit den voneinander getrennten und/oder separaten Lösungen und/oder Dispersionen der Metallpräkursorverbindung (MP) einerseits und des Liganden-Präkursors (LP) andererseits erfolgen. In diesem Zusammenhang hat es sich im Rahmen der vorliegenden Erfindung als vorteilhaft erwiesen, wenn zwischen dem jeweiligen Einbringen und/oder Einlagern eine Trocknung der Aktivkohle, insbesondere wie zuvor definiert, durchgeführt wird. Mit anderen Worten wird gemäß dieser erfindungsgemäßen Ausführungsform derart vorgegangen, dass die Aktivkohle zunächst mit dem einen Präkursor und nachfolgend mit dem anderen Präkursor ausgestattet wird, insbesondere, wie zuvor beschrieben durch aufeinanderfolgendes Inkontaktbringen mit der jeweiligen Lösung und/oder Dispersion.

Insbesondere kann es erfindungsgemäß vorgesehen sein, dass zunächst die Metallpräkursorverbindung (MP) in die Poren und/oder das Porensystem der Aktivkohle eingebracht und/oder eingelagert wird, insbesondere durch Tränken und/oder Infiltrieren und/oder Imprägnieren der Aktivkohle mit der die Metallpräkursorverbindung (MP) enthaltenden Lösung und/oder Dispersion, gegebenenfalls gefolgt von einer Trocknung der Aktivkohle, insbesondere zuvor beschrieben, wobei nachfolgend der Liganden-Präkursor (LP) in die Poren und/oder das Porensystem der Aktivkohle eingebracht und/oder eingelagert wird, insbesondere durch Tränken und/oder Infiltrieren und/oder Imprägnieren der Aktivkohle mit der den Liganden-Präkursor (LP) enthaltenden Lösung und/oder Dispersion.

Insbesondere kann nach dem Einbringen und/oder Einlagern der Metallpräkursorverbindung (MP) in die Poren und/oder das Porensystem der Aktivkohle auch eine Umsetzung und/oder Umwandlung und/oder Zersetzung der Metallpräkursorverbindung (MP) zu einem Metalloxid durchgeführt werden. In diesem Zusammenhang sollte die Umsetzung und/oder Umwandlung und/oder Zersetzung unter Inertgasatmosphäre und/oder bei einer Temperatur im Bereich von 100 °C bis 1.000 °C, insbesondere im Bereich von 150 °C bis 950 °C, bevorzugt im Bereich von 200 °C bis 920 °C, durchgeführt werden. Auf Basis dieser erfindungsgemäßen Ausführungsform können in dem Porensystem in gezielter Weise z. B. Metalloxide generiert werden, welche als solche den metallischen Teil des resultierenden MOF-Materials darstellen können bzw. welche als solche durch den Liganden zu dem MOF-Material komplexiert werden, insbesondere durch Ausbildung koordinativer Bindungen.

In diesem Zusammenhang kann es erfindungsgemäß vorgesehen sein, dass die Metallpräkursorverbindung (MP) ausgewählt wird aus der Gruppe von Kupfernitrat (Cu(NO₃)₂) und basischen Kupferverbindungen, insbesondere basischem Kupfercarbonat (CuCO₃ · Cu(OH)₂). Insbesondere für diesen Fall kann die Umsetzung und/oder Umwandlung und/oder Zersetzung der Metallpräkursorverbindung (MP) zu dem Metalloxid bei einer Temperatur bis 400 °C und/oder bei einer Temperatur im Bereich von 200 °C bis 400 °C durchgeführt werden. Diesbezüglich wird als Metalloxid insbesondere mindestens ein Kupferoxid, insbesondere Kupfer(II)-oxid (CuO), erhalten.

Alternativ kann die Umsetzung und/oder Umwandlung und/oder Zersetzung der Metallpräkursorverbindung (MP) zu dem Metalloxid bei einer Temperatur von mehr als 400 °C und/oder bei einer Temperatur im Bereich von 400 °C bis 920 °C durchgeführt werden. In diesem Zusammenhang resultiert als Metalloxid insbesondere mindestens ein Kupferoxid, insbesondere Kupfer(I)-oxid (Cu₂O).

Gemäß dieser erfindungsgemäßen Ausführungsform wird die Aktivkohle somit zunächst mit einer Metallquelle auf Basis der Metallpräkursorverbindung (MP), vorzugsweise mit einer Kupferquelle, infiltriert, wobei es sich diesbezüglich beispielsweise um vorzugsweise basisches Kupfercarbonat handelt. Nach der Infiltration kann dann eine thermische Behandlung, insbesondere einhergehend mit einer Trocknung der Aktivkohle, erfolgen, bei welcher sich in Abhängigkeit von der Temperatur voneinander verschiedene Kupferspezies bilden können. Eine höhere Temperatur, wie zuvor angeführt, führt dabei insbesondere zu oxidischen Kupferspezies, wie Kupfer(I)-oxid und Kupfer(II)-oxid, wobei die resultierenden Metalloxide dann im Rahmen nachfolgender Schritte, insbesondere im Zusammenhang mit der nachfolgenden Ausrüstung der Aktivkohle mit dem Liganden-Präkursor (LP), zu dem MOF-Material komplexiert werden. In diesem Zusammenhang kann als Liganden-Präkursor (LP) beispielsweise gleichermaßen Trimesinsäure verwendet werden, vorzugsweise in Form einer Lösung und/oder Dispersion, insbesondere unter Verwendung eines Ethanol/Wasser-Gemischs als Lösemittel.

Gemäß einer weiteren Ausführungsform des erfindungsgemäßen Verfahrens gemäß der zweistufigen Infiltration auf Basis von mindestens zwei verschiedenen Lösungen und/oder Dispersionen kann zudem derart vorgegangen werden, dass zunächst der Liganden-Präkursor (LP) in die Poren und/oder das Porensystem der Aktivkohle eingebracht und/oder eingelagert wird, insbesondere durch Tränken und/oder Infiltrieren und/oder Imprägnieren der Aktivkohle mit der den Liganden-Präkursor (LP) enthaltenden Lösung und/oder Dispersion, gegebenenfalls gefolgt von einer Trocknung der Aktivkohle, insbesondere wie zuvor definiert, wobei nachfolgend die Metallpräkursorverbindung (MP) in die Poren und/oder das Porensystem der Aktivkohle eingebracht und/oder eingelagert wird, insbesondere durch Tränken und/oder Infiltrieren und/oder Imprägnieren der Aktivkohle mit der die Metallpräkursorverbindung (MP) enthaltenden Lösung und/oder Dispersion.

Im Rahmen der zweistufigen Verfahrensführung werden somit die jeweiligen Präkursoren voneinander getrennt gelöst bzw. dispergiert und die jeweiligen Lösungen bzw. Dispersionen getrennt voneinander in die Aktivkohle eingebracht. Sofern im Rahmen des Einbringens der ersten Lösung und/oder Dispersion bzw. Komponente das Porenvolumen der Aktivkohle zumindest im Wesentlichen ausgeschöpft wird, sollte ein (Zwischen-)Trocknungsschritt, insbesondere wie zuvor beschrieben, vor Infiltration mit der zweiten Lösung bzw. Dispersion und/oder Komponente durchgeführt werden. Insbesondere ist es von Vorteil, wenn zunächst die Lösung bzw. Dispersion des Liganden-Präkursors (LP), insbesondere sofern dieser in Form von Trimesinsäure vorliegt, in das Aktivkohlesystem infiltriert wird, da im Allgemeinen der Liganden-Präkursor (LP), insbesondere in Form von Trimesinsäure, eine geringere Löslichkeit im Vergleich zu der Metallpräkursorverbindung (MP), insbesondere in Form von Kupfernitrat, aufweist. Sofern dann in dem nachfolgenden zweiten Schritt die Infiltration mit der Lösung der Metallpräkursorverbindung (MP), insbesondere Kupfernitrat, erfolgt, kann für diese eine deutlich höhere Konzentration verwendet werden, so dass das Substrat bzw. die Aktivkohle in der (Zwischen-)Trocknung nicht vollständig getrocknet werden muss.

Insbesondere sollten die Volumina und/oder Konzentrationen der eingesetzten Lösungen derart ausgewählt werden, dass die Metallpräkursorverbindung (MP) einerseits und der Liganden-Präkursor (LP) andererseits in dem Porensystem in einem teilchenbezogenen Verhältnis [Verhältnis Metall : Ligand] im Bereich von 10 : 1 bis 1 : 5, insbesondere im Bereich von 5 : 1 bis 1 : 2, vorzugsweise im Bereich von 4 : 1 bis 1 : 1, bevorzugt im Bereich von 3 : 1 bis 1,25 : 1, besonders bevorzugt im Bereich von etwa 3 : 2, vorliegen.

In diesem Zusammenhang ist es im Hinblick auf die zweistufige Verfahrensführung von erfindungsgemäß von Vorteil, wenn die die Metallpräkursorverbindung (MP) enthaltende Lösung und/oder Dispersion die Metallpräkursorverbindung (MP) in Mengen im Bereich von 50 g/l bis 2.000 g/l, insbesondere im Bereich von 100 g/l bis 1.750 g/l, vorzugsweise im Bereich von 150 g/l bis 1.500 g/l, bevorzugt im Bereich von 200 g/l bis 1.300 g/l, enthält. Insbesondere sollte die die Metallpräkursorverbindung (MP) enthaltende Lösung und/oder Dispersion die Metallpräkursorverbindung (MP) in Mengen im Bereich von 5 Gew.-% bis 75 Gew.-%, insbesondere im Bereich von 10 Gew.-% bis 65 Gew.-%, vorzugsweise im Bereich von 15 Gew.-% bis 60 Gew.-%, bevorzugt im Bereich von 20 Gew.-% bis 55 Gew.-%, bezogen auf die Lösung und/oder Dispersion, enthalten.

In diesem Zusammenhang ist es erfindungsgemäß gleichermaßen von Vorteil, wenn die den Liganden-Präkursor (LP) enthaltende Lösung und/oder Dispersion den Liganden-Präkursor (LP) in Mengen im Bereich von 10 g/l bis 500 g/l, insbesondere im Bereich von 20 g/l bis 400 g/l, vorzugsweise im Bereich von 40 g/l bis 300 g/l, bevorzugt im Bereich von 60 g/l bis 200 g/l, enthält. Insbesondere sollte die den Liganden-Präkursor (LP) enthaltende Lösung und/oder Dispersion den Liganden-Präkursor (LP) in Mengen im Bereich von 1 Gew.-% bis 50 Gew.-%, insbesondere im Bereich von 2 Gew.-% bis 40 Gew.-%, vorzugsweise im Bereich von 4 Gew.-% bis 30 Gew.-%, bevorzugt im Bereich von 6 Gew.-% bis 20 Gew.-%, bezogen auf die Lösung und/oder Dispersion, enthalten.

Das erfindungsgemäße Verfahren betrifft im Allgemeinen somit insbesondere die nachfolgenden Ausführungsformen:
Insbesondere betrifft die vorliegende Erfindung gleichermaßen ein Verfahren zur Herstellung einer mit mindestens einer metallorganischen Gerüstsubstanz (MOF-Material) ausgestatteten und/oder imprägnierten Aktivkohle, insbesondere in Form von diskreten Aktivkohlepartikeln, vorzugsweise zur Herstellung einer Aktivkohle mit reaktiver und/oder katalytischer Aktivität nach der vorliegenden Erfindung, wobei das Verfahren die folgenden Schritte in der nachstehend spezifizierten Abfolge (a) bis (h) umfasst:
   (a) Herstellung und/oder Bereitstellung mindestens einer Lösung und/oder Dispersion, wobei die Lösung und/oder Dispersion mindestens eine mindestens ein Metall enthaltende Metallpräkursorverbindung (MP) und mindestens einen Liganden-Präkursor (LP) enthält;
   (b) Einbringen und/oder Einlagern der Metallpräkursorverbindung (MP) und des Liganden-Präkursors (LP) in die Poren und/oder in das Porensystem der Aktivkohle durch Inkontaktbringen, insbesondere Tränken und/oder Infiltrieren und/oder Imprägnieren, der Aktivkohle mit der Lösung und/oder Dispersion der Metallpräkursorverbindung (MP) und des Liganden-Präkursors (LP);
   (c) Trocknung der Aktivkohle, insbesondere zur zumindest im Wesentlichen vollständigen Entfernung von Löse- und/oder Dispergiermittel aus den Poren und/oder dem Porensystem der Aktivkohle;
   (d) gegebenenfalls erneute Durchführung von Verfahrensschritt (b) und gegebenenfalls (c);
   (e) thermische Nachbehandlung, vorzugsweise zur Umwandlung und/oder Umsetzung der Metallpräkursorverbindung (MP), insbesondere des Metalls der Metallpräkursorverbindung (MP), mit dem Liganden-Präkursor (LP) zu der metallorganischen Gerüstsubstanz (MOF-Material), bevorzugt unter Ausbildung von insbesondere koordinativen Bindungen zwischen der Metallpräkursorverbindung (MP), insbesondere des Metalls der Metallpräkursorverbindung (MP), und dem Liganden-Präkursor (LP), insbesondere wobei die metallorganische Gerüstsubstanz (MOF-Material) *in situ* in den Poren und/oder in dem Porensystem der Aktivkohle ausgehend von der mindestens ein Metall enthaltenden Metallpräkursorverbindung (MP) und dem Liganden-Präkursor (LP) hergestellt wird;
   (f) gegebenenfalls Waschen und/oder Aufreinigen der Aktivkohle, insbesondere zur Entfernung von nichtumgesetzter Metallpräkursorverbindung (MP) und/oder insbesondere zur Entfernung von nichtumgesetztem Liganden-Präkursor (LP);
   (g) gegebenenfalls insbesondere mechanische Oberflächen reinigung der Aktivkohle, gegebenenfalls gefolgt von einer weiteren Trocknung;
   (h) gegebenenfalls Aktivierung der metallorganischen Gerüstsubstanz (MOF-Material), insbesondere wobei die mit der metallorganischen Gerüstsubstanz (MOF-Material) ausgerüstetete Aktivkohle einer Wärme- und/oder Aktivierungsbehandlung unterzogen wird.

Gleichermaßen betrifft die vorliegende Erfindung ein Verfahren zur Herstellung einer mit mindestens einer metallorganischen Gerüstsubstanz (MOF-Material) ausgestatteten und/oder imprägnierten Aktivkohle, insbesondere in Form von diskreten Aktivkohlepartikeln, vorzugsweise zur Herstellung einer Aktivkohle mit reaktiver und/oder katalytischer Aktivität gemäß der vorliegenden Erfindung, wobei das Verfahren die folgenden Schritte in der nachstehend spezifizierten Abfolge (a) bis (k) umfasst:
(a) Herstellung und/oder Bereitstellung mindestens einer ersten Lösung und/oder Dispersion, wobei die erste Lösung und/oder Dispersion mindestens eine mindestens ein Metall enthaltende Metallpräkursorverbindung (MP) enthält und Herstellung und/oder Bereitstellung mindestens einer zweiten Lösung und/oder Dispersion, wobei die zweite Lösung und/oder Dispersion mindestens einen Liganden-Präkursor (LP) enthält;
(b) Einbringen und/oder Einlagern der Metallpräkursorverbindung (MP) in die Poren und/oder in das Porensystem der Aktivkohle durch Inkontaktbringen, insbesondere Tränken und/oder Infiltrieren und/oder Imprägnieren, der Aktivkohle mit der ersten Lösung und/oder Dispersion;
(c) gegebenenfalls Trocknung der Aktivkohle, insbesondere zur zumindest im Wesentlichen vollständigen Entfernung von Löse- und/oder Dispergiermittel aus den Poren und/oder dem Porensystem der Aktivkohle;
(d) gegebenenfalls erneute Durchführung von Verfahrensschritt (b) und gegebenenfalls (c);
(e) Einbringen und/oder Einlagern des Liganden-Präkursor (LP) in die Poren und/oder in das Porensystem der Aktivkohle durch Inkontaktbringen, insbesondere Tränken und/oder Infiltrieren und/oder Imprägnieren, der Aktivkohle mit der zweiten Lösung und/oder Dispersion;
(f) gegebenenfalls Trocknung der Aktivkohle, insbesondere zur zumindest im Wesentlichen vollständigen Entfernung von Löse- und/oder Dispergiermittel aus den Poren und/oder dem Porensystem der Aktivkohle;
(g) gegebenenfalls erneute Durchführung von Verfahrensschritt (e) und gegebenenfalls (f);
(h) thermische Nachbehandlung, vorzugsweise zur Umwandlung und/oder Umsetzung der Metallpräkursorverbindung (MP), insbesondere des Metalls der Metallpräkursorverbindung (MP), mit dem Liganden-Präkursor (LP) zu der metallorganischen Gerüstsubstanz (MOF-Material), bevorzugt unter Ausbildung von insbesondere koordinativen Bindungen zwischen der Metallpräkursorverbindung (MP), insbesondere des Metalls der Metallpräkursorverbindung (MP), und dem Liganden-Präkursor (LP), insbesondere wobei die metallorganische Gerüstsubstanz (MOF-Material) *in situ* in den Poren und/oder in dem Porensystem der Aktivkohle ausgehend von der mindestens ein Metall enthaltenden Metallpräkursorverbindung (MP) und dem Liganden-Präkursor (LP) hergestellt wird;
(i) gegebenenfalls Waschen und/oder Aufreinigen der Aktivkohle, insbesondere zur Entfernung von nichtumgesetzter Metallpräkursorverbindung (MP) und/oder insbesondere zur Entfernung von nichtumgesetztem Liganden-Präkursor (LP);
(j) gegebenenfalls insbesondere mechanische Oberflächenreinigung der Aktivkohle, gegebenenfalls gefolgt von einer weiteren Trocknung;
(k) gegebenenfalls Aktivierung der metallorganischen Gerüstsubstanz (MOF-Material), insbesondere wobei die mit der metallorganischen Gerüstsubstanz (MOF-Material) ausgerüstetete Aktivkohle einer Wärme- und/oder Aktivierungsbehandlung unterzogen wird.

Darüber hinaus betrifft die vorliegende Erfindung auch ein Verfahren zur Herstellung einer mit mindestens einer metallorganischen Gerüstsubstanz (MOF-Material) ausgestatteten und/oder imprägnierten Aktivkohle, insbesondere in Form von diskreten Aktivkohlepartikeln, vorzugsweise zur Herstellung einer Aktivkohle mit reaktiver und/oder katalytischer Aktivität gemäß der vorliegenden Erfindung, wobei das Verfahren die folgenden Schritte in der nachstehend spezifizierten Abfolge (a) bis (k) umfasst:
(a) Herstellung und/oder Bereitstellung mindestens einer ersten Lösung und/oder Dispersion, wobei die erste Lösung und/oder Dispersion mindestens eine mindestens ein Metall enthaltende Metallpräkursorverbindung (MP) enthält und Herstellung und/oder Bereitstellung mindestens einer zweiten Lösung und/oder Dispersion, wobei die zweite Lösung und/oder Dispersion mindestens einen Liganden-Präkursor (LP) enthält;
(b) Einbringen und/oder Einlagern des Liganden-Präkursors (LP) in die Poren und/oder in das Porensystem der Aktivkohle durch Inkontaktbringen, insbesondere Tränken und/oder Infiltrieren und/oder Imprägnieren, der Aktivkohle mit der zweiten Lösung und/oder Dispersion;
(c) gegebenenfalls Trocknung der Aktivkohle, insbesondere zur zumindest im Wesentlichen vollständigen Entfernung von Löse- und/oder Dispergiermittel aus den Poren und/oder dem Porensystem der Aktivkohle;
(d) gegebenenfalls erneute Durchführung von Verfahrensschritt (b) und gegebenenfalls (c);
(e) Einbringen und/oder Einlagern der Metallpräkursorverbindung (MP) in die Poren und/oder in das Porensystem der Aktivkohle durch Inkontaktbringen, insbesondere Tränken und/oder Infiltrieren und/oder Imprägnieren, der Aktivkohle mit der ersten Lösung und/oder Dispersion;
(f) gegebenenfalls Trocknung der Aktivkohle, insbesondere zur zumindest im Wesentlichen vollständigen Entfernung von Löse- und/oder Dispergiermittel aus den Poren und/oder dem Porensystem der Aktivkohle;
(g) gegebenenfalls erneute Durchführung von Verfahrensschritt (e) und gegebenenfalls (f);
(h) thermische Nachbehandlung, vorzugsweise zur Umwandlung und/oder Umsetzung der Metallpräkursorverbindung (MP), insbesondere des Metalls der Metallpräkursorverbindung (MP), mit dem Liganden-Präkursor (LP) zu der metallorganischen Gerüstsubstanz (MOF-Material), bevorzugt unter Ausbildung von insbesondere koordinativen Bindungen zwischen der Metallpräkursorverbindung (MP), insbesondere des Metalls der Metallpräkursorverbindung (MP), und dem Liganden-Präkursor (LP), insbesondere wobei die metallorganische Gerüstsubstanz (MOF-Material) *in situ* in den Poren und/oder in dem Porensystem der Aktivkohle ausgehend von der mindestens ein Metall enthaltenden Metallpräkursorverbindung (MP) und dem Liganden-Präkursor (LP) hergestellt wird;
(i) gegebenenfalls Waschen und/oder Aufreinigen der Aktivkohle, insbesondere zur Entfernung von nichtumgesetzter Metallpräkursorverbindung (MP) und/oder insbesondere zur Entfernung von nichtumgesetztem Liganden-Präkursor (LP);
(j) gegebenenfalls insbesondere mechanische Oberflächenreinigung der Aktivkohle, gegebenenfalls gefolgt von einer weiteren Trocknung;
(k) gegebenenfalls Aktivierung der metallorganischen Gerüstsubstanz (MOF-Material), insbesondere wobei die mit der metallorganischen Gerüstsubstanz (MOF-Material) ausgerüstete Aktivkohle einer Wärme- bzw. Aktivierungsbehandlung unterzogen wird.

Weiterer Gegenstand der vorliegenden Erfindung - gemäß einem **zweiten** Aspekt der vorliegenden Erfindung - ist zudem eine Aktivkohle mit reaktiver und/oder katalytischer Ausrüstung, insbesondere in Form von diskreten Aktivkohlepartikeln, vorzugsweise Aktivkohle mit reaktiver und/oder katalytischer Aktivität, wobei die Aktivkohle mit mindestens einer metallorganischen Gerüstsubstanz (MOF-Material) ausgestattet und/oder imprägniert ist, wobei die Aktivkohle gemäß dem zuvor beschriebenen erfindungsgemäßen Verfahren erhalten werden kann,
wobei die Aktivkohle durch Herstellung der metallorganischen Gerüstsubstanz (MOF-Material) *in situ* in den Poren und/oder in dem Porensystem der Aktivkohle ausgehend von mindestens einer mindestens ein Metall enthaltenden Metallpräkursorverbindung (MP) und mindestens einem Liganden-Präkursor (LP) erhältlich ist und
wobei die metallorganische Gerüstsubstanz (MOF-Material) in kristalliner Form vorliegt, wobei die Partikel der metallorganischen Gerüstsubstanz (MOF-Material) eine mittlere Partikelgröße im Bereich von 0,1 nm bis 500 nm aufweisen.

Gleichermaßen betrifft die vorliegende Erfindung eine Aktivkohle mit reaktiver und/oder katalytischer Ausrüstung, insbesondere in Form von diskreten Aktivkohlepartikeln, vorzugsweise Aktivkohle mit reaktiver und/oder katalytischer Aktivität, wobei die Aktivkohle mit mindestens einer metallorganischen Gerüstsubstanz (MOF-Material) ausgestattet und/oder imprägniert ist, wobei die Aktivkohle durch Herstellung der metallorganischen Gerüstsubstanz (MOF-Material) *in situ* in den Poren und/oder in dem Porensystem der Aktivkohle ausgehend von mindestens einer mindestens ein Metall enthaltenden Metallpräkursorverbindung (MP) und mindestens einem Liganden-Präkursor (LP) erhältlich ist.

Zudem betrifft die vorliegende Erfindung eine Aktivkohle mit reaktiver und/oder katalytischer Ausrüstung, insbesondere in Form von diskreten Aktivkohlepartikeln, vorzugsweise Aktivkohle mit reaktiver und/oder katalytischer Aktivität, wobei die Aktivkohle mit mindestens einer metallorganischen Gerüstsubstanz (MOF-Material) ausgestattet und/oder imprägniert ist, wobei die metallorganische Gerüstsubstanz (MOF-Material) in den Poren und/oder in dem Porensystem der Aktivkohle vorliegt und/oder angeordnet ist und/oder gebildet ist.

Gemäß der vorliegenden Erfindung wird somit eine Aktivkohle bereitgestellt, deren Poren bzw. Porensystem in gezielter Weise mit einer metallorganischen Gerüstsubstanz ausgerüstet sind, was in völlig überraschender Weise zu einem signifikant verbesserten Adsorptionsverhalten führt, insbesondere auch im Hinblick auf die Breitbandigkeit der Adsorption sowohl von organischen als auch anorganischen Verbindungen - und dies bei gleichzeitig hoher Adsorptionskapazität. Im Rahmen der vorliegenden Erfindung ist es somit erstmalig gelungen, ein Adsorptionsmaterial auf Basis einer Aktivkohle bereitzustellen, welches hervorragende adsorptive sowie katalytische bzw. reaktive Eigenschaften in ein und demselben Material aufweist, wobei die erfindungsgemäße Aktivkohle gleichzeitig über hervorragende physikalische Eigenschaften, insbesondere im Hinblick auf die Stabilität des Adsorptionsmaterials, verfügt.

Was die metallorganische Gerüstsubstanz in den Poren bzw. in dem Porensystem der Aktivkohle als solche anbelangt, so weist die metallorganische Gerüstsubstanz (MOF-Material) insbesondere sich wiederholende Struktureinheiten auf Basis jeweils mindestens eines Metalls, insbesondere Metallatoms oder Metallions, oder eines insbesondere mehrkernigen Metallkomplexes, insbesondere Metallclusters, einerseits und mindestens eines organischen Liganden mit mindestens zwei funktionellen Gruppen bzw. wenigstens bidentaten (zweizähnigen) und/oder verbrückenden organischen Liganden andererseits auf.

Im Allgemeinen sind in der erfindungsgemäßen Aktivkohle die vorstehend in Bezug auf die Metallpräkursorverbindung (MP) angeführten Metalle, insbesondere Metallatome und/oder Metallionen, vorzugsweise Metallionen, mit den in Bezug auf den Liganden-Präkursor (LP) angeführten Linkern zu MOF-Materialien verknüpft, wobei die Struktur des Knotens sowie die Netzwerktopologie des MOF-Materials von der Koordinationszahl des jeweiligen Metallions sowie von der Art und der Anzahl der funktionellen Gruppen des Linkers abhängt.

In diesem Zusammenhang kann das MOF-Material durch die Verknüpfung von metallischen Vernetzungspunkten (auch als Knoten bezeichnet), welche insbesondere durch Metallionen oder mehrkernige Metallkomplexe (Metallcluster) gebildet werden, mit multifunktionellen Liganden (auch als Linker bezeichnet) gebildet sein. Je nach eingesetzten Knoten und Linkern können somit ein-, zwei- und dreidimensionale Netzwerke ausgebildet werden.

Wie zuvor angeführt, wird das Metall des resultierenden MOF-Materials insbesondere durch die zuvor definierte Metallpräkursorverbindung (MP) bereitgestellt.

Insbesondere sollte das Metall ausgewählt sein aus Elementen der Gruppen Ia, IIa, IIIa, IVa, Va, VIa, VIIa, VIIIa, Ib, IIb, IIIb, IVb, Vb und VIb des Periodensystems der Elemente. Diesbezüglich kann auch auf obige Ausführungen zu dem erfindungsgemäßen Verfahren verwiesen werden.

Insbesondere sollte das Metall, insbesondere Metallatom oder Metallion, ausgewählt sein aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb und Bi, vorzugsweise ausgewählt sein aus der Gruppe von Zn, Cu, Ni, Pd, Pt, Ru, Fe, Mn, Ag, Al und Co, bevorzugt ausgewählt sein aus der Gruppe von Cu, Fe, Co, Zn, Mn, Al und Ag, besonders bevorzugt ausgewählt sein aus der Gruppe von Cu, Fe, Al und Zn. Insbesondere sollte das Metall Cu umfassen oder hieraus bestehen.

Insbesondere sollte das Metall, insbesondere Metallion, ausgewählt sein aus der Gruppe von Mg²⁺, Ca²⁺, Sr²⁺, Ba²⁺, Sc³⁺, Y³⁺, Ti⁴⁺, Zr⁴⁺, Hf⁴⁺, V⁴⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺,Os³⁺, Os²⁺, Co³⁺, Co²⁺, Rh²⁺ Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb²⁺, As³⁺, As⁺, Sb⁵⁺, Sb³⁺, Sb⁺, Bi⁵⁺, Bi³⁺ und Bi⁺.

Was den Liganden anbelangt, so sollte dieser mindestens eine funktionelle Gruppe aufweisen, welche imstande ist, zu einem Metall, insbesondere Metallatom oder Metallion, mindestens zwei insbesondere koordinative Bindungen auszubilden und/oder zu zwei oder mehreren Metallen, insbesondere Metallatomen oder Metallionen, gleich oder verschieden, jeweils eine insbesondere koordinative Bindung auszubilden.

Insbesondere ist der Ligand auf Basis des Liganden-Präkursors (LP) bereitgestellt.

Was in diesem Zusammenhang die funktionelle Gruppe des Liganden weiterhin anbelangt, so sollte diese mindestens ein Heteroatom, bevorzugt aus der Gruppe von N, O, S, B, P, Si und Al, besonders bevorzugt N, O und S, aufweisen.

Darüber hinaus sollte die funktionelle Gruppe des Liganden ausgewählt sein aus der Gruppe von -CO₂H, -CS₂H, -NO₂, -B(OH)₂, -SO₃H, -Si(OH)₃, -Ge(OH)₃, -Sn(OH)₃, -Si(SH)₃, -Ge(SH)₃, -Sn(SH)₃, -PO₃H⁻, -AsO₃H⁻, -AsO₄H²⁻, -P(SH)₃, -As(SH)₃, -CH(RSH)₂, -C(RSH)₃, -CH(RNH₂)₂, -C(RNH₂)₃, -CH(ROH)₂, -C(ROH)₃, -CH(RCN)₂, -C(RCN)₃, deren Salzen und Kombinationen, wobei der Rest R ausgewählt ist aus Alkylengruppen, insbesondere mit 1 bis 5 Kohlenstoffatomen, oder Arylgruppen, insbesondere mit 1 oder 2 aromatischen Kernen.

Schließlich kann die funktionelle Gruppe des Liganden auch ausgewählt sein aus der Gruppe von -CO₂⁻, -SO₃⁻, -PO₃²⁻, -AsO₃²⁻, -AsO₄²⁻ und deren Kombinationen.

Insbesondere kann die funktionelle Gruppe des Liganden an eine organische Verbindung gebunden vorliegen. In diesem Zusammenhang kann die organische Verbindung, insbesondere für den Fall, dass der Ligand mindestens zwei funktionelle Gruppen aufweist, ausgewählt sein aus der Gruppe von gesättigten und ungesättigten aliphatischen Verbindungen, aromatischen Verbindungen und aliphatisch-aromatischen Verbindungen. Insbesondere kann die aliphatische Verbindung oder der aliphatische Teil der aliphatisch-aromatischen Verbindungen linear und/oder verzweigt und/oder zyklisch sein. Insbesondere kann die aliphatische Verbindung oder der aliphatische Teil der aliphatisch-aromatischen Verbindungen 1 bis 20, insbesondere 1 bis 15, bevorzugt 1 bis 10, Kohlenstoffatome aufweisen.

Gemäß einer erfindungsgemäß bevorzugten Ausführungsform kann der Ligand ausgewählt sein aus mindestens zweiwertigen organischen Säuren, insbesondere Dicarbonsäuren, Tricarbonsäuren, Tetracarbonsäuren, deren Salzen und Kombinationen, besonders bevorzugt gegebenenfalls mindestens einfach substituierten aromatischen, insbesondere mono-, di-, tri-, tetra- oder höherkernigen aromatischen Di-, Tri- oder Tetracarbonsäuren. Insbesondere kann jeder der aromatischen Kerne mindestens ein Heteroatom, gleich oder verschieden, insbesondere N, O, S, B, P, Si und/oder Al, bevorzugt N, S und/oder O, enthalten.

Weiterhin ist es erfindungsgemäß bevorzugt, wenn der Ligand ausgewählt ist aus der Gruppe von (i) tetradentaten Carbonsäuren, insbesondere Oxalsäure, Malonsäure, Bernsteinsäure, Glutarsäure, Phthalsäure, Isophthalsäure, Terephthalsäure; (ii) hexadentaten Carbonsäuren, insbesondere Zitronensäure, Trimesinsäure; und (iii) Azolen, insbesondere Triazol, Pyrrodiazol; deren Salzen und Kombinationen; vorzugsweise hexadentaten Carbonsäuren, bevorzugt Trimesinsäure. Erfindungsgemäß bevorzugt ist der Einsatz von Trimesinsäure.

Erfindungsgemäß kann der Ligand zudem ausgewählt sein aus heterocyclischen, insbesondere stickstoffhaltigen, aromatischen Verbindungen. Gleichermaßen kann der Ligand ausgewählt sein aus Imidazol und/oder Bipyridin, insbesondere 2,2'-Bipyridin und/oder 4,4'-Bipyridin.

Die räumliche Struktur der resultierenden MOF-Materialien ist insbesondere abhängig von der Geometrie, der Länge sowie der Anzahl und Art der funktionellen Gruppen der verwendeten Linker und können folglich im Hinblick auf die jeweilige Anwendung des MOF-Materials gezielt gesteuert werden.

Was das MOF-Material in der Aktivkohle weiterhin anbelangt, so können als Knoten auch als zweikernige Kupferkomplexe vorliegen, welche insbesondere die Form eines Schaufelrads (*"paddle-wheel"*) aufweisen können. Ohne sich auf diese Theorie beschränken zu wollen, führt die Koordination der schaufelradförmigen Kupferkomplexe mit di-, tri- oder höherfunktionellen Linkern, wie Terephthalat, Benzocyclobutandicarboxylat, Naphthalindicarboxylat, Pyrendicarboxylat, Trimesinsäure (Benzoltricarboxylat, BTC), Benzoltribenzoat (BTB) oder Adamantantetracarboxylat (ATC), zu kubischen MOF-Materialien, in welchen jeweils eine Carboxylatgruppe des Linkermoleküls an je ein Kupferatom des zweikernigen Kupferkomplexes koordiniert ist, d.h. es liegen in diesem Fall quadratische Cu₂(Linker)₄-Knoten in den MOF-Materialien vor. So kann das MOF-Material Cu₃(BTC)₂*3H₂O durch die Verknüpfung des zweikernigen Kupferkomplexes mit BTC-Linkermolekülen erhalten sein, wohingegen die Verwendung des BTB-Linkers zu dem MOF-Material Cu₃(BTB)₂ (auch als MOF-177 bezeichnet) führt.

Weiterhin können die Knoten des MOF-Materials auch als tetraedrische Zn₄O⁶⁺-Cluster verwendet werden, deren sechs Kanten durch die aufgeführten Linker verbunden sein können. Ohne sich auf diese Theorie beschränken zu wollen, wird durch die verbrückende Koordination einer Carboxylatgruppe des jeweiligen Linkers mit zwei Kanten des Zn₄O₆-Clusters die Orientierung des Linkers festgelegt, so dass ein oktaedrischer Knoten aus Zn₄O(Linker)₆ entsteht. Im Falle der Verwendung von Linkern mit jeweils zwei Carboxylatfunktionen pro Linkermolekül entsteht durch Verknüpfung von jeweils zwei Zn₄O-Clustern mit jeweils einem Linkermolekül ein MOF-Material, welches ein kubisches dreidimensionales Netzwerk mit Poren aufweist, wobei auch in diesem Fall die räumliche Struktur von der Länge der eingesetzten Linker abhängt. Das MOF-Material, welches aus Zn₄O-Clustern sowie Terephthalat-Linkern besteht, wird auch als MOF-5 bezeichnet.

Durch die Verwendung von Linkern mit verschiedenen Längen und unterschiedlicher Art und Anzahl an funktionellen Gruppen kann somit die räumliche Struktur des resultierenden MOF-Materials in der Aktivkohle, insbesondere im Hinblick auf dessen Porengröße, Porenvolumen und Netzwerktopologie gezielt gesteuert werden, so dass das resultierende MOF-Material im Lichte der entsprechenden Anwendung maßgeschneidert werden kann.

Beispielsweise kann das MOF-Material in Form von Cu₃(BTC)₂ in den Poren bzw. in dem Porensystem der Aktivkohle vorliegen, insbesondere ausgehend von einer Kupfer enthaltenden Metallpräkursorverbindung (MP), insbesondere Kupfernitrat (Cu(NO₃)₂), und Trimesinsäure (H₃BTC) als Liganden-Präkursor (LP).

Was die metallorganische Gerüstsubstanz (MOF-Material) in dem Porensystem der Aktivkohle als solche anbelangt, so liegt die metallorganische Gerüstsubstanz (MOF-Material) in kristalliner Form, vorzugsweise in Form von Kristalliten, vor. In diesem Zusammenhang weisen die Teilchen und/oder Partikel, insbesondere die Kristallite, der metallorganischen Gerüstsubstanz (MOF-Material) eine mittlere Teilchen- und/oder Partikelgröße, insbesondere eine mittlere Kristallitgröße, im Bereich von 0,1 nm bis 500 nm, insbesondere im Bereich von 1 nm bis 500 nm, vorzugsweise im Bereich von 2 nm bis 400 nm, bevorzugt im Bereich von 5 nm bis 300 nm, besonders bevorzugt im Bereich von 10 nm bis 200 nm, ganz besonders bevorzugt im Bereich von 15 nm bis 150 nm, auf. Insbesondere kann die Größe der Kristallite durch die Beladungsmenge der Aktivkohle mit der Metallkomponente bzw. mit dem Liganden in Form der jeweiligen Präkursorverbindungen bzw. insbesondere durch die Temperatur der nachfolgenden Behandlungsschritte, wie zuvor definiert, gesteuert bzw. maßgeschneidert werden. Zur entsprechenden Größenbestimmung der Teilchen bzw. Kristallite des MOF-Materials können dem Fachmann in diesem Zusammenhang an sich bekannte Verfahren eingesetzt werden, wie Röntgendiffraktometrie (XRD) und Transmissionselektronenmikroskopie (TEM).

Weiterhin sollte die metallorganische Gerüstsubstanz (MOF-Material) eine Kristallinität, insbesondere einen Kristallinitätsgrad, von mindestens 10 %, insbesondere mindestens 30 %, vorzugsweise mindestens 50 %, bevorzugt mindestens 80 %, besonders bevorzugt mindestens 90 %, ganz besonders bevorzugt mindestens 95 %, bezogen auf die metallorganische Gerüstsubstanz (MOF-Material), aufweisen. Insbesondere sollte die metallorganische Gerüstsubstanz (MOF-Material) eine Kristallinität, insbesondere einen Kristallinitätsgrad, im Bereich von 10 % bis 99,5 %, insbesondere im Bereich von 30 % bis 99 %, vorzugsweise im Bereich von 50 % bis 98 %, bevorzugt im Bereich von 80 % bis 95 %, bezogen auf die metallorganische Gerüstsubstanz (MOF-Material), aufweisen. Auf Basis der hohen Kristallinität des MOF-Materials wird die Effizienz im Hinblick auf die Zersetzung bzw. den Abbau von Schad- bzw. Giftstoffen weiterführend verbessert.

Weiterhin ist es im Rahmen der vorliegenden Erfindung bevorzugt, wenn die Aktivkohle die metallorganische Gerüstsubstanz (MOF-Material) in Mengen von mindestens 0,001 Gew.-%, insbesondere mindestens 0,01 Gew.-%, vorzugsweise mindestens 0,5 Gew.-%, bevorzugt mindestens 1 Gew.-%, besonders bevorzugt mindestens 2 Gew.-%, bezogen auf das Gesamtgewicht der mit der metallorganischen Gerüstsubstanz (MOF-Material) ausgerüsteten Aktivkohle, aufweist. Zudem sollte die Aktivkohle die metallorganische Gerüstsubstanz (MOF-Material) in Mengen von höchstens 20 Gew.-%, insbesondere höchstens 25 Gew.-%, vorzugsweise höchstens 30 Gew.-%, bevorzugt höchstens 35 Gew.-%, besonders bevorzugt höchstens 40 Gew.-%, bezogen auf das Gesamtgewicht der mit der metallorganischen Gerüstsubstanz (MOF-Material) ausgerüsteten Aktivkohle, aufweisen. Insbesondere sollte die Aktivkohle die metallorganische Gerüstsubstanz (MOF-Material) in Mengen im Bereich von 0,001 Gew.-% bis 40 Gew.-%, insbesondere im Bereich von 0,01 Gew.-% bis 35 Gew.-%, vorzugsweise im Bereich von 0,5 Gew.-% bis 30 Gew.-%, bevorzugt im Bereich von 1 Gew.-% bis 25 Gew.-%, besonders bevorzugt im Bereich von 2 Gew.-% bis 20 Gew.-%, bezogen auf das Gesamtgewicht der mit der metallorganischen Gerüstsubstanz (MOF-Material) ausgerüsteten Aktivkohle, aufweisen.

Weiterhin kann es erfindungsgemäß vorgesehen sein, dass die Aktivkohle in Bezug auf die metallorganische Gerüstsubstanz (MOF-Material) einen Porenfüllgrad α von 0,01 bis 0,99, insbesondere von 0,05 bis 0,8, vorzugsweise von 0,1 bis 0,6, bevorzugt von 0,15 bis 0,5, aufweist. Insbesondere sollte die Aktivkohle in Bezug auf die metallorganische Gerüstsubstanz (MOF-Material) einen Porenfüllgrad α von höchstens 0,99, insbesondere höchstens 0,8, vorzugsweise höchstens 0,6, bevorzugt höchstens 0,5, aufweisen. In diesem Zusammenhang sollte die Aktivkohle in Bezug auf die metallorganische Gerüstsubstanz (MOF-Material) einen Porenfüllgrad α von mindestens 0,01, insbesondere mindestens 0,05, vorzugsweise mindestens 0,1, bevorzugt mindestens 0,15, aufweisen. Der Porenfüllgrad α kann gemäß der Formel [α = V_{MOF} / (V_{Pore} · m_{Träger})] bestimmt werden, wobei in der Formel "V_{MOF}" das Volumen der metallorganischen Gerüstsubstanz (MOF-Material) in den Poren und/oder in dem Porensystem der Aktivkohle, "m_{Träger}" die Masse der eingesetzten Aktivkohle und "V_{Pore}" das spezifische Porenvolumen der Aktivkohle bezeichnen.

In diesem Zusammenhang bedeutet beispielsweise ein Porenfüllgrad α von 0,5, dass 50 % des Porenvolumens mit dem MOF-Material befüllt sind. Auf Basis der gezielten Einstellung des Porenfüllgrades α wird gewährleistet, dass ein bestimmter Teil des Porensystems frei vorliegt - d. h. nicht mit dem MOF-Material versehen und/oder bedeckt ist - und somit insbesondere physisorptive Eigenschaften aufweist.

Was die erfindungsgemäße Aktivkohle weiterhin anbelangt, so kann die Aktivkohle selbsttragend sein und/oder in Form einer insbesondere losen Schüttung vorliegen.

Alternativ ist es aber auch möglich, dass die Aktivkohle nach der Erfindung auf einem Trägermaterial aufgebracht ist.

In diesem Zusammenhang kann das Trägermaterial gasdurchlässig, insbesondere luftdurchlässig ausgebildet sein.

Was in diesem Zusammenhang das Trägermaterial als solches anbelangt, so sollte dieses eine Gasdurchlässigkeit, insbesondere Luftdurchlässigkeit, von mindestens 10 l · m⁻² · s⁻¹, insbesondere mindestens 30 l · m⁻² · s⁻¹, vorzugsweise mindestens 50 l · m⁻² · s⁻¹, besonders bevorzugt mindestens 100 l · m⁻² · s⁻¹, ganz besonders bevorzugt mindestens 500 l · m⁻² · s⁻¹, und/oder eine Gasdurchlässigkeit, insbesondere Luftdurchlässigkeit, von bis zu 10.000 l · m⁻² · s⁻¹, insbesondere bis zu 20.000 l · m⁻² · s⁻¹, bei einem Strömungswiderstand von 127 Pa, aufweisen.

Gemäß einer weiteren Ausführungsform der vorliegenden Erfindung kann das Trägermaterial eine dreidimensionale Struktur aufweisen. Insbesondere kann das erfindungsgemäß eingesetzte Trägermaterial gemäß dieser Ausführungsform als vorzugsweise offenporiger Schaumstoff, besonders bevorzugt Polyurethanschaumstoff, ausgebildet sein.

Gemäß einer alternativen Ausführungsform dagegen kann das erfindungsgemäß eingesetzte Trägermaterial eine zweidimensionale bzw. flächige Struktur aufweisen. Insbesondere kann gemäß dieser Ausführungsform das erfindungsgemäße Trägermaterial als vorzugsweise textiles Flächengebilde ausgebildet sein. Beispielsweise kann das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Non-Woven) ausgebildet sein.

Üblicherweise kann die Aktivkohle nach der Erfindung an bzw. auf dem Trägermaterial fixiert sein. Dies kann beispielsweise mittels Verklebung (z. B. mittels eines Klebstoffs) oder infolge von Eigenklebrigkeit oder Eigenadhäsion insbesondere des Trägermaterials realisiert sein.

Weiterer Gegenstand der vorliegenden Erfindung - gemäß einem **dritten** Aspekt der vorliegenden Erfindung - sind die erfindungsgemäßen Verwendungen der Aktivkohle nach der Erfindung mit reaktiver bzw. katalytischer Ausrüstung, insbesondere wie zuvor beschrieben, wobei die Aktivkohle mit mindestens einer metallorganischen Gerüstsubstanz (MOF-Material) ausgestattet und/oder imprägniert ist.

Insbesondere eignet sich die erfindungsgemäße Aktivkohle zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Zudem betrifft die vorliegende Erfindung die Verwendung der Aktivkohle nach der Erfindung zur Herstellung von Schutzmaterialien aller Art, vorzugsweise für den ABC-Einsatz, besonders von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art.

Gleichermaßen betrifft die vorliegende Erfindung die Verwendung der Aktivkohle nach der Erfindung als Sorptionsspeicher für Gase oder Flüssigkeiten.

Darüber hinaus betrifft die vorliegende Erfindung auch die Verwendung der Aktivkohle nach der Erfindung als Katalysator oder Katalysatorträger.

Weiterhin betrifft die vorliegende Erfindung auch die Verwendung der Aktivkohle nach der Erfindung für die chemische Katalyse.

Zudem betrifft die vorliegende Erfindung die Verwendung der Aktivkohle nach der Erfindung als Gassensor oder in Brennstoffzellen.

Wiederum weiterhin betrifft die vorliegende Erfindung die Verwendung der Aktivkohle nach der Erfindung für sorptive, insbesondere adsorptive Anwendungen, insbesondere als vorzugsweise reaktives und/oder katalytisches Adsorbens.

Weiterhin betrifft die vorliegende Erfindung auch die Verwendung der Aktivkohle nach der Erfindung für die Gasreinigung und/oder die Gasaufbereitung.

Gleichermaßen betrifft die vorliegende Erfindung auch die Verwendung der Aktivkohle nach der Erfindung für die Entfernung von Schadstoffen, insbesondere gasförmigen Schadstoffen, oder von umweltschädlichen, gesundheitsschädlichen oder toxischen Substanzen oder Gasen.

Schließlich betrifft die vorliegende Erfindung auch die Verwendung der Aktivkohle nach der Erfindung zur Aufbereitung und/oder Bereitstellung von Reinraumatmosphären, insbesondere für die Elektroindustrie, vorzugsweise für die Halbleiter- oder Chipherstellung.

Wiederum weiterer Gegenstand der vorliegenden Erfindung - gemäß einem **vierten** Aspekt der vorliegenden Erfindung - sind Schutzmaterialien, insbesondere für den zivilen oder militärischen Bereich, vorzugsweise für den ABC-Einsatz, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, hergestellt unter Verwendung einer Aktivkohle mit reaktiver und/oder katalytischer Ausrüstung, wie zuvor beschrieben, wobei die Aktivkohle mit mindestens einer metallorganischen Gerüstsubstanz (MOF-Material) ausgestattet und/oder imprägniert ist, und/oder aufweisend eine Aktivkohle mit reaktiver und/oder katalytischer Ausrüstung, wie zuvor beschrieben, wobei die Aktivkohle mit mindestens einer metallorganischen Gerüstsubstanz (MOF-Material) ausgestattet und/oder imprägniert ist.

Darüber hinaus sind weiterer Gegenstand der vorliegenden Erfindung - gemäß einem **fünften** Aspekt der vorliegenden Erfindung - Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer Aktivkohle mit reaktiver und/oder katalytischer Ausrüstung, wie zuvor beschrieben, wobei die Aktivkohle mit mindestens einer metallorganischen Gerüstsubstanz (MOF-Material) ausgestattet und/oder imprägniert ist, und/oder aufweisend eine Aktivkohle mit reaktiver und/oder katalytischer Ausrüstung, wie zuvor beschrieben, wobei die Aktivkohle mit mindestens einer metallorganischen Gerüstsubstanz (MOF-Material) ausgestattet und/oder imprägniert ist.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### Ausführungsbeispiele:

### 1. Herstellung einer erfindungsgemäßen mit einem MOF-Material ausgerüsteten Aktivkohle unter Verwendung einer gemeinsamen Lösung und/oder Dispersion der Präkursorkomponenten:

### a) Raumtemperatur-Infiltration:

Für die Infiltration mit einer gemeinsamen Lösung bzw. Dispersion der jeweiligen Präkursoren werden 3 g einer Aktivkohle bzw. eines Substrats mit einem Porenvolumen von etwa 2,42 cm³g⁻¹ in einem Rundkolben vorgelegt, welcher in einem Eisbad gekühlt wird. Die Durchmischung des Substrats erfolgt mittels eines magnetischen Rührfisches. Für die Präkursorlösung (gemeinsame Lösung von Metallpräkursorverbindung (MP) sowie des Liganden-Präkursors (LP)) werden 0,250 g Trimesinsäure in 6 ml eines Ethanol/Wasser-Gemischs (80 : 20) und 0,9 g Kupfernitrat-Trihydrat in 2,1 ml eines Ethanol/Wasser-Gemischs (80 : 20) gelöst. Die Lösungen werden bei Raumtemperatur (T = 20 °C) gemischt und die so entstandene Präkursorlösung unmittelbar dem Substrat zugetropft. Anschließend wird die Probe für etwa 10 min im dynamischen Vakuum (< 50 mbar) bei Raumtemperatur vorgetrocknet, dann etwa 20 Stunden bei 70 °C thermisch nachbehandelt bzw. getempert (in einem leicht undicht verschlossenen Schraubgefäß) und schließlich mit Ethanol soxhletiert. Nach Trocknung bzw. weiterer Nachbehandlung in einem offenen Gefäß im Trockenschrank (für 12 Stunden bei 90 °C) wurden 1,05 g des Produkt ausgewogen. Es resultiert eine erfindungsgemäße, mit einem MOF-Material ausgerüstete Aktivkohle A1.

### b) Tieftemperatur-Infiltration:

Für die Infiltration mit einer Präkursorlösung, welche sowohl die Metallpräkursorverbindung (MP) als auch den Liganden-Präkursor (LP) enthält, werden 3 g einer Aktivkohle bzw. eines Substrats mit einem Porenvolumen von etwa 2,42 cm³g⁻¹ als Substrat in einem Rundkolben vorgelegt, welcher in einem Eisbad gekühlt wird. Die Durchmischung des Substrats erfolgt mittels eines magnetischen Rührfisches. Für die Präkursorlösung werden 0,525 g Trimesinsäure in 6 ml Ethanol und 1,81 g Kupfernitrat-Trihydrat in 2,1 ml Ethanol gelöst. Die Lösungen werden auf etwa -40 °C gekühlt, gemischt und die so entstehende Präkursorlösung (gemeinsame Lösung der Metallpräkursorverbindung (MP) und des Liganden-Präkursors (LP)) wird dem Substrat zugetropft. Anschließend wird die Probe für etwa 10 min im dynamischen Vakuum (< 50 mbar) bei Raumtemperatur vorgetrocknet, dann für eine Zeitdauer von 20 Stunden bei 70 °C thermisch nachbehandelt bzw. getempert (in einem leicht undicht verschlossenen Schraubgefäß) und schließlich mit Ethanol aufgereinigt bzw. soxhletiert. Nach Trocknung bzw. weiterer Nachbehandlung in einem offenen Gefäß im Trockenschrank (für 12 Stunden bei 90 °C) werden 1,2 g Produkt ausgewogen. Es resultiert eine erfindungsgemäße Aktivkohle A2. Ein Teil der so erhaltene Aktivkohle A2 wird einer nachfolgenden Wärme- bzw. Aktivierungsbehandlung über 24 Stunden bei 200 °C unter Umgebungsatmosphäre unterzogen (erfindungsgemäße Aktivkohle A2').

### 2. Herstellung einer erfindungsgemäßen, mit einem MOF-Material ausgerüsteten Aktivkohle gemäß einer zweistufigen Infiltration der Einzelkomponenten:

### a) Beispiel 1:

Für die Infiltration werden 3 g einer Aktivkohle bzw. eines Substrats mit einem Porenvolumen von etwa 2,42 cm³g⁻¹ in einem Rundkolben vorgelegt, welcher in einem Eisbad gekühlt wird. Die Durchmischung des Substrats erfolgt mittels eines magnetischen Rührfisches. Zunächst werden 0,525 g Trimesinsäure, gelöst in 6,9 ml Ethanol, zugetropft. Danach erfolgt eine Zwischentrocknung bei 50 °C im Vakuum (< 50 mbar) für etwa 1 Stunde, und nach erneuter Kühlung des Substrats die Infiltration von 1,81 g Kupfernitrat-Trihydrat, gelöst in 4,5 ml Ethanol. Anschließend wird die Probe für etwa 10 min im dynamischen Vakuum (< 50 mbar) bei Raumtemperatur vorgetrocknet, dann etwa 20 Stunden bei 70 °C thermisch nachbehandelt bzw. getempert und schließlich mit Ethanol soxhletiert. Nach Trocknung bzw. weiterer Nachbehandlung in einem offenen Gefäß im Trockenschrank (für 12 Stunden bei 90 °C) werden etwa 1,4 g Produkt ausgewogen. Es resultiert eine erfindungsgemäße Aktivkohle A3.

### a) Beispiel 2:

Für die Infiltration werden jeweils 10 g der zuvor definierten Aktivkohle bzw. des Substrats in einem Rundkolben vorgelegt, welcher in einem Eisbad gekühlt wird. Die Durchmischung des Substrats erfolgt mittels eines magnetischen Rührfisches. Zur Infiltration der Trimesinsäure wird eine ethanolische Lösung mit einer Konzentration von 88 g/l verwendet (eingesetzte Volumina siehe Tabelle 1). Anschließend erfolgt eine Zwischentrocknung bei 50 °C im Vakuum (< 50 mbar) für etwa 1 Stunde, und nach erneuter Kühlung des Substrats die Infiltration entsprechender Volumina ethanolischer Kupfernitrat-Trihydrat-Lösungen mit einer Konzentration von 402 g/l. Anschließend wird die Probe für etwa 10 min im dynamischen Vakuum (< 50 mbar) bei Raumtemperatur vorgetrocknet, dann 48 Stunden bei 70 °C thermisch nachbehandelt bzw. getempert und schließlich mit Ethanol gewaschen bzw. soxhletiert. Nach Trocknung bzw. weiterer Nachbehandlung in einem offenen Gefäß im Vakuumtrockenschrank (für 24 Stunden bei 80 °C) werden die in Tabelle 1 angegebenen Produkte erhalten. Es resultieren erfindungsgemäße Aktivkohlen A4 bis A7.

**Tabelle 1: Verfahrensparameter zu den erfindungsgemäßen Aktivkohlen A4 bis A7**

| Aktivkohle | Porenvolumen (cm³/g) | V(H3BTC-Lsg.) (ml) | V(Cu(NO₃)₂-Lsg.) (ml) | Auswaage (g) |
|---|---|---|---|---|
| A4 | 0,81 | 8 | 6 | 12,63 |
| A5 | 0,93 | 9 | 6,8 | 12,587 |
| A6 | 1,1 | 11 | 8,3 | 13,032 |
| A7 | 1,21 | 12 | 9,1 | 13,64 |

### c) Beispiel 3:

Für die Infiltration werden jeweils 500 g einer Aktivkohle bzw. eines Substrats mit einem Porenvolumen von etwa 0,91 cm³/g in einem Rundkolben vorgelegt, welcher in einem Eisbad gekühlt wird. Die Durchmischung des Substrats erfolgt mittels eines externen, rotierenden mechanischen Propellerrührers. Die Infiltration der Trimesinsäure erfolgt mit 300 ml eines Ethanol/Wasser-Gemisches (80 : 20) mit einer Konzentration von 110 g/l. Unmittelbar im Anschluss erfolgt die Infiltration mit 90 ml wässriger Kupfernitrat-Trihydrat-Lösung mit einer Konzentration von 1.233 g/l. Ein Volumen (Schüttvolumen) von 20 l der auf diese Weise hergestellten infiltrierten Aktivkohle wird auf vier Gefäße aufgeteilt und daraufhin bei 80 °C über Nacht thermisch nachbehandelt bzw. getempert, wobei es zur Freisetzung von NO₂ kommt. Die Proben werden daraufhin 3,5 Wochen bei Raumtemperatur gelagert bzw. weiter nachbehandelt. Zum Waschen werden jeweils 10 l der infiltrierten Proben mehrmals für 1 bis 2 min mit ca. 10 l destilliertem Wasser aufgeschlämmt bzw. gerührt, wobei die Waschlösung anschließend abdekantiert wird. Dieser Vorgang wird so oft wiederholt, bis keine signifikante Blaufärbung bzw. Trübung der Waschlösung mehr erkennbar ist. Anschließend erfolgt eine zweimalige, analog durchgeführte Wäsche mit jeweils etwa 5 I Ethanol. Die Proben werden anschließend im Luftstrom getrocknet und schließlich bei 120 °C im Vakuumtrockenschrank im dynamischen Vakuum (< 50 bis 250 mbar) getrocknet. Es resultiert eine erfindungsgemäße Aktivkohle A8.

### d) Beispiel 4:

Für die Infiltration mit einer Kupferquelle werden 1.250 g Aktivkohle bzw. Substrat mit einem Porenvolumen von etwa 0,8 cm³/g vorgelegt und mit einer Lösung von 270 g basischem Kupfercarbonat und 280 g Ammoniumcarbonat in einer Mischung aus 1.217 ml 32%iger Ammoniaklösung und 662 ml Wasser infiltriert. Anschließend erfolgt eine Wärmebehandlung bzw. Trocknung der Probe an Luft bei 120 °C. 50 g dieser vorimprägnierten Aktivkohle (mit einem erwarteten Kupfergehalt von 5,95 g) werden anschließend an einem Rotationsverdampfer mit 188 ml einer Trimesinsäurelösung mit einer Konzentration von 100 g/l in einem Ethanol/Wasser-Gemisch (80 : 20) infiltriert und anschließend für 48 Stunden bei 80 °C im Trockenschrank einer Wärmebehandlung unterzogen. Es resultiert eine erfindungsgemäße Aktivkohle A9.

### e) Beispiel 5:

Für die Infiltration mit der Kupferquelle werden 1.250 g Aktivkohle bzw. Substrat, wie unter Beispiel 4 angeführt, vorgelegt und mit einer Lösung von 270 g basischem Kupfercarbonat und 280 g Ammoniumcarbonat in einer Mischung aus 1.217 ml 32%iger Ammoniaklösung und 662 ml Wasser infiltriert. Anschließend erfolgt eine Wärmebehandlung bzw. Trocknung an Luft bei 250 °C. 50 g der vorimprägnierten Aktivkohle (mit einem erwarteten Kupfergehalt von 6,7 g) werden anschließend mit 188 ml einer Trimesinsäurelösung mit einer Konzentration von 100 g/l in einem Ethanol/Wasser-Gemisch (80 : 20) infiltriert und anschließend für 48 Stunden bei 80 °C im Trockenschrank getempert. Es resultiert eine erfindungsgemäße Aktivkohle A10.

### 3. Messergebnisse und Charakterisierung der erfindungsgemäßen Aktivkohlen

Im Rahmen einer vergleichenden Analyse werden die in Rede stehenden Aktivkohlen einer Durchbruchmessung in Bezug auf die Substanzen Cyclohexan (C₆H₁₂), Ammoniak (NH₃) und Schwefelwasserstoff (H₂S) unterzogen.

Die Bedingungen für die Durchbruchmessungen sind analog zu den ABEK1-Anforderungen. In diesem Zusammenhang wird ein Adsorptionsbett mit einem Durchmesser von 7,2 mm und einer Höhe von 21 mm verwendet. Die Anströmgeschwindigkeit beträgt 0,1 m/s. Es wird eine Eingangskonzentration von 1.000 ppm Cyclohexan, NH₃ bzw. H₂S mit einer relativen Feuchtigkeit von 70 % rF bei einer Temperatur von 20 °C eingestellt. Die Durchbruchkonzentrationen betragen 10 ppm für Cyclohexan, 25 ppm für NH₃ und 10 ppm für H₂S.

Die nachfolgende Tabelle 2 zeigt die diesbezüglichen Ergebnisse.

**Tabelle 2: Messergebnisse/Charakterisierung der erfindungsgemäßen Aktivkohlen**

| Aktivkohle | C₆H₁₂ (Minuten) | NH₃ (Minuten) | H₂S (Minuten) |
|---|---|---|---|
| A1 | 30 | 20 | 19 |
| A2 | 38 | 29 | 31 |
| A2' | 45 | 34 | 38 |
| A3 | 18 | 39 | 44 |
| A4 | 86 | 29 | 40 |
| A5 | 98 | 18 | 54 |
| A6 | 104 | 19 | 59 |
| A7 | 57 | 53 | 44 |
| A8 | 62 | 36 | 40 |
| A9 | 68 | 20 | 29 |
| A10 | 62 | 21 | 19 |

Die in Tabelle 2 angeführten Werte belegen die hervorragenden Adsorptionseigenschaften der erfindungsgemäßen Aktivkohlen sowohl in Bezug auf organische als auch anorganische Verbindungen, wobei die in Rede stehenden Aktivkohlen nach der Erfindung insgesamt eine hohe Breitbandigkeit in Bezug auf das Adsorptionsverhalten aufweisen, einhergehend mit großen Durchbruchzeiten für die jeweils zu adsorbierenden organischen bzw. anorganischen Substanzen.

### 4. Untersuchungen an Vergleichsaktivkohlen ohne Ausrüstung des Porensystems mit einem MOF-Material:

Als entsprechende Vergleichsadsorbentien werden zum einen eine unbehandelte Aktivkohle als solche mit einem Porenvolumen von etwa 2,42 cm³/g (Aktivkohle B1), eine mit einem Kupferoxid ausgerüstete Aktivkohle, welche gleichermaßen ein Porenvolumen von etwa 2,42 cm³/g aufweist (Aktivkohle B2), sowie eine Mischung einer unbehandelten Aktivkohle gemäß B1 mit einem partikulären MOF-Material (Mischungsverhältnis 50 : 50), wobei das MOF-Material auf Basis einer Kupferkomponente und Trimesinsäure hergestellt ist, untersucht (Vergleichsmaterial B3). In diesem Zusammenhang wird das Durchbruchverhalten für Cyclohexan, Ammoniak und Schwefelwasserstoff gemäß den zuvor genannten Bedingungen ermittelt. Die nachfolgende Tabelle 3 zeigt die diesbezüglich gewonnenen Ergebnisse:

**Tabelle 3: Messergebnisse/Charakterisierung von Vergleichsmaterialien**

| Aktivkohle | C₆H₁₂ (Minuten) | NH₃ (Minuten) | H₂S (Minuten) |
|---|---|---|---|
| B1 | 28 | 5 | 2 |
| B2 | 21 | 12 | 15 |
| B3 | 20 | 17 | 18 |

Tabelle 3 zeigt, dass die entsprechenden Vergleichsmaterialien insgesamt signifikant schlechtere Durchbrucheigenschaften in Bezug auf die angeführten Substanzen aufweisen. Zudem ist in Bezug auf das Material gemäß B3 eine hohe Staubbildung bzw. ein Zerfall der MOF-Partikel unter mechanischer Beanspruchung zu beobachten.

Die vorgenannten Untersuchungen belegen somit insgesamt die hervorragenden Eigenschaften der erfindungsgemäßen Aktivkohlen mit der gezielten Ausrüstung des Porensystems mit einem MOF-Material, wobei das MOF-Material, wie zuvor angeführt, *in situ* in dem Porensystem der Aktivkohle hergestellt wird.

Die Arbeiten zu dieser Erfindung wurden gefördert durch das Siebte Rahmenprogramm der Europäischen Union ([FP7/2007-2013] [FP7/2007-2011]) unter der Bewilligungsvereinbarungsnummer (Grant Agreement Number) 228604.

## Patentansprüche

1. Verfahren zur Herstellung einer mit mindestens einer metallorganischen Gerüstsubstanz (MOF-Material) imprägnierten Aktivkohle in Form von diskreten Aktivkohlepartikeln, vorzugsweise zur Herstellung einer Aktivkohle mit katalytischer Ausrüstung,
wobei die metallorganische Gerüstsubstanz *in situ* in den Poren und/oder in dem Porensystem der Aktivkohle ausgehend von mindestens einer mindestens ein Metall enthaltenden Metallpräkursorverbindung (MP) und mindestens einem Liganden-Präkursor (LP) hergestellt wird,
wobei die Metallpräkursorverbindung (MP) und der Liganden-Präkursor (LP) in die Poren und/oder in das Porensystem der Aktivkohle eingebracht werden,
wobei die Metallpräkursorverbindung (MP) und der Liganden-Präkursor (LP), gemeinsam oder unabhängig voneinander, in Form mindestens einer wässrigen, wässrig-alkoholischen oder alkoholischen Lösung und/oder Dispersion eingesetzt werden, wobei das Einbringen der Metallpräkursorverbindung (MP) und des Liganden-Präkursors (LP), gemeinsam oder unabhängig voneinander, in die Poren und/oder das Porensystem der Aktivkohle durch Tränken der Aktivkohle mit der mindestens einen Lösung und/oder Dispersion der Metallpräkursorverbindung (MP) und des Liganden-Präkursors (LP) erfolgt,
wobei nach dem Einbringen der Metallpräkursorverbindung (MP) und/oder des Liganden-Präkursors (LP) mindestens eine Trocknung der Aktivkohle zur zumindest im Wesentlichen vollständigen Entfernung von Löse- und/oder Dispergiermittel aus den Poren und/oder dem Porensystem der Aktivkohle durchgeführt wird, wobei die Trocknung bei Temperaturen im Bereich von 0 °C bis 50 °C durchgeführt wird,
wobei nach dem Einbringen der Metallpräkursorverbindung (MP) und des Liganden-Präkursors (LP) und nach durchgeführter Trocknung der Aktivkohle mindestens eine thermische Nachbehandlung zur Umsetzung der Metallpräkursorverbindung (MP) mit dem Liganden-Präkursor (LP) zu der metallorganischen Gerüstsubstanz (MOF-Material) durchgeführt wird, wobei die thermische Nachbehandlung bei einer Temperatur im Bereich von 50 °C bis 500 °C durchgeführt wird, und
wobei die metallorganische Gerüstsubstanz (MOF-Material) in kristalliner Form vorliegt, wobei die Partikel der metallorganischen Gerüstsubstanz (MOF-Material) eine mittlere Partikelgröße, im Bereich von 0,1 nm bis 500 nm aufweisen.

2. Verfahren nach Anspruch 1,
wobei die Metallpräkursorverbindung (MP) mindestens ein Metall, insbesondere Metallatom oder Metallion, aufweist, wobei das Metall ausgewählt wird aus Elementen der Gruppen la, IIa, IIIa, IVa, Va, VIa, Vlla, VIIIa, Ib, IIb, IIIb, IVb, Vb und Vlb des Periodensystems der Elemente; und/oder
wobei das Metall, insbesondere Metallatom, der Metallpräkursorverbindung (MP) ausgewählt wird aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb und Bi, vorzugsweise ausgewählt wird aus der Gruppe von Zn, Cu, Ni, Pd, Pt, Ru, Fe, Mn, Ag, Al und Co, bevorzugt ausgewählt wird aus der Gruppe von Cu, Fe, Co, Zn, Mn, Al und Ag, besonders bevorzugt ausgewählt wird aus der Gruppe von Cu, Fe, Al und Zn; und/oder
wobei das Metall der Metallpräkursorverbindung (MP) Kupfer (Cu) umfasst oder hieraus besteht; und/oder
wobei der Liganden-Präkursor (LP) in Form eines wenigstens bidentaten (zweizähnigen) und/oder verbrückenden organischen Liganden-Präkursors (LP) eingesetzt wird; und/oder
wobei der Liganden-Präkursor (LP) mindestens eine funktionelle Gruppe, vorzugsweise mindestens zwei funktionelle Gruppen, aufweist, welche imstande ist bzw. sind, zu einem Metall, insbesondere Metallatom oder Metallion, mindestens zwei insbesondere koordinative Bindungen auszubilden und/oder zu zwei oder mehreren Metallen, insbesondere Metallatomen oder Metallionen, gleich oder verschieden, jeweils eine insbesondere koordinative Bindung auszubilden, insbesondere wobei die funktionelle Gruppe des Liganden-Präkursors (LP) mindestens ein Heteroatom, bevorzugt aus der Gruppe von N, O, S, B, P, Si und Al, besonders bevorzugt N, O und S, aufweist und/oder insbesondere wobei die funktionelle Gruppe des Liganden-Präkursors (LP) an eine organische Verbindung gebunden vorliegt; und/oder
wobei der Liganden-Präkursor (LP) ausgewählt wird aus mindestens zweiwertigen organischen Säuren, insbesondere Dicarbonsäuren, Tricarbonsäuren, Tetracarbonsäuren, deren Salzen und Kombinationen, besonders bevorzugt gegebenenfalls mindestens einfach substituierten aromatischen, insbesondere mono-, di-, tri-, tetra- oder höherkernigen aromatischen, Di-, Tri- oder Tetracarbonsäuren, insbesondere wobei jeder der aromatischen Kerne mindestens ein Heteroatom, gleich oder verschieden, insbesondere N, O, S, B, P, Si und/oder Al, bevorzugt N, S und/oder O, enthält.

3. Verfahren nach Anspruch 1 oder 2,
wobei die Aktivkohle aus kornförmiger, vorzugsweise kugelförmiger Aktivkohle gebildet wird und/oder wobei die Aktivkohle aus kornförmigen, vorzugsweise kugelförmigen Aktivkohlepartikeln gebildet wird; und/oder
wobei die Aktivkohle, insbesondere die Aktivkohlepartikel, Teilchengrößen, insbesondere Teilchendurchmesser, im Bereich von 0,001 mm bis 3 mm, insbesondere im Bereich von 0,005 mm bis 2,5 mm, vorzugsweise im Bereich von 0,01 mm bis 2 mm, besonders bevorzugt im Bereich von 0,02 mm bis 1,5 mm, ganz besonders bevorzugt im Bereich von 0,05 mm bis 1 mm, aufweist bzw. aufweisen und/oder wobei die Aktivkohle, insbesondere die Aktivkohlepartikel, mittlere Teilchengrößen, insbesondere mittlere Teilchendurchmesser (D50), im Bereich von 0,01 mm bis 2 mm, insbesondere im Bereich von 0,05 mm bis 1,5 mm, vorzugsweise im Bereich von 0,1 mm bis 1 mm, aufweist bzw. aufweisen; und/oder
wobei die Aktivkohle eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweist und/oder wobei die Aktivkohle eine spezifische Oberfläche (BET-Oberfläche) im Bereich von 500 m²/g bis 4.000 m²/g, insbesondere im Bereich von 750 m²/g bis 3.000 m²/g, vorzugsweise im Bereich von 900 m²/g bis 2.500 m²/g, besonders bevorzugt im Bereich von 950 m²/g bis 2.000 m²/g, aufweist; und/oder
wobei die Aktivkohle einen Berstdruck von mindestens 5 Newton, insbesondere einen Berstdruck im Bereich von 5 Newton bis 50 Newton, pro Teilchen und/oder Partikel, aufweist; und/oder
wobei die Aktivkohle ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweist und/oder wobei die Aktivkohle ein Adsorptionsvolumen V_{ads} im Bereich von 250 cm³/g bis 3.000 cm³/g, insbesondere im Bereich von 300 cm³/g bis 2.000 cm³/g, vorzugsweise im Bereich von 350 cm³/g bis 2.500 cm³/g, aufweist; und/oder
wobei die Aktivkohle ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweist und/oder wobei die Aktivkohle ein Gesamtporenvolumen nach Gurvich im Bereich von 0,50 cm³/g bis 2,0 cm³/g, insbesondere im Bereich von 0,55 cm³/g bis 1,5 cm³/g, vorzugsweise im Bereich von 0,60 cm³/g bis 1,2 cm³/g, besonders bevorzugt im Bereich von 0,65 cm³/g bis 1,0 cm³/g, aufweist; und/oder wobei die Aktivkohle eine Gesamtporosität im Bereich von 10 % bis 80 %, insbesondere im Bereich von 20 % bis 75 %, vorzugsweise im Bereich von 25 % bis 70 %, bezogen auf das Teilchenvolumen der Aktivkohle, aufweist.

4. Verfahren nach einem der vorangehenden Ansprüche,
wobei die Aktivkohle und/oder die mindestens eine Lösung und/oder Dispersion der Metallpräkursorverbindung (MP) und/oder des Liganden-Präkursors (LP) insbesondere während des Einbringens und/oder Einlagerns eine Temperatur im Bereich von -80 °C bis 50 °C, insbesondere im Bereich von - 60 °C bis 30 °C, vorzugsweise im Bereich von - 50 °C bis 20 °C, aufweist; und/oder
wobei die mindestens eine Lösung und/oder Dispersion ein volumenbezogenes Verhältnis von Alkohol zu Wasser [Verhältnis Alkohol : Wasser] im Bereich von 100 : 0 bis 0 : 100, insbesondere im Bereich von 99 : 1 bis 10 : 90, vorzugsweise im Bereich von 98 : 2 bis 25 : 75, bevorzugt im Bereich von 95 : 5 bis 50 : 50, besonders bevorzugt im Bereich von 90 : 10 bis 70 : 30, aufweist und/oder wobei der Alkohol in Form von Ethanol eingesetzt wird; und/oder
wobei die Lösung und/oder Dispersion die Metallpräkursorverbindung (MP) in Mengen im Bereich von 5 g/l bis 2.000 g/l, insbesondere im Bereich von 10 g/l bis 1.750 g/l, vorzugsweise im Bereich von 25 g/l bis 1.500 g/l, bevorzugt im Bereich von 50 g/l bis 1.300 g/l, enthält und/oder wobei die Lösung und/oder Dispersion die Metallpräkursorverbindung (MP) in Mengen im Bereich von 0,5 Gew.-% bis 75 Gew.-%, insbesondere im Bereich von 1 Gew.-% bis 65 Gew.-%, vorzugsweise im Bereich von 2,5 Gew.-% bis 60 Gew.-%, bevorzugt im Bereich von 5 Gew.-% bis 55 Gew.%, bezogen auf die Lösung und/oder Dispersion, enthält; und/oder wobei die Lösung und/oder Dispersion den Liganden-Präkursor (LP) in Mengen im Bereich von 1 g/l bis 500 g/l, insbesondere im Bereich von 5 g/l bis 400 g/l, vorzugsweise im Bereich von 10 g/l bis 300 g/l, bevorzugt im Bereich von 20 g/l bis 200 g/l, enthält und/oder wobei die Lösung und/oder Dispersion den Liganden-Präkursor (LP) in Mengen im Bereich von 0,1 Gew.-% bis 50 Gew.-%, insbesondere im Bereich von 0,5 Gew.-% bis 40 Gew.-%, vorzugsweise im Bereich von 1 Gew.-% bis 30 Gew.-%, bevorzugt im Bereich von 2 Gew.-% bis 20 Gew.-%, bezogen auf die Lösung und/oder Dispersion, enthält; und/oder
wobei die Trocknung unter Unterdruckbeaufschlagung, insbesondere unter Vakuum, erfolgt, und/oder wobei die Trocknung bei Temperaturen im Bereich von 5 °C bis 40 °C, vorzugsweise im Bereich von 10 °C bis 30 °C, bevorzugt bei etwa Raumtemperatur (T = 20 °C), durchgeführt wird.

5. Verfahren nach einem der vorangehenden Ansprüche,
wobei die thermische Nachbehandlung bei einer Temperatur im Bereich von 50 °C bis 400 °C, bevorzugt im Bereich von 50 °C bis 300 °C, besonders bevorzugt im Bereich von 80 °C bis 200 °C, durchgeführt wird und/oder wobei die thermische Nachbehandlung für eine Zeitdauer im Bereich von 1 h bis 1.200 h, insbesondere im Bereich von 5 h bis 1.000 h, vorzugsweise im Bereich von 10 h bis 500 h, bevorzugt im Bereich von 20 h bis 200 h, durchgeführt wird, insbesondere wobei die thermische Nachbehandlung unter zumindest im Wesentlichen nichtreaktiver, vorzugsweise zumindest im Wesentlichen inerter, Atmosphäre durchgeführt wird; und/oder
wobei in einem weiteren Schritt eine Aktivierung der metallorganischen Gerüstsubstanz (MOF-Material) durchgeführt wird, insbesondere wobei die mit der metallorganischen Gerüstsubstanz (MOF-Material) ausgerüstetete Aktivkohle einer Wärme- bzw. Aktivierungsbehandlung unterzogen wird, insbesondere wobei die Wärme- bzw. Aktivierungsbehandlung bei Temperaturen unterhalb der Zersetzungstemperatur, insbesondere bei Temperaturen im Bereich von 90 °C bis 300 °C, vorzugsweise im Bereich von 100 °C bis 250 °C, bevorzugt im Bereich von 110 °C bis 220 °C, durchgeführt wird, vorzugsweise mit einer Zeitdauer im Bereich von 0,1 bis 48 Stunden, insbesondere im Bereich von 1 bis 30 Stunden, bevorzugt im Bereich von 5 bis 24 Stunden, und/oder insbesondere wobei die Wärme- bzw. Aktivierungsbehandlung unter zumindest im Wesentlichen nichtreaktiver, vorzugsweise zumindest im Wesentlichen inerter, Atmosphäre oder aber in oxidierender Atmosphäre durchgeführt wird.

6. Verfahren nach einem der vorangehenden Ansprüche,
wobei die Metallpräkursorverbindung (MP) und der Liganden-Präkursor (LP) in Form einer gemeinsamen Lösung und/oder Dispersion eingesetzt werden und/oder wobei die Lösung und/oder Dispersion die Metallpräkursorverbindung (MP) und den Liganden-Präkursor (LP) enthält; insbesondere wobei die die Metallpräkursorverbindung (MP) und den Liganden-Präkursor (LP) enthaltende Lösung und/oder Dispersion durch Inkontaktbringen, insbesondere Vermischen und/oder Vermengen, einer ersten, die Metallpräkursorverbindung (MP) enthaltenden Lösung und/oder Dispersion und einer zweiten, den Liganden-Präkursor (LP) enthaltenden Lösung und/oder Dispersion erhalten wird.

7. Verfahren nach Anspruch 6,
wobei die erste die Metallpräkursorverbindung (MP) enthaltende Lösung und/oder Dispersion und die zweite den Liganden-Präkursor (LP) enthaltende Lösung und/oder Dispersion, unabhängig voneinander, eine Temperatur im Bereich von 0 °C bis 50 °C, insbesondere im Bereich von 5 °C bis 40 °C, bevorzugt im Bereich von 10 °C bis 30 °C, besonders bevorzugt etwa Raumtemperatur (T = 20 °C), aufweisen und/oder wobei die erste die Metallpräkursorverbindung (MP) enthaltende Lösung und/oder Dispersion und die zweite den Liganden-Präkursor (LP) enthaltende Lösung und/oder Dispersion, unabhängig voneinander, bei einer Temperatur im Bereich von 0 °C bis 50 °C, insbesondere im Bereich von 5 °C bis 40 °C, bevorzugt im Bereich von 10 °C bis 30 °C, besonders bevorzugt etwa Raumtemperatur (T = 20 °C), hergestellt und/oder zum Erhalt der die Metallpräkursorverbindung (MP) und den Liganden-Präkursor (LP) enthaltenden Lösung und/oder Dispersion vermischt werden; oder
wobei die erste die Metallpräkursorverbindung (MP) enthaltende Lösung und/oder Dispersion und die zweite den Liganden-Präkursor (LP) enthaltende Lösung und/oder Dispersion, unabhängig voneinander, eine Temperatur im Bereich von - 80 °C bis 0 °C, insbesondere im Bereich von - 60 °C bis - 5 °C, bevorzugt im Bereich von - 40 °C bis-10 °C, aufweisen und/oder wobei die erste die Metallpräkursorverbindung (MP) enthaltende Lösung und/oder Dispersion und die zweite den Liganden-Präkursor (LP) enthaltende Lösung und/oder Dispersion, unabhängig voneinander, bei einer Temperatur im Bereich von - 80 °C bis 0 °C, insbesondere im Bereich von - 60 °C bis - 5 °C, bevorzugt im Bereich von - 40 °C bis - 10 °C, hergestellt und/oder zum Erhalt der die Metallpräkursorverbindung (MP) und den Liganden-Präkursor (LP) enthaltenden Lösung und/oder Dispersion vermischt werden.

8. Verfahren nach einem der vorangehenden Ansprüche,
wobei die Metallpräkursorverbindung (MP) und der Liganden-Präkursor (LP) in Form von separaten Lösungen und/oder Dispersionen eingesetzt werden und/oder wobei eine ersten Lösung und/oder Dispersion die Metallpräkursorverbindung (MP) und eine zweite Lösung und/oder Dispersion den Liganden-Präkursor (LP) enthält;
insbesondere wobei das Einbringen der Metallpräkursorverbindung (MP) und des Liganden-Präkursors (LP) in die Poren und/oder das Porensystem der Aktivkohle durch aufeinanderfolgendes Tränken der Aktivkohle mit den separaten Lösungen und/oder Dispersionen der Metallpräkursorverbindung (MP) einerseits und des Liganden-Präkursors (LP) andererseits erfolgt, insbesondere wobei zwischen dem jeweiligen Einbringen und/oder Einlagern eine Trocknung der Aktivkohle durchgeführt wird.

9. Verfahren nach Anspruch 8,
wobei zunächst die Metallpräkursorverbindung (MP) in die Poren und/oder das Porensystem der Aktivkohle eingebracht wird, wobei nachfolgend der Liganden-Präkursor (LP) in die Poren und/oder das Porensystem der Aktivkohle eingebracht wird;
insbesondere wobei nach dem Einbringen der Metallpräkursorverbindung (MP) in die Poren und/oder das Porensystem der Aktivkohle eine Umsetzung der Metallpräkursorverbindung (MP) zu einem Metalloxid durchgeführt wird, insbesondere wobei die Umsetzung unter Inertgasatmosphäre und/oder bei einer Temperatur im Bereich von 100 °C bis 1.000 °C, insbesondere im Bereich von 150 °C bis 950 °C, bevorzugt im Bereich von 200 °C bis 920 °C, durchgeführt wird.

10. Verfahren nach Anspruch 8,
wobei zunächst der Liganden-Präkursor (LP) in die Poren und/oder das Porensystem der Aktivkohle eingebracht wird, wobei nachfolgend die Metallpräkursorverbindung (MP) in die Poren und/oder das Porensystem der Aktivkohle eingebracht wird.

11. Aktivkohle mit katalytischer Ausrüstung, wobei die Aktivkohle mit mindestens einer metallorganischen Gerüstsubstanz (MOF-Material) imprägniert ist, erhältlich gemäß einem Verfahren nach einem der vorangehenden Ansprüche,
wobei die Aktivkohle durch Herstellung der metallorganischen Gerüstsubstanz (MOF-Material) *in situ* in den Poren und/oder in dem Porensystem der Aktivkohle ausgehend von mindestens einer mindestens ein Metall enthaltenden Metallpräkursorverbindung (MP) und mindestens einem Liganden-Präkursor (LP) erhältlich ist und
wobei die metallorganische Gerüstsubstanz (MQF-Material) in kristalliner Form vorliegt, wobei die Partikel der metallorganischen Gerüstsubstanz (MOF-Material) eine mittlere Partikelgröße im Bereich von 0,1 nm bis 500 nm aufweisen.

12. Aktivkohle nach Anspruch 11,
wobei Partikel der metallorganischen Gerüstsubstanz (MOF-Material) eine mittlere Teilchen- und/oder Partikelgröße, insbesondere eine mittlere Kristallitgröße, im Bereich von 1 nm bis 500 nm, vorzugsweise im Bereich von 2 nm bis 400 nm, bevorzugt im Bereich von 5 nm bis 300 nm, besonders bevorzugt im Bereich von 10 nm bis 200 nm, ganz besonders bevorzugt im Bereich von 15 nm bis 150 nm, aufweisen; und/oder
wobei die metallorganische Gerüstsubstanz (MOF-Material) eine Kristallinität von mindestens 10 %, insbesondere mindestens 30 %, vorzugsweise mindestens 50 %, bevorzugt mindestens 80 %, besonders bevorzugt mindestens 90 %, ganz besonders bevorzugt mindestens 95 %, bezogen auf die metallorganische Gerüstsubstanz (MOF-Material), aufweist und/oder wobei die metallorganische Gerüstsubstanz (MOF-Material) eine Kristallinität, im Bereich von 10 % bis 99,5 %, insbesondere im Bereich von 30 % bis 99 %, vorzugsweise im Bereich von 50 % bis 98 %, bevorzugt im Bereich von 80 % bis 95 %, bezogen auf die metallorganische Gerüstsubstanz (MOF-Material), aufweist; und/oder
wobei die Aktivkohle die metallorganische Gerüstsubstanz (MOF-Material) in Mengen von mindestens 0,001 Gew.-%, insbesondere mindestens 0,01 Gew.-%, vorzugsweise mindestens 0,5 Gew.-%, bevorzugt mindestens 1 Gew.-%, besonders bevorzugt mindestens 2 Gew.-%, bezogen auf das Gesamtgewicht der mit der metallorganischen Gerüstsubstanz (MOF-Material) ausgerüsteten Aktivkohle, aufweist und/oder wobei die Aktivkohle die metallorganische Gerüstsubstanz (MOF-Material) in Mengen von höchstens 20 Gew.-%, insbesondere höchstens 25 Gew.-%, vorzugsweise höchstens 30 Gew.-%, bevorzugt höchstens 35 Gew.-%, besonders bevorzugt höchstens 40 Gew.-%, bezogen auf das Gesamtgewicht der mit der metallorganischen Gerüstsubstanz (MOF-Material) ausgerüsteten Aktivkohle, aufweist; und/oder
wobei die Aktivkohle die metallorganische Gerüstsubstanz (MOF-Material) in Mengen im Bereich von 0,001 Gew.-% bis 40 Gew.-%, insbesondere im Bereich von 0,01 Gew.-% bis 35 Gew.-%, vorzugsweise im Bereich von 0,5 Gew.-% bis 30 Gew.-%, bevorzugt im Bereich von 1 Gew.-% bis 25 Gew.-%, besonders bevorzugt im Bereich von 2 Gew.-% bis 20 Gew.-%, bezogen auf das Gesamtgewicht der mit der metallorganischen Gerüstsubstanz (MOF-Material) ausgerüsteten Aktivkohle, aufweist; und/oder
wobei die Aktivkohle in Bezug auf die metallorganische Gerüstsubstanz (MOF-Material) einen Porenfüllgrad α von 0,01 bis 0,99, insbesondere von 0,05 bis 0,8, vorzugsweise von 0,1 bis 0,6, bevorzugt von 0,15 bis 0,5, aufweist und/oder wobei die Aktivkohle in Bezug auf die metallorganische Gerüstsubstanz (MOF-Material) einen Porenfüllgrad α von höchstens 0,99, insbesondere höchstens 0,8, vorzugsweise höchstens 0,6, bevorzugt höchstens 0,5, aufweist und/oder wobei die Aktivkohle in Bezug auf die metallorganische Gerüstsubstanz (MOF-Material) einen Porenfüllgrad α von mindestens 0,01, insbesondere mindestens 0,05, vorzugsweise mindestens 0,1, bevorzugt mindestens 0,15, aufweist, insbesondere wobei der Porenfüllgrad α gemäß der Formel [α = V_{MOF} / (V_{Pore} · m_{Trager})] berechnet ist, wobei in der Formel "V_{MOF}" das Volumen der metallorganischen Gerüstsubstanz (MOF-Material) in den Poren und/oder in dem Porensystem der Aktivkohle, "m_{Träger}" die Masse der eingesetzten Aktivkohle und "V_{Pore}" das spezifische Porenvolumen der Aktivkohle bezeichnen.

13. Verwendung einer Aktivkohle mit reaktiver und/oder katalytischer Ausrüstung nach Anspruch 11 oder 12, wobei die Aktivkohle mit mindestens einer metallorganischen Gerüstsubstanz (MOF-Material) imprägniert ist,
zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich; und/oder
zur Herstellung von Schutzmaterialien aller Art, vorzugsweise für den ABC-Einsatz, besonders von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art; und/oder
als Sorptionsspeicher für Gase oder Flüssigkeiten; und/oder
als Katalysator oder Katalysatorträger; und/oder
für die chemische Katalyse; und/oder
als Gassensor oder in Brennstoffzellen; und/oder
für sorptive, insbesondere adsorptive Anwendungen, insbesondere als vorzugsweise reaktives und/oder katalytisches Adsorbens; und/oder
für die Gasreinigung und/oder die Gasaufbereitung; und/oder
für die Entfernung von Schadstoffen, insbesondere gasförmigen Schadstoffen, oder von umweltschädlichen, gesundheitsschädlichen oder toxischen Substanzen oder Gasen; und/oder
zur Aufbereitung und/oder Bereitstellung von Reinraumatmosphären, insbesondere für die Elektroindustrie, vorzugsweise für die Halbleiter- oder Chipherstellung.

14. Schutzmaterialien, insbesondere für den zivilen oder militärischen Bereich, vorzugsweise für den ABC-Einsatz, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, hergestellt unter Verwendung einer Aktivkohle mit katalytischer Ausrüstung nach Anspruch 11 oder 12, wobei die Aktivkohle mit mindestens einer metallorganischen Gerüstsubstanz (MOF-Material) imprägniert ist, und/oder aufweisend eine Aktivkohle mit katalytischer Ausrüstung nach Anspruch 11 oder 12, wobei die Aktivkohle mit mindestens einer metallorganischen Gerüstsubstanz (MOF-Material) ausgestattet und/oder imprägniert ist.

15. Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer Aktivkohle mit katalytischer Ausrüstung nach Anspruch 11 oder 12, wobei die Aktivkohle mit mindestens einer metallorganischen Gerüstsubstanz (MOF-Material) imprägniert ist, und/oder aufweisend eine Aktivkohle mit katalytischer Ausrüstung nach Anspruch 11 oder 12, wobei die Aktivkohle mit mindestens einer metallorganischen Gerüstsubstanz (MOF-Material) imprägniert ist.

## Claims

1. Method for the production of an activated carbon impregnated with at least one metal-organic framework (MOF material) in the form of discrete activated carbon particles, preferably for the production of an activated carbon with catalytic equipment,
wherein the metal-organic framework is prepared in situ in the pores and/or in the porous system of the activated carbon from at least one metal precursor compound (MP) containing at least one metal and at least one ligand precursor (LP),
wherein the metal precursor compound (MP) and the ligand precursor (LP) are introduced into the pores and/or into the porous system of the activated carbon,
wherein the metal precursor compound (MP) and the ligand precursor (LP), together or independently of one another, are used in the form of at least one aqueous, aqueous-alcoholic or alcoholic solution and/or dispersion, wherein the introduction of the metal precursor compound (MP) and the ligand precursor (LP), together or independently of one another, takes place in the pores and/or the porous system of the activated carbon by impregnating the activated carbon with the at least one solution and/or dispersion of the metal precursor compound (MP) and the ligand precursor (LP),
wherein, following the introduction of the metal precursor compound (MP) and/or of the ligand precursor (LP), at least one drying of the activated carbon is carried out for at least substantially complete removal of the solution and/or dispersion from the pores and/or the porous system of the activated carbon, wherein the drying is carried out at temperatures in the range from 0 °C to 50 °C,
wherein following the introduction of the metal precursor compound (MP) and the ligand precursor (LP) and following drying of the activated carbon, at least one thermal after-treatment is carried out for the transformation of the metal precursor compound (MP) with the ligand precursor (LP) to the metal-organic framework (MOF material), wherein the thermal after-treatment is carried out at a temperature in the range from 50 °C to 500 °C, and
wherein the metal-organic framework (MOF material) is in crystalline form, wherein the particles of the metal-organic framework (MOF material) have an average particle size in the range from 0.1 nm to 500 nm.

2. Method according to claim 1,
wherein the metal precursor compound (MP) comprises at least one metal, in particular a metal atom or metal ion, wherein the metal is selected from elements of the groups Ia, IIa, IIIa, IVa, Va, VIa, VIIa, VIIIa, Ib, IIb, IIIb, IVb, Vb and VIb of the periodic table of elements; and/or
wherein the metal, in particular the metal atom, of the metal precursor compound (MP) is selected from the group consisting of Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb and Bi, preferably selected from the group consisting of Zn, Cu, Ni, Pd, Pt, Ru, Fe, Mn, Ag, Al and Co, particularly preferably selected from the group consisting of Cu, Fe, Co, Zn, Mn, Al and Ag, very particularly preferably selected from the group consisting of Cu, Fe, Al and Zn: and/or
wherein the metal of the metal precursor compound (MP) comprises or consists of copper (Cu); and/or
wherein the ligand precursor (LP) is used in the form of an at least bidentate and/or bridging organic ligand precursor (LP); and/or
wherein the ligand precursor (LP) comprises at least one functional group, preferably at least two functional groups, capable of forming at least two, in particular, coordinate bonds, to a metal, in particular a metal atom or a metal ion, and/or two or more, in particular, coordinate bonds, to two or more same or different metals, in particular metal atoms or metal ions, in particular wherein the functional group of the ligand precursor (LP) is at least one heteroatom, preferably selected from the group of N, O, S, B, P, Si and Al, particularly preferably N. O and S, and/or in particular wherein the functional group of the ligand precursor (LP) is bonded to an organic compound;
and/or
wherein the ligand precursor (LP) is selected from at least bivalent organic acids, in particular dicarboxylic acids, tricarboxylic acids, tetracarboxylic acids, their salts and combinations, particularly preferably optionally at least simply substituted aromatic, in particular mono-, di-, tri-, tetra- or higher-nuclei aromatic, di-, trl- or tetracarboxylic acids, in particular wherein each of the aromatic nuclei contains at least one heteroatom, identical or different, in particular N, O, S, B, P, Si and/or Al, preferably N, S and/or O.

3. Method according to claim 1 or 2,
wherein the activated carbon is formed from granular, preferably spherical, activated carbon, and/or wherein the activated carbon is formed from granular, preferably spherical, activated carbon particles; and/or
wherein the activated carbon, in particular the activated carbon particles, comprises particle sizes, in particular particle diameters, in the range from 0.001 mm to 3 mm, in particular in the range from 0.005 mm to 2.5 mm, preferably in the range from 0.01 mm to 2 mm, particularly preferably in the range from 0.02 mm to 1.5 mm, very particularly preferably in the range from 0.05 to 1 mm, and/or wherein the activated carbon, in particular the activated carbon particles, comprise average particle sizes, in particular average particle diameters (D50), in the range from 0.01 mm to 2 mm, in particular in the range from 0.05 mm to 1.5 mm, preferably in the range from 0.1 mm to 1 mm; and/or
wherein the activated carbon has a specific surface area (BET surface area) of at least 500 m²/g, in particular at least 750 m²/g, preferably at least 1,000 m²/g, more preferably at least 1.200 m²/g, and/or wherein the activated carbon has a specific surface area (BET surface area) in the range from 500 m²/g to 4000 m²/g, in particular in the range from 750 m²/g to 3,000 m²/g, preferably in the range from 900 m²/g to 2,500 m²/g, more preferably in the range from 950 m²/g to 2,000 m²/g; and/or
wherein the activated carbon has a bursting pressure of at least 5 Newton, in particular a bursting pressure in the range of 5 Newton to 50 Newton per particle and/or particulate; and/or
wherein the activated carbon has an adsorption volume V_{ads} of at least 250 cm³/g, in particular at least 300 cm³/g, preferably at least 350 cm³/g, more preferably at least 400 cm³/g and/or wherein the activated carbon has an adsorption volume V_{ads} in the range from 250 cm³/g to 3,000 cm³/g, in particular in the range from 300 cm³/g to 2,000 cm³/g, preferably in the range from 350 cm³/g to 2,500 cm³/g; and/or
wherein the activated carbon has a total pore volume according to Gurvich of at least 0.50 cm³/g, in particular at least 0.55 cm³/g, preferably at least 0.60 cm³/g, particularly preferably at least 0.65 cm³/g, very particularly preferably at least 0.70 cm³/g, and/or wherein the activated carbon has a total pore volume according to Gurvich in the range from 0.50 cm³/g to 2.0 cm³/g, in particular in the range from 0.55 cm³/g to 1.5 cm³/g, preferably in the range from 0.60 cm³/g to 1.2 cm³/g, more preferably in the range from 0.65 cm³/g to 1.0 cm³/g, and/or
wherein the activazed carbon has a total porosity in the range from 10% to 80%, in particular in the range from 20% to 75%, preferably in the range from 25% to 70%, based on the particle volume of the activated carbon.

4. Method according to one of the preceding claims,
wherein the activated carbon and/or the at least one solution and/or dispersion of the metal precursor compound (MP) and/or the ligand precursor (LP), in particular during the introduction and/or insertion, has a temperature in the range from -80 °C to 50 °C, in particular in the range from -60 °C to 30 °C, preferably in the range from -50 °C to 20 °C; and/or
wherein the at least one solution and/or dispersion has a volume-related ratio of alcohol to water [ratio alcohol : water] in the range from 100 : 0 to 0 : 100, in particular in the range from 99 : 1 to 10 : 90, preferably in the range from 98 : 2 to 25 : 75, more preferably in the range from 95 : 5 to 50 : 50, particularly preferably in the range from 90 : 10 to 70 : 30, and/or wherein the alcohol used is in the form of ethanol; and/or
wherein the solution and/or dispersion comprises the metal precursor compound (MP) in amounts ranging from 5 g/l to 2,000 g/l, more preferably in the range from 10 g/l to 1,750 g/l, preferably in the range from 25 g/l to 1,500 g/l, more preferably in the rage from 50 g/l to 1,300 g/l, and/or wherein the solution and/or dispersion contains the metal precursor compound (MP) in amounts ranging from 0.5 wt.-% to 75 wt.-%, in particular in the range from 1 wt.-% to 65 wt.-%, preferably in the range from 2.5 wt.-% to 60 wt.-%, more preferably in the range from 5 wt.-% to 55 wt.-%, based on the solution and/or dispersion, and/or
wherein the solution and/or dispersion comprises the ligand precursor (LP) in amounts ranging from 1 g/l to 500 g/l, in particular in the range from 5 g/l to 400 g/l, preferably in the range from 10 g/l to 300 g/l, more preferably in the range from 20 g/l to 200 g/l, and/or wherein the solution and/or dispersion contains the ligand precursor (LP) in amounts ranging from 0.1 wt.-% to 50 wt.-% %, in particular in the range from 0.5 wt.-% to 40 wt.-%, preferably in the range from 1 wt.-% to 30 wt.-%, more preferably in the range from 2 wt.-% to 20 wt.-%, based on the solution and/or dispersion; and/or
wherein the drying is carried out at temperatures in the range from 5 °C to 40 °C, preferably in the range from 10 °C to 30 °C, more preferably about room temperature (T = 20 °C).

5. Method according to one of the preceding claims,
wherein the thermal after-treatment is carried out at a temperature in the range from 50 °C to 400 °C, preferably in the range from 50 °C to 300 °C, particularly preferably in the range from 80 °C to 200 °C, and/or wherein the thermal after-treatment is carried out for a period of time in the range from 1 h to 1200 h, in particular in the range from 5 h to 1000 h, preferably in the range from 10 h to 500 h, more preferably in the range from 20 h to 200 h, in particular wherein the thermal after-treatment is carried out in an at least substantially substantially non-reactive, preferably at least substantially inert, atmosphere; and/or
wherein activation of the organometallic framework substance (MOF material) is carried out in a further step, in particular wherein the activated carbon treated with the metal-organic framework (MOF material) is subjected to a heat or activation treatment, in particular wherein the heat or activation treatment is carried out at temperatures below the decomposition temperature, in particular at temperatures in the range from 90 °C to 300 °C, preferably in the range from 100 °C to 250 °C, preferably in the range from 110 °C to 220 °C, preferably with a duration in the range of 0.1 to 48 hours. In particular in the range from 1 to 30 hours, preferably in the range from 5 to 24 hours, and/or in particular wherein the heat or activation treatment is carried out in an at least substantially non-reactive, preferably at least substantially inert, atmosphere, or in an oxidizing atmosphere.

6. Method according to one of the preceding claims,
wherein the metal precursor compound (MP) and the ligand precursor (LP) are used in the form of a common solution and/or dispersion, and the solution and/or dispersion contains the metal precursor compound (MP) and the ligand precursor (LP); in particular wherein the solution and/or dispersion containing the metal precursor compound (MP) and the ligand precursor (LP) are/is prepared by bringing into contact, in particular through mixing and/or blending, of a first solution and/or dispersion containing the metal precursor compound (MP) and a second solution and/or dispersion containing the ligand precursor (LP).

7. Method according to claim 6,
wherein the first solution and/or dispersion containing the metal precursor compound (MP) and the second solution and/or dispersion containing the ligand precursor (LP), independently of one another, have a temperature in the range from 0 °C to 50 °C, in particular in the region of 5 °C to 40 °C, preferably in the range from 10 °C to 30 °C, particularly preferably about room temperature (T = 20 °C), and/or wherein the first solution and/or dispersion containing the metal precursor compound (MP) and the second solution and/or dispersion containing the ligand precursor (LP) are/is prepared independently from one another at a temperature in the range from 0 °C to 50 °C, in particular in the range from 5 °C to 40 °C, preferably in the range from 10 °C to 30 °C, particularly preferably about room temperature (T = 20 °C), and/or mixed to obtain the solution and/or dispersion containing the metal precursor compound (MP) and the ligand precursor (LP); or
wherein the first solution and/or dispersion containing the metal precursor compound (MP) and the second solution and/or dispersion containing the ligand precursor (LP), independently of one another, have a temperature in the range from -80 °C to 0 °C, in particular in the range from -60 °C to -5 °C, preferably in the range from -40 °C to -10 °C, and/or wherein the first solution and/or dispersion containing the metal precursor compound (MP) and the second solution and/or dispersion containing the ligand precursor (LP), independently of one another, is produced at a temperature in the range from -80 °C to 0 °C, in particular in the range from -60 °C to -5 °C, preferably in the range from -40 °C to -10 °C, and/or mixed to obtain the solution and/or the dispersion containing the metal precursor compound (MP) and the ligand precursor (LP).

8. Method according to one of the preceding claims,
wherein the metal precursor compound (MP) and the ligand precursor (LP) are used in the form of separate solutions and/or dispersions, and/or wherein a first solution and/or dispersion contains the metal precursor compound (MP) while a second solution and/or dispersion contains the ligand precursor (LP);
in particular wherein the insertion of the metal precursor compound (MP) and the ligand precursor (LP) into the pores and/or the pore system of the activated carbon is carried out through successive impregnation of the activated carbon with the separate solutions and/or dispersions of the metal precursor compound (MP) on the one hand, and the ligand precursor (LP) on the other, in particular wherein drying of the activated carbon is carried out between the respective introduction and/or storage.

9. Method according to claim 8,
wherein the metal precursor compound (MP) is first introduced into the pores and/or the porous system of the activated carbon, and wherein the ligand precursor (LP) is subsequently introduced into the pores and/or the porous system of the activated carbon;
in particular wherein after the metal precursor compound (MP) has been introduced into the pores and/or the porous system of the activated carbon, the metal precursor compound (MP) is transformed into a metal oxide, in particular wherein the transformation is carried out in an inert gas atmosphere and/or at a temperature in the range from 100 °C to 1000 °C, in particular in the range from 150 °C to 950 °C, preferably in the range from 200 °C to 920 °C.

10. Method according to claim 8,
wherein the ligand precursor (LP) is introduced into the pores and/or the pore system of the activated carbon, wherein the metal precursor compound (MP) is subsequently introduced into the pores and/or the pore system of the activated carbon.

11. Activated carbon with catalytic equipment,
wherein the activated carbon is impregnated with at least one metal-organic framework (MOF material) obtainable according to a method according to one of the preceding claims,
wherein the activated carbon is obtainable in situ from the at least one metal-containing metal precursor compound (MP) and at least one ligand precursor (LP) in the pores and/or in the porous system of the activated carbon by producing the metal-organic framework (MOF material),
wherein the metal-organic framework (MOF material) is in crystalline form, while the particles of the metal-organic framework (MOF material) have a mean particle size in the range from 0.1 nm to 500 nm.

12. Activated carbon according to claim 11,
wherein particles of the metal-organic framework (MOF material) have a mean particle and/or particulate size, in particular an average crystallite size, in the range from 1 nm to 500 nm, preferably in the range from 2 nm to 400 nm, more preferably in the range from 5 nm to 300 nm, particularly preferably in the range from 10 nm to 200 nm, very particularly preferably in the range from 15 nm to 150 nm; and/or
wherein the metal-organic framework (MOF material) has a crystallinity of at least 10%, in particular at least 30%, preferably at least 50%, more preferably at least 80%, particularly preferably at least 90%, very preferably at least 95%, based on the metal-organic framework (MOF material) and/or wherein the metal-organic framework (MOF material) has a crystallinity in the range from 10% to 99.5%, in particular in the range from 30% to 99%, preferably in the range from 50% to 98%, more preferably in the range from 80% to 95%, based on the metal-organic framework (MOF material); and/or
wherein the activated carbon comprises the metal-organic framework (MOF material) in amounts of at least 0.001 wt.-%, in particular at least 0.01 wt.-%, preferably at least 0.5 wt.-%, more preferably at least 1 wt.-%, particularly preferably at least 2 wt.-%, based on the total weight of activated carbon containing the metal-organic framework (MOF material) and/or wherein the activated carbon comprises metal-organic framework (MOF material) in amounts of at most 20 wt.-%, in particular at most 25 wt.-%, preferably at most 30 wt.-%, more preferably at most 35 wt.-%, particularly preferably at most 40 wt.-%, based on the total weight of the activated carbon comprising the metal-organic framework (MOF material); and/or
wherein the active carbon comprises the metal-organic framework (MOF material) in amounts ranging from 0.001 wt.-% to 40 wt.-%, in particular in the range from 0.01 wt.-% to 35 wt.-%,, preferably in the range from 0.5 wt.-% to 30 wt.-%, more preferably in the range from 1 wt.-% to 25 wt.-%, particularly preferably in the range from 2 wt.-% to 20 wt.-%, based on the total weight of the activated carbon comprising the metal-organic framework (MOF material); and/or
wherein the activated carbon has a porosity degree α from 0.01 to 0.99, in particular from 0.05 to 0.8, preferably from 0.1 to 0.6, more preferably from 0.15 to 0.5, in relation to the metal-organic framework (MOF material), and/or wherein the activated carbon has a porosity degree α of at most 0.99, in particular at most 0.8, preferably at most 0.6, more preferably at most 0.5, in relation to the metal-organic framework (MOF material), and/or wherein the activated carbon has a porosity degree α of at least 0.01, in particular at least 0.05, preferably at least 0.1, more preferably at least 0.15, in relation to the metal-organic framework (MOF material), in particular wherein the porosity degree α is calculated according to the formula [α = V_{MOF} / (V_{Pore} · m_{Träger})] wherein, in the formula, "V_{MOF}" represents the volume of the metal-organic framework (MOF material) in the pores and/or in the pore system of the activated carbon, "m_{Träger}" represents the mass of activated carbon used, and "V_{Pore}" represents the specific pore volume of the activated carbon.

13. Use of activated charcoal with reactive and/or catalytic equipment according to claim 11 or 12, wherein the activated carbon is impregnated with at least one metal-organic framework (MOF material):
for the production of filters and filter materials of all kinds, in particular for the removal of harmful, odorous and toxic substances of all kinds, in particular from air and/or gas streams, such as ABC protective mask filters, odor filters, surface filters, air filters, in particular filters for room air purification, adsorption-capable support structures and filters for the medical field; and/or
for the production of protective materials of all kinds, preferably for ABC use, especially protective clothing, in particular for the civilian or military sector, such as protective suits, protective gloves, protective footwear, protective socks, head protection clothing and the like and of protective covers of all kind; and/or
as sorption storage for gases or liquids; and/or
as catalyst or catalyst support; and/or
for chemical catalysis; and/or
as a gas sensor or in fuel cells; and/or
for sorptive, in particular adsorptive applications, in particular as preferably reactive and/or catalytic adsorbents; and/or
for gas purification and/or gas treatment; and/or
for the removal of pollutants, in particular gaseous pollutants, or of substances or gases harmful to the environment and health, or toxic substances; and/or
for the preparation and/or provision of a clean room atmosphere, especially for electronics industry, preferably for semi constructor or chip manufacture.

14. Protective materials, in particular for the civilian or military sector, preferably for ABC use, in particular protective clothing, such as protective suits, protective gloves, protective footwear, protective socks, head protection clothing and the like, as well as protective covers made using an activated carbon with catalytic equipment according to claim 11 or 12, wherein the activated carbon is impregnated with at least one metal-organic framework (MOF material), and/or comprises an activated carbon with catalytic equipment according to claim 11 or 12, wherein the activated carbon comprises and/or is impregnated with at least one metal-organic framework (MOF material).

15. Filters and filter materials, in particular for the removal of harmful, odorous and toxic substances of all kinds, in particular from air and/or gas streams, such as ABC protection mask filters, odor filters, surface filters, air filters, in particular filters for the cleaning of air spaces, adsorption-capable carrier structures and filters for the medical field, are produced by the use of catalytic activated carbon according to claim 11 or 12, wherein the activated carbon is impregnated with at least one metal-organic framework (MOF material), and/or comprises a catalytic activated carbon according to claim 11 or claim 12, wherein the activated carbon is impregnated with at least one metal-organic framework (MOF material).

## Revendications

1. Procédé de fabrication d'un charbon actif imprégné d'au moins un solide hybride poreux (matériau MOF), sous forme de particules discrètes de charbon actif, de préférence de fabrication d'un charbon actif à imprégnation catalytique,
dans lequel le solide hybride poreux est fabriqué *in situ* dans les pores et/ou dans le système de pores du charbon actif, à partir d'au moins un composé précurseur métallique (MP) contenant au moins un métal, et d'au moins un précurseur de ligand (LP),
dans lequel le composé précurseur métallique (MP) et le précurseur de ligand (LP) sont introduits dans les pores et/ou dans le système de pores du charbon actif,
dans lequel le composé précurseur métallique (MP) et le précurseur de ligand (LP) sont utilisés ensemble ou indépendamment l'un de l'autre sous forme d'au moins une solution et/ou d'au moins une dispersion aqueuse, hydro-alcoolique ou alcoolique, l'introduction du composé précurseur métallique (MP) et du précurseur de ligand (LP), ensemble ou indépendamment l'un de l'autre, dans les pores et/ou dans le système de pores du charbon actif, étant réalisée par imprégnation du charbon actif avec la ou les solutions et/ou dispersions du composé précurseur métallique (MP) et du précurseur de ligand (LP),
dans lequel, après l'introduction du composé précurseur métallique (MP) et/ou du précurseur de ligand (LP), on procède à au moins un séchage du charbon actif pour éliminer au moins pour l'essentiel en totalité les solvants et/ou dispersants des pores et/ou du système de pores, le séchage étant mis en oeuvre à des températures comprises dans la plage de 0°C à 50°C,
dans lequel, après introduction du composé précurseur métallique (MP) et du précurseur de ligand (LP), et après qu'a été mis en oeuvre le séchage du charbon actif, on procède à au moins un post-traitement thermique, pour faire réagir le composé précurseur métallique (MP) avec le précurseur de ligand (LP) pour donner le solide hybride poreux (matériau MOF), le post-traitement thermique étant mis en oeuvre à une température comprise dans la plage de 50°C à 500°C, et
dans lequel le solide hybride poreux (matériau MOF) est présent sous forme cristalline, les particules du solide hybride poreux (matériau MOF) présentant une granulométrie moyenne comprise dans la plage de 0,1 nm à 500 nm.

2. Procédé selon la revendication 1,
dans lequel le composé précurseur métallique (MP) comprend au moins un métal, en particulier un atome métallique ou un ion métallique, le métal étant choisi parmi les éléments des Groupes Ia, IIa, IIIa, IVa, Va, VIa, VIIa, VIIIa, Ib, IIb, IIIb, IVb, Vb et VIb du Système Périodique des Eléments ;
et/ou
dans lequel le métal, en particulier l'atome métallique, du composé précurseur métallique (MP) est choisi dans le groupe consistant en Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb et Bi, de préférence choisi dans le groupe consistant en Zn, Cu, Ni, Pd, Pt, Ru, Fe, Mn, Ag, Al et Co, préférentiellement choisi dans le groupe consistant en Cu, Fe, Co, Zn, Mn, Al et Ag, d'une manière particulièrement préférée choisi dans le groupe consistant en Cu, Fe, Al et Zn ; et/ou
dans lequel le métal du composé précurseur métallique (MP) comprend du cuivre (Cu) ou en est constitué ; et/ou
dans lequel le précurseur de ligand (LP) est utilisé sous forme d'au moins un précurseur de ligand (LP) organique bidenté (à deux dents) et/ou pontant ; et/ou
dans lequel le précurseur de ligand (LP) comprend au moins un groupe fonctionnel, de préférence au moins deux groupes fonctionnels, qui respectivement est et sont à même de former avec un métal, en particulier un atome métallique ou un ion métallique, au moins deux liaisons en particulier de coordination, et/ou de former avec chacun de deux ou plusieurs métaux, en particulier atomes métalliques ou ions métalliques, identiques ou différents, une liaison en particulier de coordination, en particulier dans lequel le groupe fonctionnel du précurseur de ligand (LP) comprend au moins un hétéroatome, choisi dans le groupe consistant en N, O, S, B, P, Si et Al, d'une manière particulièrement préférée N, O et S, et/ou en particulier dans lequel le groupe fonctionnel du précurseur de ligand (LP) est présent lié à un composé organique ; et/ou
dans lequel le précurseur de ligand (LP) est choisi parmi les acides organiques au moins dioïques, en particulier les acides dicarboxyliques, les acides tricarboxyliques, les acides tétracarboxyliques, les sels et combinaisons de ceux-ci, d'une manière particulièrement préférée les acides di-, tri- ou tétracarboxyliques aromatiques, en particulier mono-, di-, tri-, tétracycliques, ou ayant un plus grand nombre de noyaux, aromatiques, éventuellement au moins une fois substitués, en particulier dans lequel chacun des noyaux aromatiques contient au moins un hétéroatome, identique ou différent, en particulier N, O, S, B, P, Si et/ou Al, de préférence N, S et/ou O.

3. Procédé selon la revendication 1 ou 2,
dans lequel le charbon actif est formé à partir de charbon actif granulaire, de préférence sphérique, et/ou dans lequel le charbon actif est formé à partir de particules de charbon actif granulaires, de préférence sphériques,
dans lequel le charbon actif, en particulier les particules de charbon actif, respectivement présente et présentent une granulométrie, en particulier un diamètre de particules, compris dans la plage de 0,001 mm à 3 mm, en particulier dans la plage de 0,005 mm à 2,5 mm, de préférence dans la plage de 0,01 mm à 2 mm, d'une manière particulièrement préférée dans la plage de 0,02 mm à 1,5 mm, d'une manière tout particulièrement préférée dans la plage de 0,05 mm à 1 mm, et/ou dans lequel le charbon actif, en particulier les particules de charbon actif, respectivement présente et présentent une granulométrie moyenne, en particulier un diamètre moyen des particules (D50) compris dans la plage de 0,01 mm à 2 mm, en particulier dans la plage de 0,05 mm à 1,5 mm, de préférence dans la plage de 0,1 mm à 1 mm ; et/ou
dans lequel le charbon actif présente une aire spécifique (aire BET) d'au moins 500 m²/g, en particulier d'au moins 750 m²/g, de préférence d'au moins 1000 m²/g, d'une manière particulièrement préférée d'au moins 1200 m²/g, et/ou dans lequel le charbon actif présente une aire spécifique (aire BET) comprise dans la plage de 500 m²/g à 4000 m²/g, en particulier dans la plage de 750 m²/g à 3000 m²/g, de préférence dans la plage de 900 m²/g à 2500 m²/g, d'une manière particulièrement préférée dans la plage de 950 m²/g à 2000 m²/g ; et/ou
dans lequel le charbon actif présente une pression d'éclatement d'au moins 5 newtons en particulier une pression d'éclatement comprise dans la plage de 5 newtons à 50 newtons, par parcelle et/ou par particule ; et/ou
dans lequel le charbon actif présente une volume d'adsorption V_{ads} d'au moins 250 cm³/g, en particulier d'au moins 300 cm³/g, de préférence d'au moins 350 cm³/g, d'une manière particulièrement préférée d'au moins 400 cm³/g, et/ou dans lequel le charbon actif présente une volume d'adsorption V_{ads} compris dans la plage de 250 cm³/g à 3000 cm³/g, en particulier dans la plage de 300 cm³/g à 2000 cm³/g, de préférence dans la plage de 350 cm³/g à 2500 cm³/g ; et/ou
dans lequel le charbon actif présente un volume total des pores selon Gurvich d'au moins 0,50 cm³/g, en particulier d'au moins 0,55 cm³/g, de préférence d'au moins 0,60 cm³/g, d'une manière particulièrement préférée d'au moins 0,65 cm³/g, d'une manière tout particulièrement préférée d'au moins 0,70 cm³/g, et/ou dans lequel le charbon actif présente une volume total des pores selon Gurvich compris dans la plage de 0,50 cm³/g à 2,0 cm³/g, en particulier dans la plage de 0,55 cm³/g à 1,5 cm³/g, de préférence dans la plage de 0,60 cm³/g à 1,2 cm³/g, d'une manière particulièrement préférée dans la plage de 0,65 cm³/g à 1,0 cm³/g ; et/ou
dans lequel le charbon actif présente une porosité totale comprise dans la plage de 10 % à 80 %, en particulier dans la plage de 20 % à 75 %, de préférence dans la plage de 25 % à 70 %, par rapport au volume des particules du charbon actif.

4. Procédé selon l'une des revendications précédentes,
dans lequel le charbon actif et/ou la ou les solutions et/ou dispersions du composé précurseur métallique (MP) et/ou du précurseur de ligand (LP), présentent, en particulier pendant l'introduction et/ou l'insertion, une température comprise dans la plage de -80°C à 50°C, en particulier dans la plage de -60°C à 30°C, de préférence dans la plage de -50°C à 20°C ; et/ou
dans lequel la ou les solutions et/ou dispersions présentent un rapport en volume de l'alcool à l'eau [rapport alcool:eau] compris dans la plage de 100:0 à 0:100, en particulier dans la plage de 99:1 à 10:90, de préférence dans la plage de 98:2 à 25:75, préférentiellement dans la plage de 95:5 à 50:50, d'une manière particulièrement préférée dans la plage de 90:10 à 70:30, et/ou dans lequel l'alcool est utilisée sous forme d'éthanol ; et/ou
dans lequel la solution et/ou la dispersion contiennent le composé précurseur métallique (MP) en des quantités comprises dans la plage de 5 g/l à 2000 g/l, en particulier dans la plage de 10 g/l à 1750 g/l, de préférence dans la plage de 25 g/l à 1500 g/l, préférentiellement dans la plage de 50 g/l à 1300 g/l, et/ou dans lequel la solution et/ou la dispersion contiennent le composé précurseur métallique (MP), en des quantités comprises dans la plage de 0,5 % en poids à 75 % en poids, en particulier dans la plage de 1 % en poids à 65 % en poids, de préférence dans la plage de 2,5 % en poids à 60 % en poids, préférentiellement dans la plage de 5 % en poids à 55 % en poids, par rapport à la solution et/ou à la dispersion ; et/ou
dans lequel la solution et/ou la dispersion contiennent le précurseur de ligand (LP) en des quantités comprises dans la plage de 1 g/l à 500 g/l, en particulier dans la plage de 5 g/l à 400 g/l, de préférence dans la plage de 10 g/l à 300 g/l, préférentiellement dans la plage de 20 g/l à 200 g/l, et/ou dans lequel la solution et/ou la dispersion contiennent le précurseur de ligand (LP) en des quantités comprises dans la plage de 0,1 % en poids à 50 % en poids, en particulier dans la plage de 0,5 % en poids à 40 % en poids, de préférence dans la plage de 1 % en poids à 30 % en poids, préférentiellement dans la plage de 2 % en poids à 20 % en poids, par rapport à la solution et/ou à la dispersion ; et/ou
dans lequel le séchage est réalisé en dépression, en particulier sous vide, et/ou dans lequel le séchage est mis en oeuvre à des températures comprises dans la plage de 5°C à 40°C, de préférence dans la plage de 10°C à 30°C, préférentiellement approximativement à la température ambiante (T = 20°C).

5. Procédé selon l'une des revendications précédentes,
dans lequel le post-traitement thermique est mis en oeuvre à une température comprise dans la plage de 50°C à 400°C, préférentiellement dans la plage de 50°C à 300°C, d'une manière particulièrement préférée dans la plage de 80°C à 200°C, et/ou dans lequel le post-traitement thermique est mis en oeuvre pendant un laps de temps compris dans la plage de 1 h à 1200 h, en particulier dans la plage de 5 h à 1000 h, de préférence dans la plage de 10 h à 500 h, préférentiellement dans la plage de 20 h à 200 h, en particulier dans lequel le post-traitement thermique est mis en oeuvre sous une atmosphère au moins pour l'essentiel non-réactive, de préférence au moins pour l'essentiel inerte ; et/ou
dans lequel, dans une étape supplémentaire, on met en oeuvre une activation du solide hybride poreux (matériau MOF), en particulier dans lequel le charbon actif imprégné du solide hybride poreux (matériau MOF) est soumis à un traitement thermique ou d'activation, en particulier dans lequel le traitement thermique ou d'activation est mis en oeuvre à des températures inférieures à la température de décomposition, en particulier à des températures comprises dans la plage de 90°C à 300°C, de préférence dans la plage de 100°C à 250°C, de préférence dans la plage de 110°C à 220°C ; de préférence pendant un laps de temps compris dans la plage de 0,1 à 48 heures, en particulier dans la plage de 1 à 30 heures, préférentiellement dans la plage de 5 à 24 heures, et/ou en particulier dans lequel le traitement thermique ou d'activation est mis en oeuvre sous une atmosphère au moins pour l'essentiel non-réactive, de préférence au moins pour l'essentiel inerte, ou cependant dans une atmosphère oxydante.

6. Procédé selon l'une des revendications précédentes,
dans lequel le composé précurseur métallique (MP) et le précurseur de ligand (LP) sont utilisés sous forme d'une solution et/ou une dispersion commune, et/ou dans lequel la solution et/ou la dispersion contiennent le composé précurseur métallique (MP) et le précurseur de ligand (LP) ; en particulier dans lequel la solution et/ou la dispersion contenant le composé précurseur métallique (MP) et le précurseur de ligand (LP) sont obtenues par mise en contact, en particulier par mélange et/ou mélange intime, d'une première solution et/ou dispersion contenant le composé précurseur métallique (MP) et d'une deuxième solution et/ou dispersion contenant le précurseur de ligand (LP).

7. Procédé selon la revendication 6,
dans lequel la première solution et/ou dispersion contenant le composé précurseur métallique (MP) et la deuxième solution et/ou dispersion contenant le précurseur de ligand (LP) présentent indépendamment l'une de l'autre une température comprise dans la plage de 0°C à 50°C, en particulier dans la plage de 5°C à 40°C, préférentiellement dans la plage de 10°C à 30°C, d'une manière particulièrement préférée approximativement égale à la température ambiante (T = 20°C), et/ou dans lequel la première solution et/ou dispersion contenant la composé précurseur métallique (MP) et la deuxième solution et/ou dispersion contenant le précurseur de ligand (LP) sont, indépendamment l'une de l'autre, fabriquées à une température comprise dans la plage de 0°C à 50°C, en particulier dans la plage de 5°C à 40°C, préférentiellement dans la plage de 10°C à 30°C, d'une manière particulièrement préférée approximativement à la température ambiante (T = 20°C), et/ou sont mélangées pour obtenir la solution et/ou la dispersion contenant le composé précurseur métallique (MP) et le précurseur de ligand (LP) ; ou
dans lequel la première solution et/ou dispersion contenant le composé précurseur métallique (MP) et la deuxième solution et/ou dispersion contenant le précurseur de ligand (LP) présentent indépendamment l'une de l'autre une température comprise dans la plage de -80°C à 0°C, en particulier dans la plage de -60°C à -5°C, préférentiellement dans la plage de -40°C à -10°C, et/ou dans lequel la première solution et/ou dispersion contenant le composé précurseur métallique (MP) et/ou la deuxième solution et/ou dispersion contenant le précurseur de ligand (LP) sont, indépendamment l'une de l'autre, fabriquées à une température comprise dans la plage de -80°C à 0°C, en particulier dans la plage de -60°C à -5°C, préférentiellement dans la plage de -40°C à -10°C, et/ou sont mélangées pour obtenir la solution et/ou la dispersion contenant le composé précurseur métallique (MP) et le précurseur de ligand (LP).

8. Procédé selon l'une des revendications précédentes,
dans lequel le composé précurseur métallique (MP) et le précurseur de ligand (LP) sont utilisés sous forme de solutions et/ou de dispersions distinctes, et/ou dans lequel une première solution et/ou dispersion contient le composé précurseur métallique (MP) et une deuxième solution et/ou dispersion contient le précurseur de ligand (LP) ;
en particulier dans lequel l'introduction du composé précurseur métallique (MP) et du précurseur de ligand (LP) dans les pores et/ou le système de pores du charbon actif est réalisée par imprégnation successive du charbon actif avec les solutions et/ou dispersions distinctes, du composé précurseur métallique (MP) d'une part et du précurseur de ligand (LP) d'autre part, en particulier dans lequel on met en oeuvre un séchage du charbon actif entre chaque introduction et/ou incorporation.

9. Procédé selon la revendication 8,
dans lequel on introduit d'abord le composé précurseur métallique (MP) dans les pores et/ou le système de pores du charbon actif, le précurseur de ligand (LP) étant introduit ensuite dans les pores et/ou le système de pores du charbon actif ;
en particulier dans lequel, après introduction du composé précurseur métallique (MP) dans les pores et/ou le système de pores du charbon actif, on met en oeuvre une conversion du composé précurseur métallique (MP) en un oxyde métallique, en particulier dans lequel la conversion est mise en oeuvre sous une atmosphère d'un gaz inerte et/ou à une température comprise dans la plage de 100°C à 1000°C, en particulier dans la plage de 150°C à 950°C, préférentiellement dans la plage de 200°C à 920°C.

10. Procédé selon la revendication 8,
dans lequel on introduit d'abord le précurseur de ligand (LP) dans les pores et/ou dans le système de pores du charbon actif, le composé précurseur métallique (MP) étant introduit ensuite dans les pores et/ou dans le système de pores du charbon actif.

11. Charbon actif avec imprégnation catalytique, le charbon actif étant imprégné d'au moins un solide hybride poreux (matériau MOF), pouvant être obtenu par un procédé selon l'une des revendications précédentes,
le charbon actif pouvant être obtenu par fabrication du solide hybride poreux (matériau MOF) in situ dans les pores et/ou dans le système de pores du charbon actif, à partir d'au moins un composé précurseur métallique (MP) contenant au moins un métal et d'au moins un précurseur de ligand (LP), et
dans lequel le solide hybride poreux (matériau MOF) se présente sous forme cristalline, les particules du solide hybride poreux (matériau MOF) présentant une granulométrie moyenne comprise dans la plage de 0,1 nm à 500 nm.

12. Charbon actif selon la revendication 11,
dans lequel les particules du solide hybride poreux (matériau MOF) présentent une grosseur moyenne des particules et/ou et une granulométrie moyenne, en particulier une grosseur moyenne des cristallites, comprises dans la plage de 1 nm à 500 nm, de préférence de 2 nm à 400 nm, préférentiellement dans la plage de 5 nm à 300 nm, d'une manière particulièrement préférée dans la plage de 10 nm à 200 nm, d'une manière tout particulièrement préférée dans la plage de 15 nm à 150 nm ; et/ou
dans lequel le solide hybride poreux (matériau MOF) présente une cristallinité d'au moins 10 %, en particulier d'au moins 30 %, de préférence d'au moins 50 %, préférentiellement d'au moins 80 %, d'une manière particulièrement préférée d'au moins 90 %, d'une manière tout particulièrement préférée d'au moins 95 %, par rapport au solide hybride poreux (matériau MOF), et/ou dans lequel le solide hybride poreux (matériau MOF) présente une cristallinité comprise dans la plage de 10 % à 99,5 %, en particulier dans la plage de 30 % à 99 %, de préférence dans la plage de 50 % à 98 %, préférentiellement dans la plage de 80 % à 95 %, par rapport au solide hybride poreux (matériau MOF) ; et/ou
le charbon actif comprenant le solide hybride poreux (matériau MOF) en des quantités d'au moins 0,001 % en poids, en particulier d'au moins 0,01 % en poids, de préférence d'au moins 0,5 % en poids, préférentiellement d'au moins 1 % en poids, d'une manière particulièrement préférée d'au moins 2 % en poids, par rapport au poids total du charbon actif imprégné du solide hybride poreux (matériau MOF), et/ou le charbon actif comprenant le solide hybride poreux (matériau MOF) en des quantités d'au plus 20 % en poids, en particulier d'au plus 25 % en poids, de préférence d'au plus 30 % en poids, préférentiellement d'au plus 35 % en poids, d'une manière particulièrement préférée d'au plus 40 % en poids par rapport au poids total du charbon actif imprégné du solide hybride poreux (matériau MOF) ; et/ou
le charbon actif comprenant le solide hybride poreux (matériau MOF) en des quantités comprises dans la plage de 0,001 % en poids à 40 % en poids, en particulier dans la plage de 0,01 % en poids à 35 % en poids, de préférence dans la plage de 0,5 % en poids à 30 % en poids, préférentiellement dans la plage de 1 % en poids à 25 % en poids, d'une manière particulièrement préférée dans la plage de 2 % en poids à 20 % en poids, par rapport au poids total du charbon actif imprégné du solide hybride poreux (matériau MOF) ; et/ou
le charbon actif présentant, par rapport au solide hybride poreux (matériau MOF), un degré de remplissage des pores α de 0,01 à 0,99, en particulier de 0,05 à 0,8, de préférence de 0,1 à 0,6, préférentiellement de 0,15 à 0,5, et/ou le charbon actif présentant, par rapport au solide hybride poreux (matériau MOF) un degré de remplissage des pores α d'au plus 0,99, en particulier d'au plus 0,8, de préférence d'au plus 0,6, préférentiellement d'au plus 0,5, et/ou le charbon actif présentant, par rapport au solide hybride poreux (matériau MOF), un degré de remplissage des pores α d'au moins 0,01, en particulier d'au moins 0,05, de préférence d'au moins 0,1, préférentiellement d'au moins 0,15, en particulier dans lequel le degré de remplissage des pores α est calculé par la formule [α = V_{MOF}/(V_{Pore} · m_{Träger})], formule dans laquelle "V_{MOF}" désigne le volume du solide hybride poreux (matériau MOF) dans les pores et/ou dans le système de pores du charbon actif, "m_{Träger}" désigne la masse du charbon actif utilisé, et "V_{Pore}" désigne le volume spécifique des pores du charbon actif.

13. Utilisation d'un charbon actif avec imprégnation réactive et/ou catalytique selon la revendication 11 ou 12, pour laquelle le charbon actif est imprégné d'au moins un solide hybride poreux (matériau MOF), pour la fabrication de filtres et de matières filtrantes de tout type, en particulier pour éliminer des polluants, des substances à mauvaise odeur et des poisons de tout type, en particulier à partir de courants d'air et/ou gazeux, tels que les filtres pour masques de protection ABC, les filtres anti-odeur, les filtres de surface, les filtres à air, en particulier les filtres pour la purification de l'air ambiant, les structures supports adsorbantes et les filtres pour le domaine médical ; et/ou
pour la fabrication de matériaux de protection de tout type, en particulier pour une utilisation ABC, en particulier de vêtements de protection, en particulier pour le domaine civil ou militaire, tel que des combinaisons de protection, des gants de protection, des chaussures de protection, des chaussettes de protection, des vêtements de protection de la tête et analogues, et de recouvrements de protection de tout type ; et/ou
en tant qu'accumulateur à sorption pour des gaz ou des liquides ; et/ou
en tant que catalyseur ou support de catalyseur ; et/ou pour la catalyse chimique ; et/ou
en tant que capteur de gaz ou dans des piles à combustible
; et/ou
pour des applications par sorption, en particulier par adsorption, en particulier en tant qu'adsorbant de préférence réactif et/ou catalytique ; et/ou
pour la purification des gaz et/ou la préparation de gaz ; et/ou
pour éliminer des polluants, en particulier des polluants gazeux ou des substances ou gaz polluants de l'environnement, dangereux pour la santé ou toxiques ; et/ou
pour la préparation et/ou la réalisation d'atmosphères de salle blanche, en particulier pour l'industrie électrique, de préférence pour la fabrication de semi-conducteurs et de puces.

14. Matériaux de protection, en particulier pour le domaine civil ou militaire, de préférence pour une utilisation ABC, en particulier pour des vêtements de protection tels que des combinaisons de protection, des gants de protection, des chaussures de protection, des chaussettes de protection, des vêtements pour la protection de la tête et analogues, en particulier des recouvrements de protection, fabriqués par utilisation d'un charbon actif avec imprégnation catalytique selon la revendication 11 ou 12, le charbon actif étant imprégné d'au moins un solide hybride poreux (matériau MOF), et/ou comprenant un charbon actif avec une imprégnation catalytique selon la revendication 11 ou 12, le charbon actif étant muni et/ou imprégné d'au moins un solide hybride poreux (matériau MOF).

15. Filtres et matériaux filtrants, en particulier pour éliminer des polluants, des substances à mauvaise odeur et des poisons de tous types, en particulier à partir de courants d'air et/ou de gaz, tels que des filtres pour masque de protection ABC, des filtres anti-odeur, des filtres de surface, des filtres à air, en particulier des filtres pour la purification de l'air ambiant, des structures supports adsorbantes, et des filtres pour le domaine médical, fabriqués par utilisation d'un charbon actif avec imprégnation catalytique selon la revendication 11 ou 12, le charbon actif étant imprégné d'au moins un solide hybride poreux (matériau MOF), et/ou comprenant un charbon actif avec une imprégnation catalytique selon la revendication 11 ou 12, le charbon actif étant imprégné d'au moins un solide hybride poreux (matériau MOF).
